(19) Europäisches Patentamt
European Patent Office
Office européen des brevets

(11) **EP 2 980 712 A1**

(12) **EUROPEAN PATENT APPLICATION**

(43) Date of publication:
**03.02.2016 Bulletin 2016/05**

(51) Int Cl.:
***G06F 17/30*** *(2006.01)*

(21) Application number: **15179149.8**

(22) Date of filing: **30.07.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority: **31.07.2014 KR 20140098628**

(71) Applicant: **Samsung Electronics Co., Ltd
Gyeonggi-do 443-742 (KR)**

(72) Inventors:
• **FEYEREISL, Jan
Gyeonggi-do (KR)**
• **PARK, Sung-bum
Gyeonggi-do (KR)**
• **LIM, Tae-gyu
Seoul (KR)**
• **SHIM, Woo-sung
Gyeonggi-do (KR)**

(74) Representative: **Birchenough, Lewis
HGF Limited
Saviour House
9 St Saviourgate
York YO1 8NQ (GB)**

(54) **METHOD AND DEVICE FOR CLASSIFYING CONTENT**

(57) A device configured to classify images, includes a user interface configured to receive an input of selecting an image from the images, and a controller configured to determine attribute information of the selected image or image analysis information of the selected image, and classify the images based on the attribute information or the image analysis information.

FIG. 1A

**Description**

BACKGROUND

1. Field

The present disclosure relates to a method and a device for classifying content.

2. Description of the Related Art

Electronic devices are becoming increasingly varied, and types of electronic devices that a person carries are also becoming more varied. Additionally, a user consumes various items of content, applications, and services by using a plurality of electronic devices, and the amount of content available to a user is also increasing.

As such, a user may use many types of content. However, as a number of times when a user uses content that is meaningless to the user increases, user fatigue may also be increased. Accordingly, there is a need for a system that allows a user to efficiently access content of interest to the user.

The above information is presented as background information only to assist with an understanding of the present disclosure. No determination has been made, and no assertion is made, as to whether any of the above might be applicable as prior art with regard to the present disclosure.

SUMMARY

It is an aim of certain exemplary embodiments of the present disclosure to address, solve, mitigate or obviate, at least partly, at least one of the problem and/or disadvantages associated with the related art, for example at least one of the problems and/or disadvantages mentioned herein. Certain exemplary embodiments aim to provide at least one advantage over the related art, for example at least one of the advantages mentioned herein. However, certain exemplary embodiments are not required to overcome the problems and/or disadvantages described herein, and may not overcome any of the problems and/or disadvantages described herein.

According to an exemplary aspect, there is provided a device configured to classify images, the device including a user interface configured to receive an input of selecting an image from the images, and a controller configured to determine attribute information of the selected image or image analysis information of the selected image, and classify the images based on the attribute information or the image analysis information.

In certain exemplary embodiments, the device may further include an external storage configured to store the images, the external storage being connected via an account of a user and implemented outside the device.

In certain exemplary embodiments, the device may further include an interface for communicating or connecting with an external entity (e.g. another device, apparatus, terminal, server or storage). The external entity may be external to the device, or implemented outside the device. The external entity may be configured to store the images. The external entity may be connected via an account of a user.

In certain exemplary embodiments, the controller may be further configured to generate keywords based on the attribute information or the image analysis information, and classify the images based on the keywords.

In certain exemplary embodiments, the controller may be father configured to classify the images by comparing the keywords to attribute information of each of the images.

In certain exemplary embodiments, the controller may be further configured to generate folders respectively corresponding to the keywords, and match each of the images with a corresponding folder of the folders.

In certain exemplary embodiments, the controller may be further configured to store each of the images in the corresponding folder, or store link information for each of the images in the corresponding folder.

In certain exemplary embodiments, the device may further include a display configured to display the folders, the user interface may be further configured to receive an input of selecting a folder from the displayed folders, and the controller may be further configured to control the display to display an image that is matched with the folder.

In certain exemplary embodiments, the user interface may be further configured to receive an input of designating a folder of the folders as a preference folder, and the controller may be further configured to add information of the preference folder to a list of preference folders.

In certain exemplary embodiments, the user interface may be further configured to receive an input of requesting sharing of a folder of the folders, and the device may further include a communicator configured to share, with an external apparatus, an image that is matched with the folder.

In certain exemplary embodiments, the device may further include a display configured to display a list of the keywords, the user interface may be further configured to receive an input of selecting at least two keywords from the displayed list of the keywords, and the controller may be further configured to generate folders respectively corresponding to the at least two keywords.

In certain exemplary embodiments, the user interface may be further configured to receive an input of selecting a new image from the images, and the controller may be further configured to determine new attribute information of the selected new image or new image analysis information of the selected new image, and classify the images based on the new attribute information or the new image analysis information.

According to another exemplary aspect, there is provided a device configured to classify images, the device including a user interface configured to receive an input of selecting a first image and a second image from the images, and a controller configured to determine common attribute information that is common between first attribute information of the first image and second attribute information of the second image, and classify the images based on the common attribute information.

According to another exemplary aspect, there is provided a method of classifying images, the classifying being performed by a device, the method including receiving an input of selecting an image from the images, determining attribute information of the selected image or image analysis information of the selected image, and classifying the images based on the attribute information or the image analysis information.

In certain exemplary embodiments, the method may further include storing, by an external storage, the images, the external storage being connected via an account of a user and implemented outside the device.

In certain exemplary embodiments, the classifying may include generating keywords based on the attribute information or the image analysis information, and classifying the images based on the keywords.

In certain exemplary embodiments, the classifying may further include generating folders respectively corresponding to the keywords, and matching each of the images with a corresponding folder of the folders.

In certain exemplary embodiments, the method may further include storing each of the images in the corresponding folder, or storing link information for each of the images in the corresponding folder.

In certain exemplary embodiments, the classifying may further include displaying a list of the keywords, receiving an input of selecting at least two keywords from the displayed list of the keywords, and generating folders respectively corresponding to the at least two keywords.

In certain exemplary embodiments, the method may further include receiving an input of selecting a new image from the images, determining new attribute information of the selected new image or new image analysis information of the selected new image, and classifying the images based on the new attribute information or the new image analysis information.

According to another exemplary aspect, there is provided a computer program comprising instructions arranged, when executed, to implement a method, system, device, terminal and/or apparatus in accordance with any aspect, claim, embodiment or example described herein. According to another exemplary aspect, there is provided a non-transitory computer-readable recording medium having stored thereon such a program.

According to another exemplary aspect, there is provided a device configured to classify images, the device including a user interface configured to receive an input of selecting an image from the images, and a controller configured to generate keywords of the selected image, generate folders respectively corresponding to the keywords, and classify the images in the respective folders based on the keywords.

In certain exemplary embodiments, the device may further include a display configured to display the images, and the user interface may be further configured to receive the input of selecting the image from the displayed images, and receive the input of selecting the image that is captured by a camera.

In certain exemplary embodiments, the controller may be further configured to determine a similarity between the keywords corresponding to a folder of the folders and attribute information of a first image of the images, determine whether the similarity is greater than a value, and match the folder with the first image in response to the controller determining that the similarity is greater than the value.

In certain exemplary embodiments, the controller may be further configured to determine accuracy rates of the respective keywords, determine an order in which the keywords are generated based on the accuracy rates, and generate the folders based on the order.

In certain exemplary embodiments, the user interface may be further configured to receive an input of designating a folder of the folders as a preference folder, and the controller may be further configured to determine an order in which the keywords are generated based on the preference folder, and generate the folders based on the order.

According to another exemplary aspect, there is provided a method of classifying images, the method including receiving an input of selecting a first image and a second image from the images, determining common attribute information that is common between first attribute information of the first image and second attribute information of the second image, and classifying the images based on the common attribute information.

Other aspects, advantages, and salient features of the invention will become apparent to those skilled in the art from the following detailed description, which, taken in conjunction with the annexed drawings, disclose exemplary embodiments of the invention.

BRIEF DESCRIPTION OF THE DRAWINGS

The above and other aspects, and features and advantages of certain exemplary embodiments and aspects of the present invention will be more apparent from the following description of certain exemplary embodiments, with reference to the accompanying drawings, in which:

FIG. 1A is a diagram showing an image generation management system, and

FIG. 1B is a diagram showing a content management system, according to an exemplary embodiment;

FIG. 2 is a flowchart of a method of classifying content, which is performed by a device, according to an exemplary embodiment;

FIG. 3 is a flowchart of a method of selecting content, which is performed by the device, according to an exemplary embodiment;

FIG. 4 is a diagram showing a graphical user interface (GUI) for selecting content, according to an exemplary embodiment;

FIG. 5A is a diagram showing a process of selecting one piece of content from among prestored content, and FIG. 5B is a diagram showing a process of selecting a captured image, according to an exemplary embodiment;

FIG. 6 is a flowchart of a method of obtaining a plurality of keywords, which is performed by the device, according to an exemplary embodiment;

FIG. 7 is a flowchart of a method of detecting a plurality of keywords, which is performed by the device, according to an exemplary embodiment;

FIG. 8 is a diagram showing metadata that includes attribute information about content, according to an exemplary embodiment;

FIG. 9 is a diagram showing a process of obtaining a plurality of keywords by using metadata of content, which is performed by the device, according to an exemplary embodiment;

FIG. 10 is a diagram showing a process of detecting a plurality of keywords by using image analysis information about content, which is performed by the device, according to an exemplary embodiment;

FIG. 11 is a flowchart of a method of classifying a plurality of pieces of content, which is performed by the device, according to an exemplary embodiment;

FIG. 12 is a diagram showing a process of classifying and matching each of a plurality of pieces of content with a corresponding folder, which is performed by the device, according to an exemplary embodiment;

FIG. 13 is a diagram showing a process of displaying a plurality of folders, which is performed by the device, according to an exemplary embodiment;

FIG. 14 is a flowchart of a method of providing a list of a plurality of keywords, which is performed by the device, according to an exemplary embodiment;

FIG. 15 is a diagram showing a process of displaying a list of a plurality of keywords corresponding to selected content, which is performed by the device, according to an exemplary embodiment;

FIG. 16 is a diagram showing a process of displaying folders corresponding one or more keywords selected by a user, which is performed by the device, according to an exemplary embodiment;

FIG. 17 is a flowchart of a method of classifying a plurality of pieces of content based on common keywords, which is performed by the device, according to an exemplary embodiment;

FIG. 18A is a diagram showing a process of selecting at least two pieces of content, and FIG. 18B is a diagram showing a process of detecting a common keyword between the selected at least two pieces of content, according to an exemplary embodiment;

FIG. 19 is a flowchart of a method of determining an order in which a plurality of keywords are detected, according to an accuracy rate, which is performed by the device, according to an exemplary embodiment;

FIG. 20 is a diagram showing a process of determining an order in which a plurality of keywords are detected, according to an accuracy rate, which is performed by the device, according to an exemplary embodiment;

FIG. 21 is a flowchart of a method of determining an order in which a plurality of keywords are detected, according to information about a user's preference for folders, which is performed by the device, according to an exemplary embodiment;

FIG. 22 is a diagram showing a process of changing an order in which a plurality of keywords are detected, according to information about a user's preference for folders, according to an exemplary embodiment;

FIG. 23 is a diagram showing a process of adjusting a form of a folder, which is performed by the device, according to an exemplary embodiment;

FIG. 24 is a flowchart of a method of reclassifying a plurality of pieces of content based on selection of new content, which is performed by the device, according to an exemplary embodiment;

FIGS. 25A through 25E are diagrams showing a process of reclassifying a plurality of pieces of content based on selection of new content, which is performed by the device, according to an exemplary embodiment;

FIG. 26 is a flowchart of a method of classifying a plurality of pieces of content based on a plurality of keywords that are obtained from content stored in a social networking service (SNS) server, the classifying being performed by the device, according to an exemplary embodiment;

FIGS. 27A through 27C are diagrams showing a process of classifying a plurality of pieces of content based on a plurality of keywords that are obtained from content stored in the SNS server, the classifying being performed by the device, according to an exemplary embodiment;

FIG. 28 is a diagram showing a process of selecting content stored in cloud storage, according to an exemplary embodiment;

FIG. 29 is a flowchart of a method of storing information about a preference folder, which is performed by the device, according to an exemplary embodiment;

FIG. 30 is a diagram showing a process of storing information about a preference folder, which is performed by the device, according to an exemplary embodiment;

FIG. 31 is a flowchart of a method of sharing a dynamic folder with an external apparatus, which is performed by the device, according to an exemplary embodiment;

FIG. 32 is a diagram showing a process of sharing a dynamic folder with an external apparatus, which is performed by the device, according to an exemplary embodiment;

FIG. 33 is a diagram showing a content management system, according to an exemplary embodiment;

FIG. 34 is a flowchart of a method of classifying content, which is performed by a cloud server, according to an exemplary embodiment;

FIG. 35 is a flowchart of a method of classifying a plurality of pieces of content based on a plurality of keywords detected from the cloud server, the classifying being performed by the device, according to an exemplary embodiment;

FIG. 36 is a diagram showing a process of receiving information about a plurality of keywords from the cloud server, which is performed by the device, according to an exemplary embodiment;

FIG. 37 is a diagram showing a process of classifying content based on information about a plurality of keywords received from the cloud server, the classifying being performed by the device, according to an exemplary embodiment;

FIGS. 38 and 39 are block diagrams of the device, according to an exemplary embodiment; and

FIG. 40 is a block diagram of the cloud server, according to an exemplary embodiment.

## DETAILED DESCRIPTION

Exemplary embodiments are described in greater detail herein with reference to the accompanying drawings. The following description is provided to assist in a comprehensive understanding of the present invention, as defined by the claims. The description includes various specific details to assist in that understanding but these are to be regarded as merely exemplary. Furthermore, the terms and words used in the following description and claims are not limited to the bibliographical meanings, but, are merely used to enable a clear and consistent understanding of the invention. Accordingly, those of ordinary skill in the art will recognize that various changes and modifications of the embodiments described herein can be made without departing from the scope of the invention.

Features, elements, components, integers, steps, processes, operations, functions, characteristics, properties and/or groups thereof described herein in conjunction with a particular aspect, claim, embodiment or example are to be understood to be applicable to any other aspect, claim embodiment or example described herein unless incompatible therewith.

Throughout the description and claims of this specification, the words "comprise", "include" and "contain" and variations of the words, for example "comprising" and "comprises", means "including but not limited to", and is not intended to (and does not) exclude other features, elements, components, integers, steps, processes, operations, characteristics, properties and/or groups thereof.

Throughout the description and claims of this specification, the singular forms "a," "an," and "the" include plural referents unless the context dictates otherwise. Thus, for example, reference to "an object" includes reference to one or more of such objects.

Throughout the description and claims of this specification, language in the general form of "X for Y" (where Y is some action, process, activity, operation or step and X is some means for carrying out that action, process, activity, operation or step) encompasses means X adapted, configured or arranged specifically, but not exclusively, to do Y.

In the following description, the same or similar reference numerals may be used denote the same or similar elements, even though they may be illustrated in different drawings.

The matters defined in the description, such as detailed construction and elements, are provided to assist in a comprehensive understanding of the exemplary embodiments. However, it is apparent that the exemplary embodiments can be practiced without those specifically defined matters.

Also, well-known functions, operations, processes, techniques, features, elements, structures or constructions may not described in detail for clarity and conciseness, and to avoid obscuring the subject matter of the present invention.

It will be understood that the terms such as "unit," "-er (-or)," and "module" described in the specification refer to an element for performing at least one function or operation, and may be implemented in hardware, software, or the combination of hardware and software.

A "touch input" used herein refers to a gesture that a user performs on a touchscreen to control a device. For example, a touch input described herein may include a tap, a touch and hold, a double-tap, a drag, panning, a flick, or a drag-and-drop.

A "tap" is a gesture in which a user touches a screen by using a finger or a touch tool, for example, an electronic pen, and then, immediately lifts it off from the screen without dragging on the screen.

A "touch and hold" is a gesture in which a user touches a screen by using a finger or a touch tool (for example, an electronic pen), and holds the touch for a period of time or more (for example, 2 seconds). For example, a difference in time between time points of a touch on and a lift-off from the screen is equal to or longer than the period of time (for example, 2 seconds). If the touch input is held for more than the period of time to make a user recognize whether the touch input is a tap or a touch and hold, a feedback signal may be visually, aurally, or tactually provided. The period of time may vary according to exemplary embodiments.

A "double tap" is a gesture in which a user touches a screen twice by using a finger or a touch tool (for example, an electronic pen).

A "drag" is a gesture in which a user touches a screen by using a finger or a touch tool and moves the finger or the touch tool to another location in the screen while holding the touch. When the drag is performed, an object moves, or a panning gesture, which is described below, is performed.

A "panning" gesture is a gesture in which a user performs a drag without selecting an object. As the panning gesture does not select an object, an object does not move in a page, but the page moves in the screen or a group of objects moves in the page.

A "flick" is a gesture in which a user performs a drag at a speed (for example, 100 pixels/s) or at a higher speed, by using a finger or a touch tool. The flick may be distinguished from the drag (or panning) based on whether a moving speed of a finger or a touch tool is equal to or higher than the speed (for example, 100 pixels/s).

A "drag and drop" is a gesture in which a user drags an object to a predetermined place in a screen by using a finger or a touch tool, and then, lifts the finger or touch tool off the screen.

A "pinch" is a gesture in which a user touches a screen with two fingers and moves the two fingers in different directions. The pinch may be a pinch-open gesture for zooming-in to an object or a page, or a pinch-close gesture for zooming-out from an object or a page. A zoom-in or zoom-out value is determined according to a distance between the two fingers.

A "swipe" is a gesture for touching an object in a screen by using a finger or a touch tool and moving the finger or the touch tool in a horizontal or vertical direction for a distance. Moving in a diagonal direction may not be recognized as a swipe event.

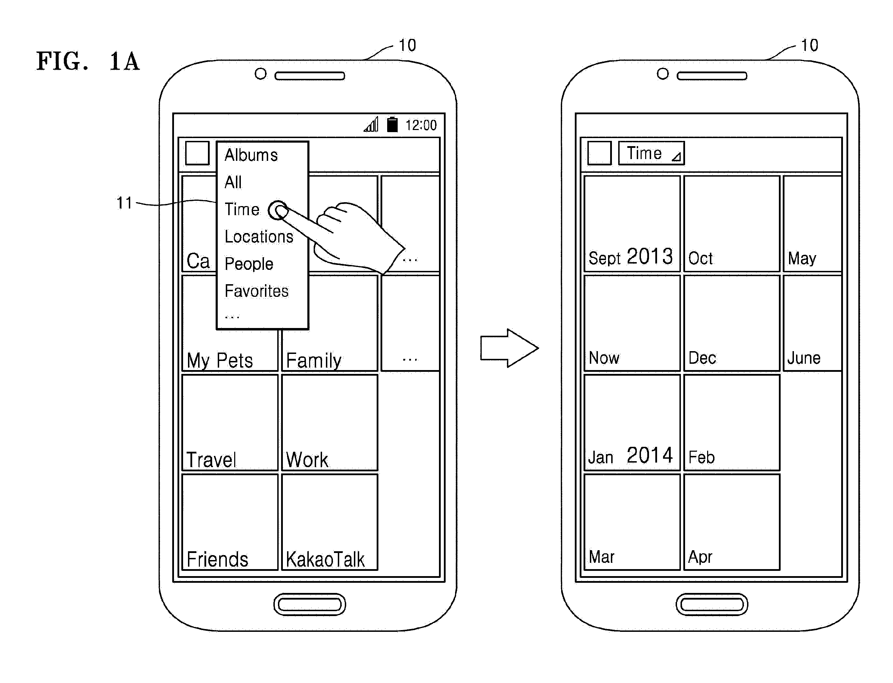

FIG. 1A is a diagram showing an image generation management system, and

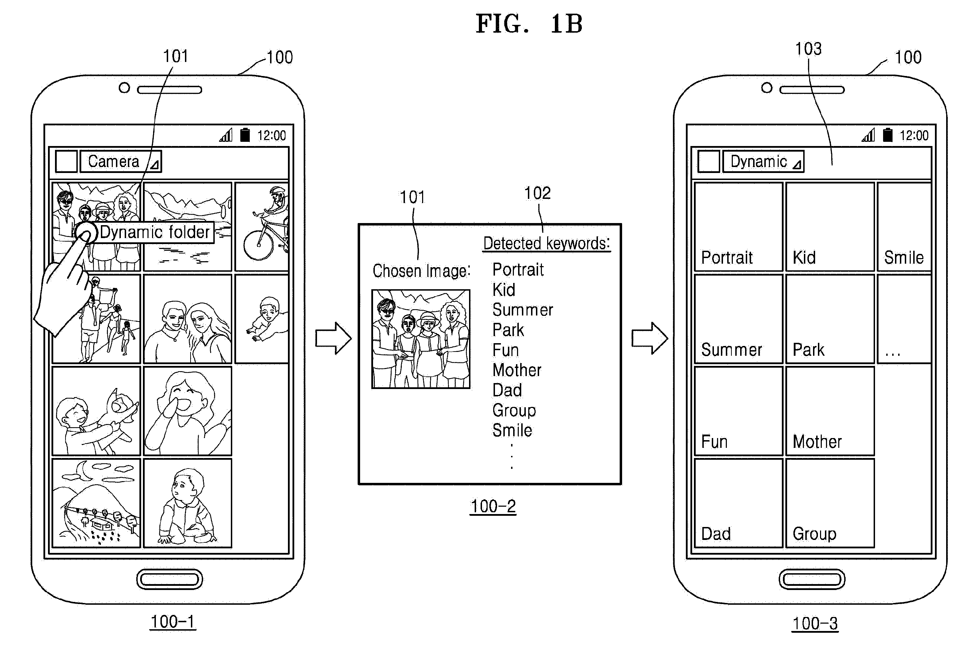

FIG. 1B is a diagram showing a content management system, according to an exemplary embodiment.

As shown in FIG. 1A, a device 10 may provide categories for classifying images in a predetermined form. For example, the device 10 may provide predefined categories 11 such as Albums, All, Time, Locations, People, or the like. Then, a user may select one category from the predefined categories 11. For example, if a user selects Time, the device 10 may classify images according to months, and provide the images accordingly.

However, a category that a user wants may not be present in the predefined category 11. Additionally, if there are many images to be classified, because the number of images corresponding to one category is increased, it may be difficult for the user to accurately identify images corresponding to each category. Accordingly, categories may need to be subdivided.

Additionally, if many images are stored in the device 10, it may be difficult for the user to search for an image from among all the images by using the predefined category 11.

Hereinafter, a system for adaptively classifying content so that a user may easily search for or identify content is described with reference to FIG. 1 B.

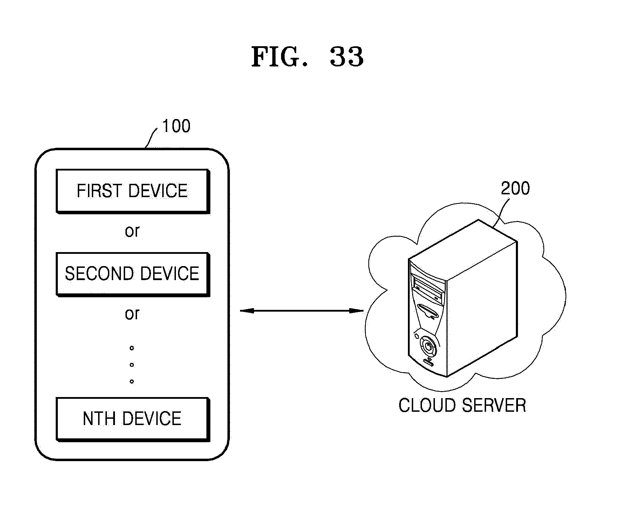

As shown in FIG. 1B, according to an exemplary embodiment, the content management system may include a device 100. However, the content management system may be implemented by using more elements than those shown in FIG. 1B. For example, the content management system may include a server (not shown) in addition to the device 100. A case in which the content management system further includes the server will be described later with reference to FIGS. 33 through 37.

According to an exemplary embodiment, the device 100 may be an apparatus for storing and managing content. According to an exemplary embodiment, the device 100 may be implemented in various forms. For example, the device 100 described herein may be a desktop computer, a cellular phone, a smartphone, a laptop computer, a tablet personal computer (PC), an e-book terminal, a digital broadcasting terminal, a personal digital assistant (PDA), a portable multimedia player (PMP), a navigation system, a moving pictures expert group audio layer 3 (MP3) player, a digital camera, an Internet protocol television (IPTV), a digital TV (DTV), a consumer electronics (CE) device (for example, a refrigerator or an air conditioner having a display), or the like, but is not limited thereto. The device 100 described herein may be a wearable device that may be worn by a user. For example, according to an exemplary embodiment, the device 100 may be a wristwatch, glasses, a ring, a bracelet, a necklace, or the like.

According to an exemplary embodiment, the device 100 may adaptively classify a plurality of pieces of content that are prestored, based on content selected by a user.

"Content" described herein may refer to digital information that is created by using characters, symbols, voice, sound, images, moving images, or the like by employing a digital method. According to an exemplary embodiment, content may include still image content (for example, a photograph, a picture, or the like), video content (for example, TV program images, video on demand (VOD), user-created content (UCC), a music video clip, a Youtube video clip, or the like), text content (for example, an e-book (a poem or a novel), a letter, a work file), music content (for example, music, a musical program, a radio broadcast, or the like), or a web page, or the like, but is not limited thereto.

For example, if the device 100 receives a user input of choosing a first image 101 from among a plurality of pieces of content in 100-1, the device 100 may detect a plurality of keywords 102 for describing the first image 101 in 100-2.

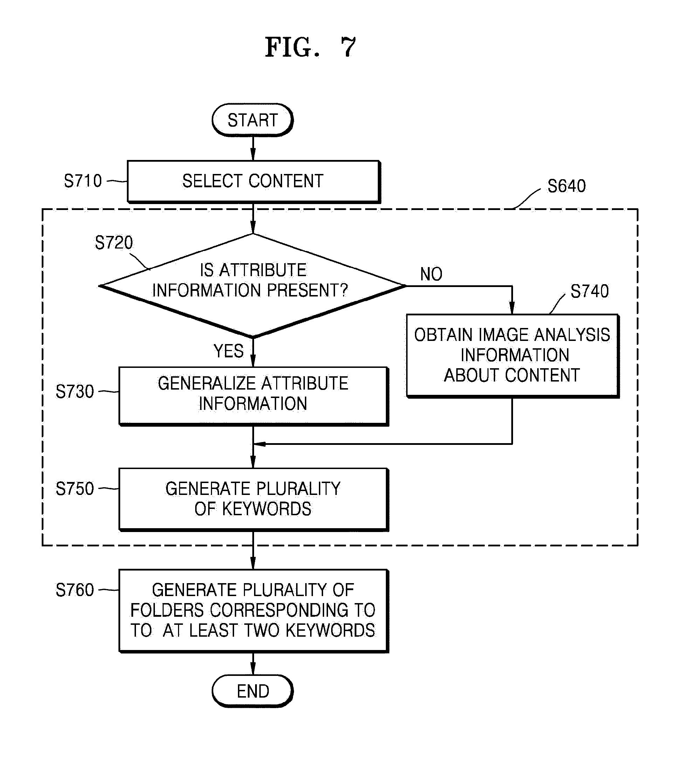

A 'keyword' described herein may be a key word or phrase for explaining content, or a word or phrase that is a subject of content. According to an exemplary embodiment, a keyword may be detected by using attribute information about the content or image analysis information about the content. According to an exemplary embodiment, a keyword may also be expressed as a 'classification item' or a 'label' for classifying content. A method of detecting keywords of content, which is performed by the device 100, will be described in detail later with reference to FIG. 7.

Because the first image 101 is a picture of a family in a park in summer, the device 100 may detect keywords such as Portrait, Kid, Summer, Park, Fun, Mother, Dad, Group, Smile, and the like. Then, the device 100 may classify a plurality of pre-stored content in 100-3, by generating a plurality of folders 103 corresponding to a plurality of keywords 102.

A 'folder' described herein may be a user interface for grouping and showing related content according to criteria (categories). For example, a folder may be a graphical user interface (GUI) for arranging unarranged content according to a category that is newly generated, or a GUI for rearranging content that is already arranged, according to a category that is newly generated.

According to an exemplary embodiment, a folder may be displayed in various forms of images. For example, a folder may be in a shape of a file folder icon or a photo album, but is not limited thereto.

Additionally, according to an exemplary embodiment, a folder may be displayed in the form of an image in which thumbnail images of content are combined. A folder may be presented by using a thumbnail image of representative content from among content stored in the folder.

According to an exemplary embodiment, the device 100 may store and manage content in a folder, or store link information of content (for example, a uniform resource locator (URL) or storage location information) in a folder.

According to an exemplary embodiment, a folder may be temporarily generated according to a selection of content, and then, be automatically deleted. For example, the device 100 may generate a first folder and a second folder, based on selection of first content. Additionally, if second content is selected, the device 100 may generate a third folder and a fourth folder based on a keyword detected from the second content. If a user input requesting that the first folder and the second folder be maintained is not received, the device 100 may not store information about the first folder and the second folder. Accordingly, if the second content is selected, the first folder and the second folder may be automatically deleted, and the third folder and the fourth folder may be maintained. Hereinafter, for convenience of description, a folder that is adaptively generated according to selection of content is referred to as a 'dynamic folder'.

According to an exemplary embodiment, the device 100 may generate various types of dynamic folders according to selection of content, and automatically classify the content. Accordingly, a user may easily search for content by using a dynamic folder, and collect content having similar characteristics and identify the content.

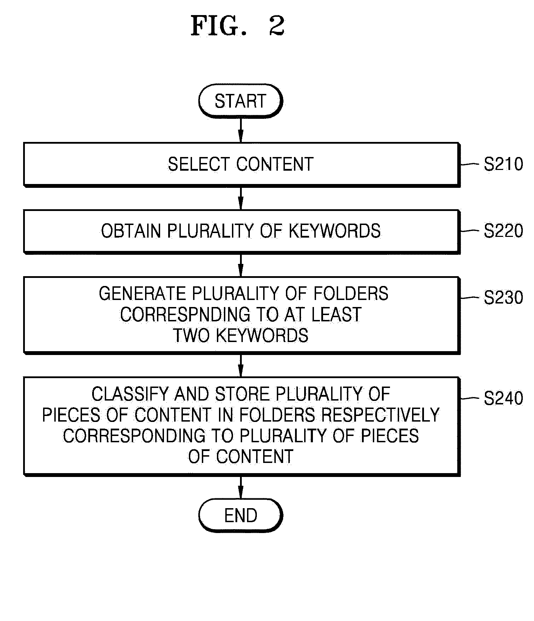

Hereinafter, a method of classifying content by adaptively generating a folder according to selection of content is described in detail with reference to FIG. 2.

FIG. 2 is a flowchart of a method of classifying content, which is performed by the device 100, according to an exemplary embodiment.

According to an exemplary embodiment, the device 100 may select one piece of content based on a user input. For example, the device 100 may receive a user input of selecting content.

According to an exemplary embodiment, a user input of selecting content may vary. A user input described herein may include a key input, a touch input, a motion input, a bending input, a voice input, a multiple input, or the like.

A "touch input" used herein refers to a gesture that a user performs on a touchscreen to control the device 100. For example, a touch input described herein may include a tap, a touch and hold, a double-tap, a drag, panning, a flick, or a drag-and-drop.

A "motion input", described herein, refers to a motion that a user performs with the device 100 to control the device 100. For example, a motion input may include a user input of rotating the device 100, tilting the device 100, or moving the device 100 in a left, right, upward, or downward direction. The device 100 may detect a motion input predetermined by a user, by using an acceleration sensor, a tilt sensor, a gyroscope sensor, a 3-axis magnetic sensor, or the like.

A "bending input" described herein refers to a user input of bending a part or all of an area of the device 100 to control the device 100 if the device 100 is a flexible apparatus. According to an exemplary embodiment, the device 100 may detect a bending position (a coordinate value), a bending direction, a bending angle, a bending speed, a number of times bending is performed, a point of time when a bending operation occurs, a time period during which a bending operation is maintained, or the like.

A "key input" described herein refers to a user input of controlling the device 100 by using a physical key attached to the device 100.

A "multiple input" described herein refers to an input made by combining at least two input methods. For example, the device 100 may receive a touch input and a motion input by a user, or receive a touch input and a voice input by a user. Additionally, the device 100 may receive a touch input and an eyeball input from a user. An eyeball input refers to an input of adjusting blinking of the user's eyes, a location viewed by the user's eyes, a speed of eyeball movement, or the like to control the device 100.

Hereinafter, for convenience of description, a case in which a user input is a key input or a touch input is described as an example.

According to an exemplary embodiment, the device 100 may receive a user input of selecting a preset button. The preset button may be a physical button attached to the device 100 or a virtual button in the form of a GUI. For example, if a user selects a first button (for example, a home button) and a second button (for example, a volume adjustment button) together, the device 100 may select content displayed on a screen.

According to another exemplary embodiment, the device 100 may receive a user input of touching content, from among a plurality of content displayed on a screen. For example, the device 100 may receive an input of touching content for a period of time (for example, 2 seconds) or a longer period of time, or touching the content a number of times (for example, a double tap) or more times.

According to an exemplary embodiment, various types of content may be selected. For example, the device 100 may select a photo image in a photo album stored in a memory, select an image that is captured in real time, select content of a friend registered for a social networking service (SNS) server, or select video clip content stored in a cloud storage, but is not limited thereto.

In operation S220, the device 100 obtains a plurality of keywords related to the selected content. According to an exemplary embodiment, the plurality of keywords may be words or phrases related to the selected content.

For example, if the selected content is a first image (for example, in the first image, two people are present, the two people are hugging each other, a background of the first image is an indoor of a house, and a puppy is next to the two people.), the device 100 may extract words related to the first image (for example, person, group, indoor, and dog) as keywords.

The obtaining of a plurality of keywords related to an image may include using a plurality of keywords which are already extracted from the image, receiving a plurality of keywords related to the image from outside, or extracting a plurality of keywords directly from the image, but is not limited thereto. The obtaining of a keyword related to the image may be performed by using various methods.

For example, if a plurality of keywords that are already extracted from the image corresponding to the plurality of keywords are used, or a plurality of keywords related to the image corresponding to the plurality of keywords are received from outside, the device 100 may identify and use a plurality of keywords stored in the form of metadata of the selected content or use a plurality of keywords in the form of metadata that are already extracted and received from outside.

Additionally, the device 100 may extract a plurality of keywords related to the selected content directly from the selected content, by using at least one selected from the group consisting of attribute information about the selected content and image analysis information about the selected content.

An operation of directly extracting a plurality of keywords related to selected content directly from the selected content will be described in detail later with reference to FIG. 7.

According to an exemplary embodiment, attribute information is information indicating characteristics of content and may include, for example, at least one selected from the group consisting of information about a format of the content, information about a size of the content, information about a location where the content is generated (for example, global positioning system (GPS) information), information about a point of time when the content is generated, event information related to the content, information about a device that generated the content, information about a source of the content, annotation information added by a user, and user information, but is not limited thereto. According to an exemplary embodiment, attribute information about content may be stored in the form of metadata. Metadata refers to data provided to content according to a rule to efficiently search for information.

According to an exemplary embodiment, image analysis information is information obtained by analyzing data obtained through performing image processing performed on content. For example, image analysis information includes

EP 2 980 712 A1

at least one selected from the group consisting of information about an object that appears on content (for example, a type, a name, or a number of the object, or the like), information about a place that appears in the content (for example, the Eiffel Tower → Paris), information about a season or time in the content (for example, snow → winter, fallen leaves → autumn), information about an atmosphere or feeling that appears in the content (for example, candlelight → romance), or information about a character or a symbol that appears in the content (for example, text information analysis), but is not limited thereto. According to an exemplary embodiment, if image analysis information about content is stored in the form of metadata, image analysis information about the content may be attribute information about the content.

According to an exemplary embodiment, the device 100 may directly detect a plurality of keywords, and receive a plurality of keywords detected from an external apparatus. For example, if the device 100 requests detection of a keyword by transmitting content or information about content to an external apparatus, the external apparatus may detect a plurality of keywords by using attribute information or image analysis information about the content. The external apparatus may be a host device connected to the device 100 or a cloud server connected to the device 100, but is not limited thereto.

In operation S230, the device 100 generates a plurality of folders respectively corresponding to at least two keywords, from among the plurality of keywords.

According to an exemplary embodiment, the device 100 may generate a plurality of folders respectively corresponding to all the obtained plurality of keywords. Alternatively, the device 100 may generate a plurality of folders corresponding to one or more keywords from the plurality of keywords.

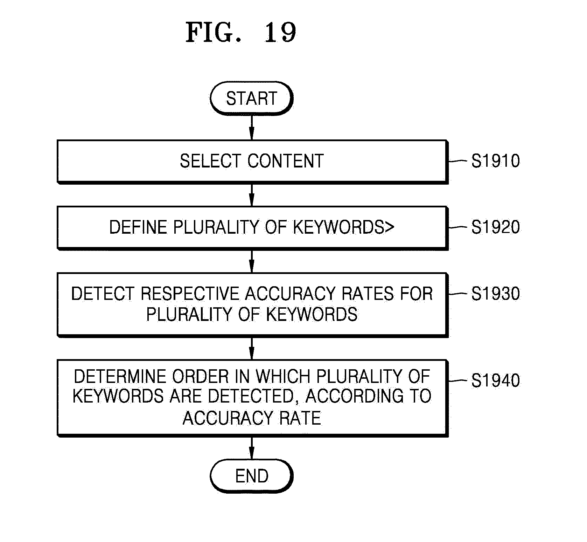

For example, if the number of folders that may be generated is predetermined as a number, the device 100 may generate folders in correspondence with the predetermined number. If the number of folders that may be generated is predetermined as 4, the device 100 may generate 4 folders by using 4 keywords from among obtained 10 keywords. The device 100 may generate a number of folders according to an order in which keywords are detected. An operation of determining an order in which keywords are detected, which is performed by the device 100, will be described in detail later with reference to FIG. 19.

According to an exemplary embodiment, the device 100 may generate a plurality of folders corresponding to at least two keywords selected by a user. For example, the device 100 may display a list of the obtained plurality of keywords on a screen, and receive a user input of selecting two or more keywords from among the plurality of keywords. Then, the device 100 may generate a plurality of folders corresponding to the two or more keywords.

According to an exemplary embodiment, the device 100 may use a keyword corresponding to a folder as a name of the folder. For example, if keywords such as 'person', 'group, 'indoor', and 'dog' are detected, names of folders respectively corresponding to the keywords may be 'person', 'group', 'indoor', and 'dog'.

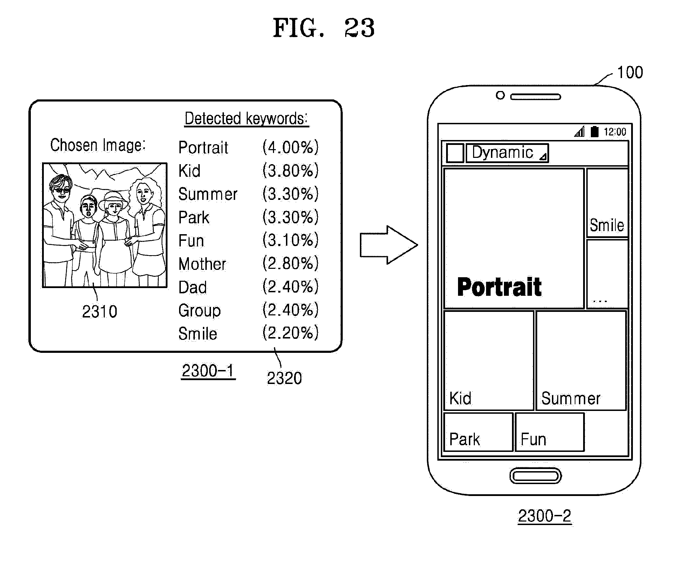

According to an exemplary embodiment, an order in which a plurality of folders are arranged may be determined based on an order in which keywords corresponding to the plurality of folder are detected. Additionally, according to an exemplary embodiment, the device 100 may determine sizes of the plurality of folders in various ways. For example, referring to FIG. 23, the device 100 may variously adjust a size of each folder according to an accuracy rate for a keyword corresponding to each folder. Additionally, the device 100 may variously adjust a size of each folder according to a number of pieces of content included in each folder.

In operation S240, the device 100 classifies and stores the plurality of pieces of content in the folders respectively corresponding to the plurality of pieces of content, based on the keywords respectively corresponding to the folders.

According to an exemplary embodiment, the device 100 may match the plurality of pieces of content with folders respectively corresponding to the plurality of pieces of content, by using a result obtained by comparing keywords respectively corresponding to the plurality of folders to respective keywords of the plurality of pieces of content. For example, if first content has a keyword (for example, a dog) identical to a first keyword (for example, a dog) corresponding to a first folder or a keyword (for example, a puppy) similar to the first keyword, the device 100 may match the first content with the first folder.

According to an exemplary embodiment, the device 100 may match the plurality pieces of content with folders respectively corresponding to the plurality of pieces of content, by using a result obtained by comparing keywords respectively corresponding to the plurality of folders to respective attribute information about the plurality of pieces of content. For example, if first content has attribute information (place: France) identical to a first keyword (for example, France) corresponding to a first folder or attribute information (place: Eiffel Tower) similar to the first keyword, the device 100 may match the first content with the first folder.

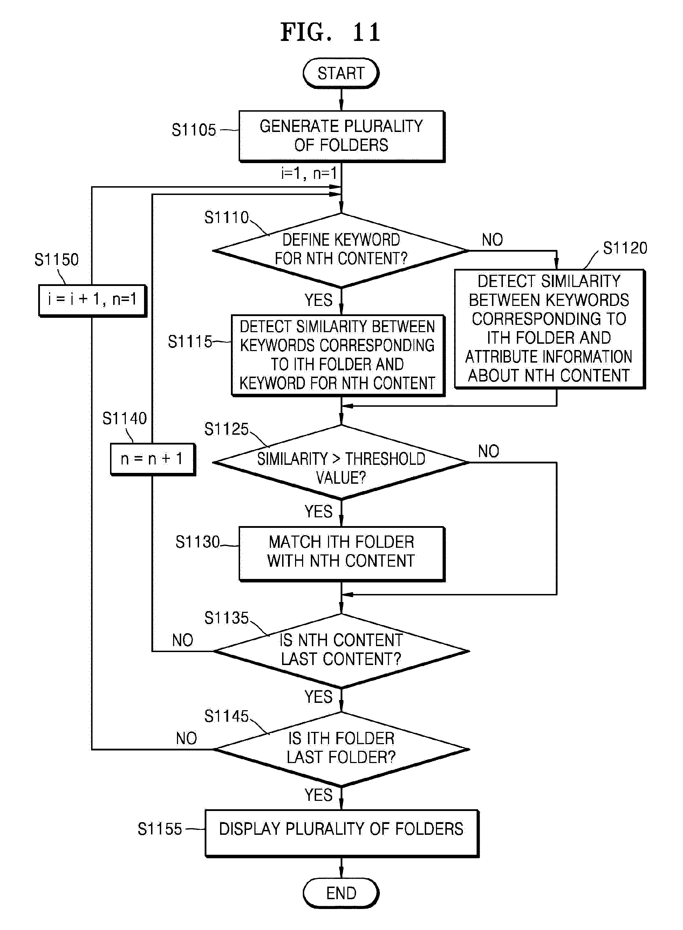

According to an exemplary embodiment, the device 100 may determine whether keywords respectively corresponding to the plurality of folders are identical/similar to respective keywords (or attribute information) of the plurality of pieces of content, by using Wordnet (a hierarchical lexical reference system) or an ontology. An operation of detecting a similarity between keywords respectively corresponding to a plurality of folders and respective keywords (or attribute information) of a plurality of pieces of content will be described in detail later with reference to FIG. 11.

According to an exemplary embodiment, the storing of a plurality of pieces of content in folders respectively corresponding thereto may refer to storing link information indicating a location where the plurality of pieces of content

9

are stored in the folders corresponding to the plurality of pieces of content, or changing a location where the plurality of pieces of content are stored to the folders respectively corresponding to the plurality of pieces of content. Hereinafter, such cases are described.

According to an exemplary embodiment, the device 100 may classify a plurality of pieces of content according to keywords respectively corresponding to the plurality of folders, and store link information about the plurality of pieces of content in the respective folders corresponding to the plurality of pieces of content. A location where the plurality of pieces of content are stored may not be changed.

"Link information" described herein refers to information for accessing content and may include, for example, information about a storage location (for example, a name of a directory, or the like) or information about a web URL, but is not limited thereto.

If link information about each of a plurality of pieces of content is stored in a corresponding folder of the plurality of folders, the device 100 may match one piece of content with several folders. For example, if a first image is related to 'person', 'dog', and 'park' from among the plurality of keywords, the device 100 may store link information about the first image respectively in a first folder corresponding to 'person', a second folder corresponding to 'dog', and a third folder corresponding to 'park'.

According to another exemplary embodiment, the device 100 may match each of the plurality of pieces of content with a corresponding folder of the plurality of folders and store each of the plurality of pieces of content in the corresponding. In this case, one piece of content may match one folder. If one piece of content is related to a plurality of keywords, the device 100 may match the content with one folder according to criteria. For example, if a first image is related to 'person', 'dog', and 'park' from among a plurality of keywords, the device 100 may store the first image in the first folder corresponding to 'person' that is most frequently detected from among 'person', 'dog', and 'park'.

Additionally, the device 100 may match a folder with content, based on a priority order according to a type of a keyword. For example, the device 100 may match content with a folder according to an order from an object-related keyword, a place-related keyword, to a time-related keyword. If the first image is related to 'dog' and 'park' from among a plurality of keywords, the device 100 may store the first image in the first folder corresponding to 'dog' that is related to the object, from among 'dog' and 'park'.

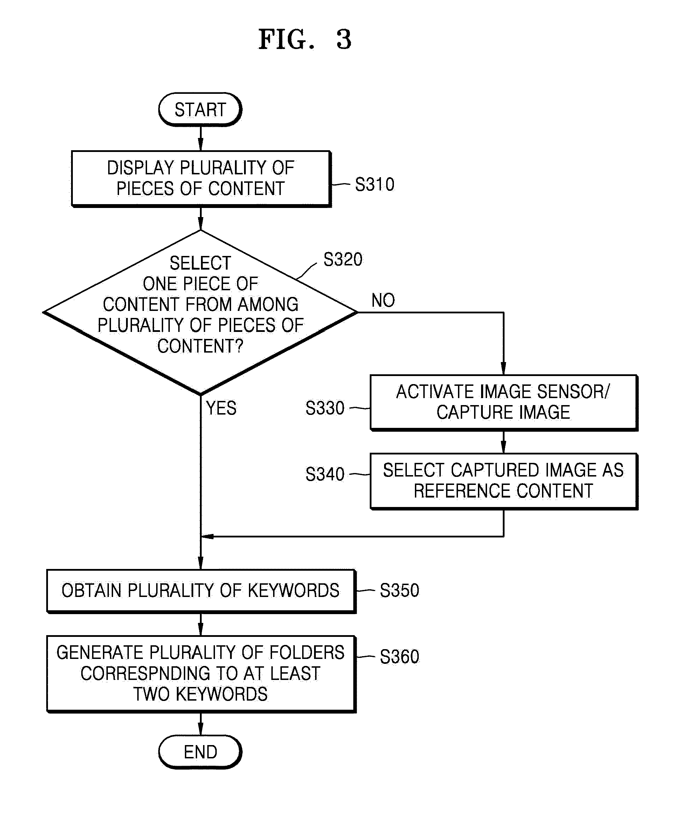

According to an exemplary embodiment, the device 100 may automatically classify (or group) a plurality of pieces of content according to a plurality of keywords that semantically express a selected piece of content, and provide the classified plurality of pieces of content to a user. Hereinafter, an operation of selecting content that is a reference for classifying a plurality of pieces of content is described in detail with reference to FIG. 3.

FIG. 3 is a flowchart of a method of selecting content, which is performed by the device 100, according to an exemplary embodiment.

In operation S310, the device 100 displays a plurality of pieces of content.

The plurality of pieces of content may be content stored in a memory included in the device 100. Additionally, the plurality of pieces of content may be content stored in cloud storage connected to the device 100. Cloud storage refers to a space in which data may be stored based on a network.

In operation S320, the device 100 determines whether an input that selects one piece of content from among the stored plurality of pieces of content is received from a user. There may be various types of inputs of selecting content. For example, the device 100 may receive an input of selecting a pieces of content, by the user touching the piece of content for a period of time or longer (for example, 2 or more seconds) or touching the piece of content a number of times or more (for example, a double tap). In response to the device 100 determining that the input that selects the one piece of content is received, the device 100 continues in operation S350. Otherwise, the device 100 continues in operation S330.

In operation S330, the device 100 selects one piece of content by activating an image sensor and capturing (photographing) an external image by using the activated image sensor. The external image refers to an image of an actual environment that is present outside the device 100.

According to an exemplary embodiment, the device 100 may capture (for example, screen-capture) an internal image. The internal image may refer to an image played by or displayed on the device 100.

In operation S340, the device 100 selects the captured image as reference content. The reference content refers to content used to extract an attribute or a keyword (or a classification item) for classifying a plurality of pieces of content stored in the device 100.

In operation S350, the device 100 obtains a plurality of keywords for describing the selected one piece of content or the reference content. For example, the device 100 may obtain a plurality of keywords by using at least one selected from the group consisting of attribute information about the reference content and image analysis information about the reference content.

In operation S360, the device 100 generates a plurality of folders respectively corresponding to at least two keywords, from among the plurality of keywords.

Operations S350 and S360 correspond to operations S220 and S230 described with reference to FIG. 2. Thus, a detail description thereof is not provided here again.

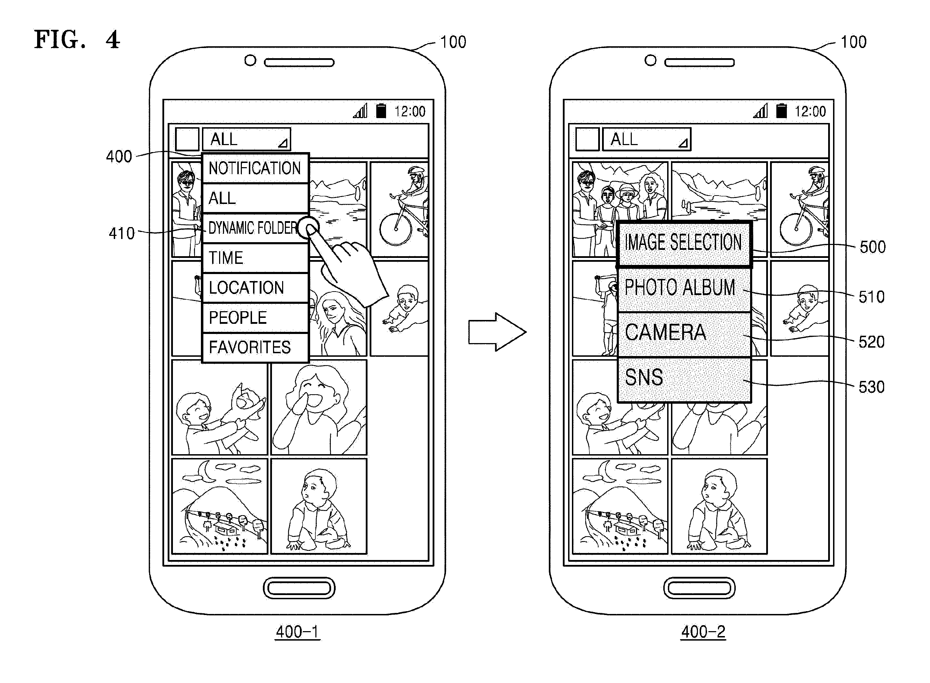

FIG. 4 is a diagram showing a GUI for selecting content, according to an exemplary embodiment.

Referring to 400-1 shown in FIG. 4, the device 100 may provide a menu window 400 for selecting a category. If a user selects a dynamic folder menu 410 in the menu window 400, the device 100 may provide a selection window 500 for selecting a type of reference content for generating a dynamic folder. The menu window 400 and the selection window 500 may be types of GUIs.

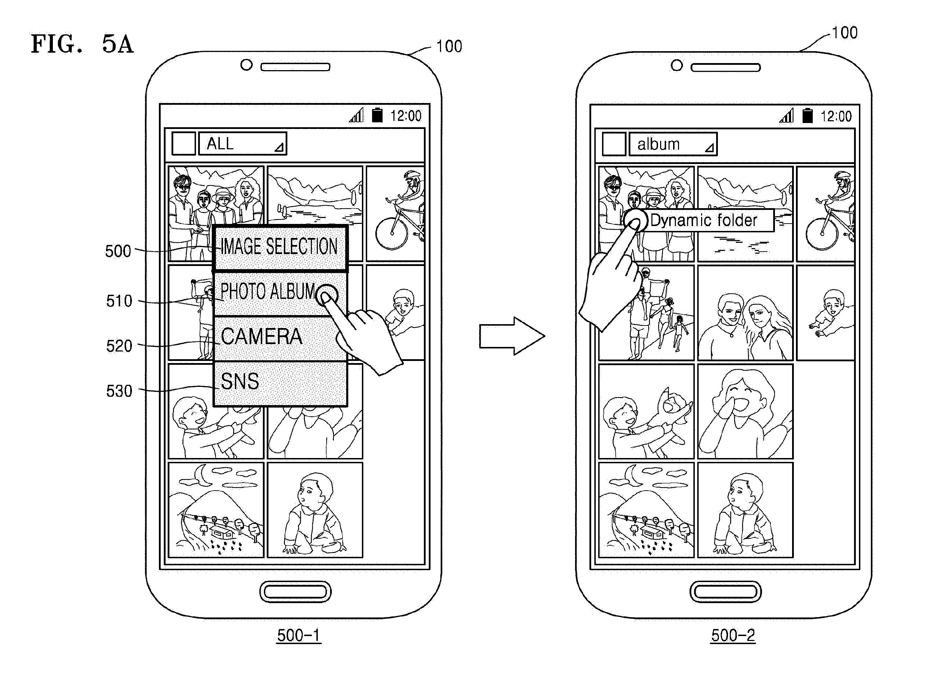

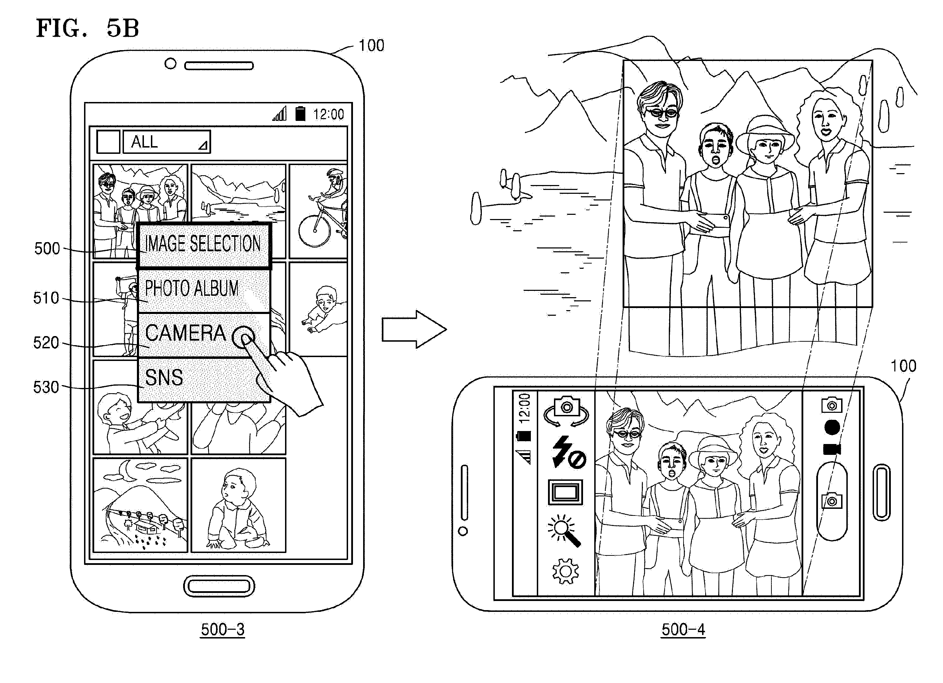

Referring to 400-2 shown in FIG. 4, the device 100 may display the selection window 500 via which the device 100 may determine a method of selecting an image. For example, the device 100 may provide a photo album menu 510 for selecting an image from a photo album, a camera menu 520 for selecting an image captured by using a camera, and an SNS menu 530 for selecting content stored in an SNS server, by using the selection menu 500. A method of selecting reference content, which is performed by the device 100, is described in detail with reference to FIGS. 5A and 5B.

FIG. 5A is a diagram showing a process of selecting one piece of content from among prestored content, and FIG. 5B is a diagram showing a process of selecting a captured image, according to an exemplary embodiment.

Referring to FIG. 5A, the device 100 may receive an input of selecting the photo album menu 510 from the selection menu 500 in 500-1. The device 100 may display a plurality of photo images stored in a photo album on a screen, in response to the selecting of the photo album menu 510. The device 100 may receive a user input of selecting a photo image from among a plurality of photo images in 500-2.

Referring to FIG. 5B, the device 100 may receive an input of selecting the camera menu 520 from the selection menu 500 in 500-3. The device 100 may activate a camera (an image sensor), in response to the selecting of the camera menu 520. The device 100 may capture an external image by using the activated camera (the image sensor) in 500-4. The device 100 may generate a plurality of folders for classifying a plurality of pieces of content, by detecting a plurality of keywords from the captured image.

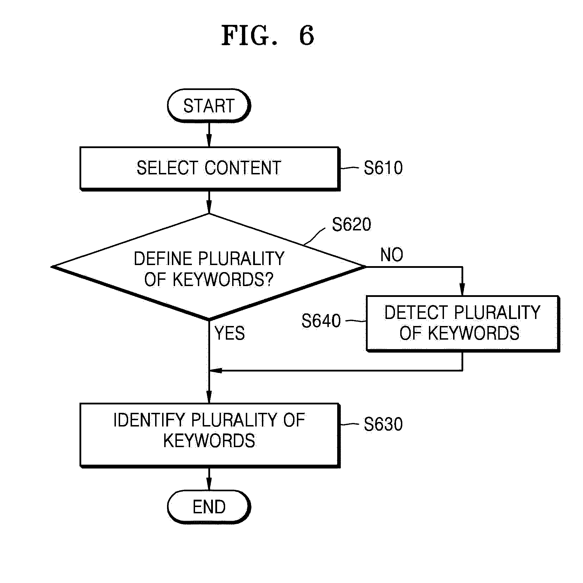

Hereinafter, an operation of obtaining a plurality of keywords, which is performed by the device 100, is described in detail with reference to FIGS. 6 and 7.

FIG. 6 is a flowchart of a method of obtaining a plurality of keywords, which is performed by the device 100, according to an exemplary embodiment;

In operation S610, the device 100 selects content. For example, as described above, the device 100 may select a piece of content from among a plurality of pre-stored content, select an image captured in real time by using a camera, or select content registered for an SNS server, but is not limited thereto.

In operation S620, the device 100 determines whether a plurality of keywords are defined for the selected content. For example, when the device 100 stores content, the device 100 may detect a plurality of keywords for describing each content, and store the detected plurality of keywords with the content. In this case, the device 100 may determine that a plurality of keywords are defined for a selected content. According to an exemplary embodiment, a plurality of keywords respectively corresponding to each content may be stored in the form of metadata for each content. In response to the device 100 determining the plurality of keywords are defined for the selected content, the device 100 continues in operation S630. Otherwise, the device 100 continues in operation S640.

In operation S630, the device 100 extracts or identifies the plurality of keywords corresponding to the selected content.

In operation S640, the device 100 detects a plurality of keywords of the selected content. For example, the device 100 may detect a plurality of keywords by using attribute information stored in the form of metadata, or detect a plurality of keywords by using image analysis information obtained by performing image processing on the content. Operation S640 is described in detail with reference to FIG. 7.

FIG. 7 is a flowchart of a method of detecting a plurality of keywords, which is performed by the device 100, according to an exemplary embodiment. A case in which a plurality of keywords are not predefined for content is described in detail with reference to FIG. 7.

In operation S710, the device 100 selects content. Operation S710 corresponds to operation S610 described with reference to FIG. 6. Thus, a detailed description thereof is not provided here again.

In operation S720, the device 100 determines whether attribute information corresponding to the selected content is present. For example, the device 100 may check metadata corresponding to the selected content. If attribute information stored in the form of metadata is present, the device 100 may extract attribute information about the selected content. In response to the device 100 determining that the attribute information is present, the device 100 continues in operation S730. Otherwise, the device 100 continues in operation S740.

According to an exemplary embodiment, attribute information is information indicating characteristics of content and may include, for example, at least one selected from the group consisting of information about a format of the content, information about a size of the content, information about an object included in the content (for example, a type of the object, a name of the object, a number of the object or the like), information about a location where the content is generated, information about a point of time when the content is generated, event information related to the content, information about a device that generated the content, information about a source of the content, annotation information added by a user, and context information obtained when content is generated (weather, a temperature, or the like), but is not limited thereto.

In operations S730 and S750, the device 100 generalizes the attribute information corresponding to the selected content, and generates a plurality of keywords of the selected content based on the generalized attribute information.

Generalization of attribute information, described herein, may refer to expressing attribute information by using a higher level language, based on Wordnet (the hierarchical language reference system).

A 'Wordnet' is a database in which a relationship between words is constructed by using information about information about interword meanings or a pattern in which words are used. A basic structure of Wordnet consists of a semantic relation that defines a logical group referred to as a synset that includes a list of semantically identical words and a relation between synsets. A semantic relation includes a hypernym, a hyponym, a meronym, and a holonym. A noun part of the Wordnet has an entity as a highest hypernym, and may form a hyponum by extending the entity according to meanings. Accordingly, the Wordnet may be regarded as a type of ontology having a hierarchical structure obtained by classifying and defining a conceptualized lexicon.

An 'ontology' refers to a formal and explicit specification for shared conceptualization. The ontology is a type of a dictionary consisting of words and relations. In the ontology, words related to a domain are hierarchically expressed, and an inference rule for further extending the words are included.

According to an exemplary embodiment, the device 100 may detect a keyword by generalizing location information included in attribute information into upper-layer information. For example, the device 100 may express a GPS coordinate value (a latitude of 37.4872222 and a longitude of 127.0530792) into an upper-level concept such as a zone, a building, an address, a name of a region, a name of a city, a name of a nation, or the like. In this case, the building, the address, the name of the region, the name of the city, or the name of the nation may be detected as a keyword for the selected content.

Additionally, the device 100 may generalize time included in attribute information into upper-layer information. The device 100 may generalize time information, expressed in the units of an hour, a minute, and a second (for example, 05:10:30 PM, October 9, 2012). Into upper-layer information and express the time information as morning/afternoon/evening, a date, a week, a month, a year, a holiday, a weekend, a work date, a weekday, and/or another time zone. In this case, a day, a week, a month, a year, an anniversary, or the like may be detected as a keyword for the selected content.

According to an exemplary embodiment, the device 100 may generalize attribute information according to a predetermined generalization level. For example, a generalization level for time information may be set so that time information is expressed in the units of a 'month'. The device 100 may set a generalization level automatically or based on a user input.

According to an exemplary embodiment, if a level of attribute information is higher than or equal to the generalization level, the device 100 may use the attribute information as a keyword without having to generalize the attribute information. For example, if 'September, 2014' is stored as time information included in the attribute information, the device 100 may not generalize the time information into an upper concept, but detect 'September, 2014' as a keyword for the content.

In operations S740 and S750, the device 100 obtains image analysis information about the selected content, and generates a plurality of keywords of the selected content based on the image analysis information.

According to an exemplary embodiment, image analysis information is information obtained by analyzing data obtained by performing image processing on content. For example, the image analysis information may include information about an object that appears on content (for example, a type, a name, or a number of the object, or the like), information about a place that appears in the content, information about a season or time in the content, information about an atmosphere or feeling that appears in the content, or information about a character or a symbol that appears in the content, but is not limited thereto.

According to an exemplary embodiment, the device 100 may detect a boundary of an object which is included in an image. According to an exemplary embodiment, the device 100 may detect a type of an object, a name of an object, or the like, by comparing a boundary of the object included in an image to a predefined template. If the boundary of the object is similar to a template of a vehicle, the object included in the image may be recognized as a vehicle. In this case, the device 100 may generate a keyword 'car, by using information about the object included in the image.

According to an exemplary embodiment, the device 100 may perform face recognition on an object included in the image. For example, the device 100 may detect an area of a face of a person from the selected content. A method of detecting an area of a face may be a knowledge-based method, a feature-based method, a template-matching method, or an appearance-based method, but is not limited thereto.

The device 100 may extract characteristics of the face (for example, shapes of eyes, a nose, or a lip, or the like) from the detected area of the face. Various methods such as a Gabor filer or a local binary pattern (LBP) may be used as a method of extracting characteristics of a face from an area of a face. However, a method of extracting characteristics of a face from an area of a face is not limited thereto.

The device 100 may compare the characteristics of the face, extracted from the area of the face in the selected content, to characteristics of faces of users that are already registered. For example, if the extracted characteristics of the face is similar to characteristics of a face of a first user (for example, Tom) who is already registered, the device 100 may determine that an image of the first user (for example, Tom) is included in the selected content. Then, the device 100 may generate a keyword 'Tom', based on a result of face recognition.

According to an exemplary embodiment, the device 100 may compare an area of the image to a color map (a color histogram), and thus, extract visual characteristics of the image such as color arrangement, a pattern, or an atmosphere of the image as image analysis information. The device 100 may generate a keyword by using the visual characteristics of the image. For example, if the selected content is an image with a sky in a background thereof, the device 100 may detect a keyword 'sky blue' by using visual characteristics of the image with the sky in the background thereof.

Additionally, according to an exemplary embodiment, the device 100 may divide an image in the units of areas, find a cluster that is most similar to each area, and then, detect a keyword connected to the cluster.

According to an exemplary embodiment, the device 100 may perform character recognition on a text image included in the selected content. Optical character recognition (OCR) refers to a technology of converting Korean, English, or number fonts included in an image document into a character code that may be edited by the device 100. For example, the device 100 may detect a keyword such as 'Happy' or 'Birthday' by performing character recognition on a print character image, 'Happy Birthday', included in the content.

In operation S760, the device 100 generates a plurality of folders corresponding to at least two keywords from among the plurality of keywords. Operation S760 corresponds to operation S230 described with reference to FIG. 2. Thus, a description thereof is not provided here again.

An embodiment of obtaining image analysis information about the selected content if attribute information about selected content is not present, the obtaining being performed by the device 100, is described with reference to FIG. 7. However, exemplary embodiments are not limited thereto.

For example, even when attribute information corresponding to selected content is present, the device 100 may further obtain image analysis information about the content. The device 100 may detect a plurality of keywords, by using the attribute information corresponding to the content and the image analysis information about the content together.

According to an exemplary embodiment, the device 100 may compare keywords detected from attribute information about the content to keywords detected from the image analysis information, and thus, detect common keywords. A reliability of the common keywords may be higher than that of uncommon keywords. The reliability refers to an extent to which keywords extracted from content are considered to be appropriate keywords.

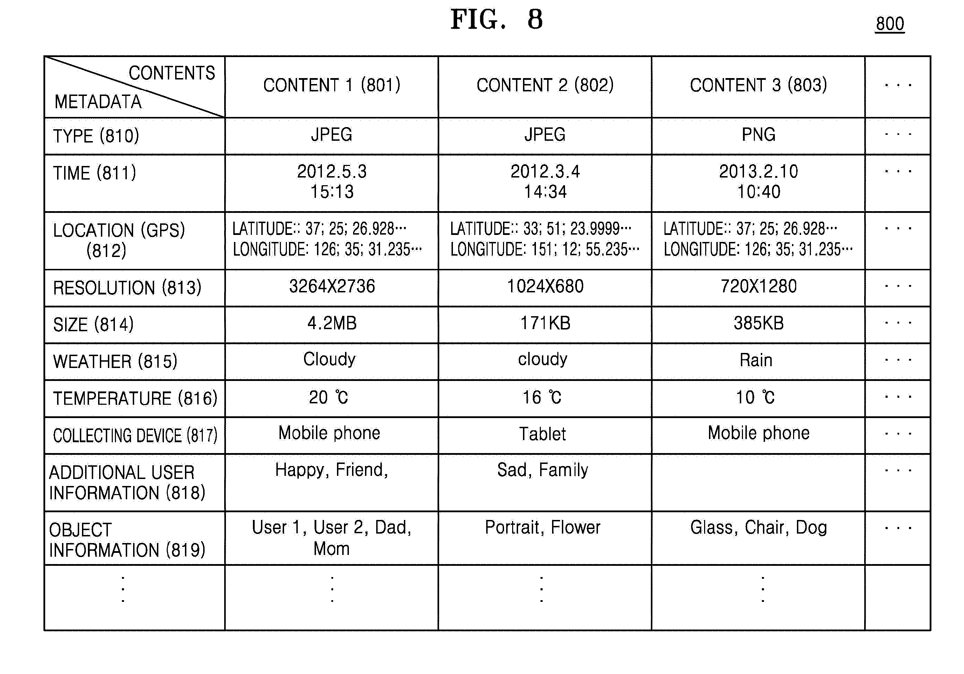

Hereinafter, exemplary embodiments of detecting a plurality of keywords, which is performed by the device 100, are described in detail with reference to FIGS. 8 through 10.

FIG. 8 is a diagram showing metadata 800 that includes attribute information of content, according to an exemplary embodiment.

As shown in FIG. 8, attribute information about content may be stored in the form of the metadata 800. For example, information such as a type 810, a time 811, a location (GPS) 812, a resolution 813, a size 814, and a content-collecting device 817 may be stored as attribute information according to content.

According to an exemplary embodiment, context information obtained when content is generated may also be stored in the form of the metadata 800. For example, if the device 100 generates first through third content 801 through 803, the device 100 may collect weather information (for example, cloudy), temperature information (for example, 20°C), or the like from a weather application when the first through third content 801 through 803 is generated. Additionally, the device 100 may store weather information 815 and temperature information 816 as attribute information about the first through third content 801 through 803. The device 100 may also collect event information from a schedule application when the first through third content 801 through 803 is generated. In this case, the device 100 may store the event information (not shown) as attribute information about the first through third content 801 through 803.

According to an exemplary embodiment, additional user information 818 input by a user may be stored in the form of the metadata 800. For example, the additional user information 818 may include annotation information that a user inputs to explain content, title information defined by a user, a highlight added by a user, or the like.

According to an exemplary embodiment, the device 100 may store image analysis information (for example, object information 819, character recognition information, or the like), obtained as a result of performing image processing on content, in the form of the metadata 800. For example, the device 100 may store information about objects included in the first through third content 801 through 803 (for example, User 1, User 2, Dad, or Mom) as attribute information about the first through third content 801 through 803.

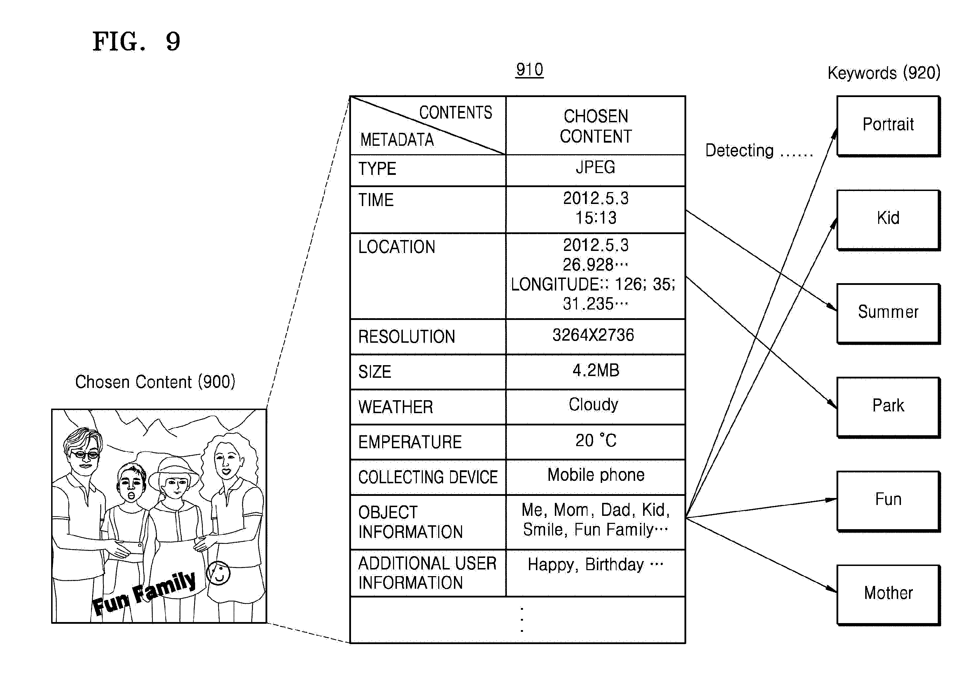

FIG. 9 is a diagram showing a process of obtaining a plurality of keywords by using metadata of content, which is performed by the device 100, according to an exemplary embodiment.

According to an exemplary embodiment, the device 100 may select a family picture 900 as reference content for generating a dynamic folder, based on a user input. The device 100 may identify attribute information 910 about the selected family picture 900. The device 100 may detect a plurality of keywords 920, by using the attribute information 910 about the family picture 900.

For example, the device 100 may detect a keyword, 'Summer,' by using time information (for example, 2012.5.3.15:13), detect a keyword, 'Park,' by using location information (for example, latitude: 37; 25; 26.928..., longitude: 126; 35; 31.235...), and detect keywords, 'Portrait', 'kid', 'Fun', and 'Mother,' by using object information (for example, Me, Mom, Dad, Kid, Smile, Fun Family...).

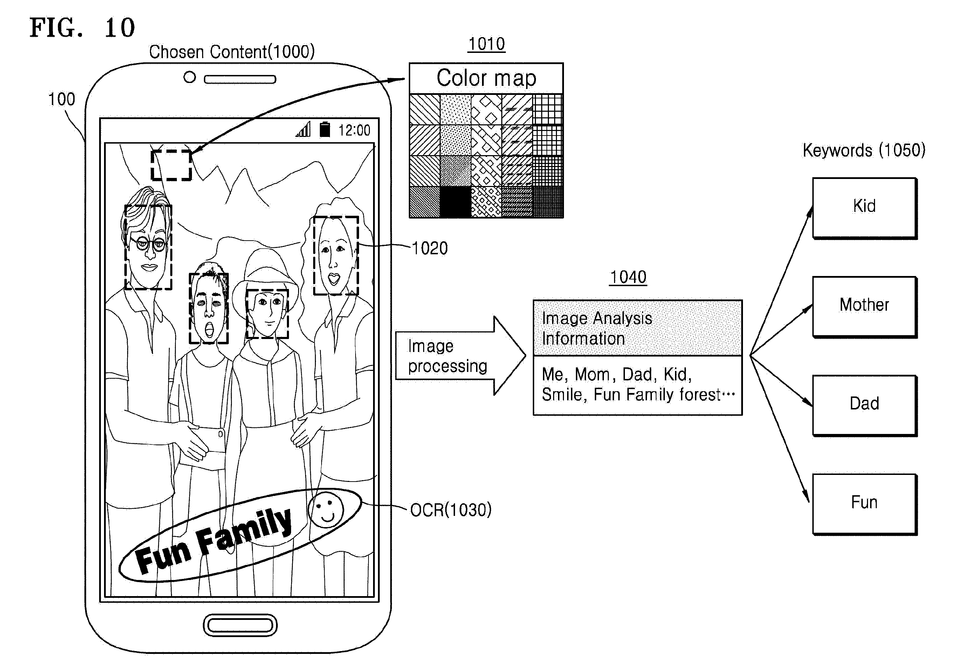

FIG. 10 is a diagram showing a process of detecting a plurality of keywords by using image analysis information about content, which is performed by the device 100, according to an exemplary embodiment.

According to an exemplary embodiment, the device 100 may select a family picture 1000 as reference content for generating a dynamic folder, based on a user input. The device 100 may obtain image analysis attribute information 1040 about the family picture 1000. For example, the device 100 may compare an area of the family picture 1000 to a color map 1010, and thus, extract visual characteristics of the family picture 1000, such as color arrangement, a pattern, or an atmosphere of the family picture 1000, as the image analysis information 1040 (for example, forest).

The device 100 may detect an area 1020 of a face of a person from the family picture 1000. Additionally, the device 100 may extract characteristics of the face from the detected area 1020 of the face. The device 100 may compare the extracted characteristics of the face to characteristics of faces of users that are already registered, and thus, detect the users included in the family picture 1000 (for example, Me, Mom, Dad, Kid, and the like).

The device 100 may perform object character recognition (OCR) 1030 on a print character image included in the family picture 1000. For example, the device 100 may obtain the image analysis information 1040 such as 'Fun', 'Family', 'smile', and the like, by performing OCR on a print character image, 'Fun Family ☺' included in the family picture 1000.

The device 100 may detect a plurality of keywords 1050 by using the image analysis information 1040 about the family picture 100. For example, the device 100 may detect keywords such as 'Kid', 'Mother', 'Dad', and 'Fun' from the image analysis information 1040 about the family picture 100.

Hereinafter, a method of classifying a plurality of pieces of content according to a keyword corresponding to a folder, which is performed by the device 100, is described in detail with reference to FIG. 11.

FIG. 11 is a flowchart of a method of classifying a plurality of pieces of content, which is performed by the device 100, according to an exemplary embodiment.

In operation S1105, the device 100 generates a plurality of folders based on selected content. For example, the device 100 may obtain a plurality of keywords for describing the selected content, and generate a plurality of folders corresponding to at least two keywords from among the plurality of keywords. Operation S1105 corresponds to operation S230. Thus, a description thereof is provided here again.

According to an exemplary embodiment, if keywords are predefined respectively for a plurality of a piece of content, keywords respectively corresponding to the plurality of folders and keywords respectively defined for the plurality of pieces of content may be compared to each other, and thus, the plurality of pieces of content may be classified.

In operation S1110, the device 100 determines whether a keyword is defined for nth content. For example, the device 100 may determine whether keywords are defined for metadata of first content. In response to the device 100 determining that the keyword is defined for the nth content, the device 100 continues in operation S1115. Otherwise, the device 100 continues in operation S1120.

In operation S1115, the device 100 detects a similarity between keywords corresponding to an ith folder and the keyword for the nth content. For example, the device 100 may detect a similarity between the keywords corresponding to a first folder and the keywords of the first content by comparing the keyword corresponding to the first folder to the keyword for the first content. According to an exemplary embodiment, a similarity may be expressed as a real number in a range from 1 to 0, but is not limited thereto.

According to an exemplary embodiment, the device 100 may measure a semantic similarity or a semantic relatedness (for example, a lexical similarity or a structural similarity) between keywords, by using an ontology, a knowledge base such as Wordnet, and/or group intelligence such as Wikipedia. For example, the device 100 may 1) calculate a similarity as 1 if there is a synonymous relation between a first keyword corresponding to a first folder and a second keyword included in the first content, 2) calculate a similarity as 0.95 if there is an analogous relation therebetween, 3) calculate a similarity as 0.9 if there is a superior/subordinate relation therebetween, 4) calculate a similarity as 0.85 if the first keyword corresponding to the first folder and the second keyword included in the first content belong to a same category, and 5) calculate a similarity as 0.1 if there is an antonymous relation between the first keyword corresponding to the first folder and the second keyword included in the first content.

In operation S1125, the device 100 determines whether the similarity between the keywords corresponding to the ith folder and the keyword for the nth content is greater than a threshold value (for example, 0.9). If the similarity therebetween is not greater than the threshold value, the device 100 may not match the ith folder with the nth content. For example, if a keyword corresponding to the first folder is 'family' but a word whose similarity with 'family' has a value greater than 0.9 is not present, the first content may not match the first folder. That is, in response to the device 100 determining that the similarity is greater than the threshold value, the device 100 continues in operation S1130. Otherwise, the device 100 continues in operation S1135.

In operation S1130, the device 100 matches the ith folder with the nth content. For example, if a keyword corresponding to the first folder is 'family' and 'family' is also present in keywords predefined for the first content, the device 100 may match the first content with the first folder.

According to an exemplary embodiment, if a keyword is not predefined for each of the plurality of content, the device 100 may compare keywords respectively corresponding to the plurality of folders to each attribute information about the plurality of pieces of content.

In operation S1120, the device 100 detects a similarity between the keywords corresponding to the ith folder and the attribute information about the nth content.

According to an exemplary embodiment, the device 100 may extract keywords, which may be compared to each other, from attribute information (metadata) about each content by using a morpheme analyzer. The extracted keywords may be a class or an instance that is present in an ontology.

According to an exemplary embodiment, the device 100 may detect a similarity between the keyword corresponding to the ith folder and the attribute information about the nth content by comparing the keyword corresponding to the ith folder to the attribute information about the nth content. A similarity may be measured in consideration of structural relatedness and a semantic relationship. According to an exemplary embodiment, a similarity may be expressed as a real number in a range from 1 to 0, but is not limited thereto.

For example, the device 100 may 1) calculate a similarity as 1 if there is a synonymous relation between the first keyword corresponding to the first folder and the second keyword extracted from the attribute information about the first content, 2) calculate a similarity as 0.95 if there is an analogous relation therebetween, 3) calculate a similarity as 0.9 if there is a superior/subordinate relation therebetween, 4) calculate a similarity as 0.85 if the first keyword corresponding to the first folder and the second keyword extracted from the attribute information about the first content belong to a same category, and 5) calculate a similarity as 0.1 if there is an antonymous relation between the first keyword corresponding to the first folder and the second keyword extracted from the attribute information about the first content

In operation S1135, the device 100 determines whether the nth content is last content. In response to the device 100 determining that the nth content is not the last content, the device 100 continues in operation S1140. Otherwise, the device 100 continues in operation S1145.

In operation S1140, the device 100 increments n by 1 to determine whether n+1th content matches the ith folder. For example, the device 100 may determine whether the first folder matches the first content, determine whether the first folder matches second content, and then, determine whether the first folder matches third content. The device 100 returns to operation S1110.

In operation S1145, the device 100 determines whether the ith folder is a last folder. In response to the device 100 determining that the ith folder is not the last folder, the device 100 continues in operation S1150. Otherwise, the device 100 continues in operation S1155.

In operation S1150, the device 100 increments i by 1 and sets n to 1, to determine whether an i+1th folder matches the nth content. The device 100 returns to operation S1110.

For example, if the first content, the second content, and the third content are stored in the device 100 and the first folder and the second folder are generated, the device 100 may determine whether the first folder matches the first content, determine whether the first folder matches second content, and then, determine whether the first folder matches third content. Because the third content is last content and the first folder is not a last folder, the device 100 may determine whether the second folder matches the first content, whether the second folder matches the second content, and whether the second folder matches the third content.

If the classifying of the plurality of pieces of content is finished, in operation S1155, the device 100 displays a plurality of folders.

According to an exemplary embodiment, the device 100 may determine an order in which the plurality of folders are arranged, based on an order in which keywords corresponding to the plurality of folders are detected. Additionally, according to an exemplary embodiment, the device 100 may determine sizes of the plurality of folders in various ways. For example, the device 100 may adjust a size of each folder differently according to an accuracy rate for each keyword corresponding to each folder (refer to FIG. 23).

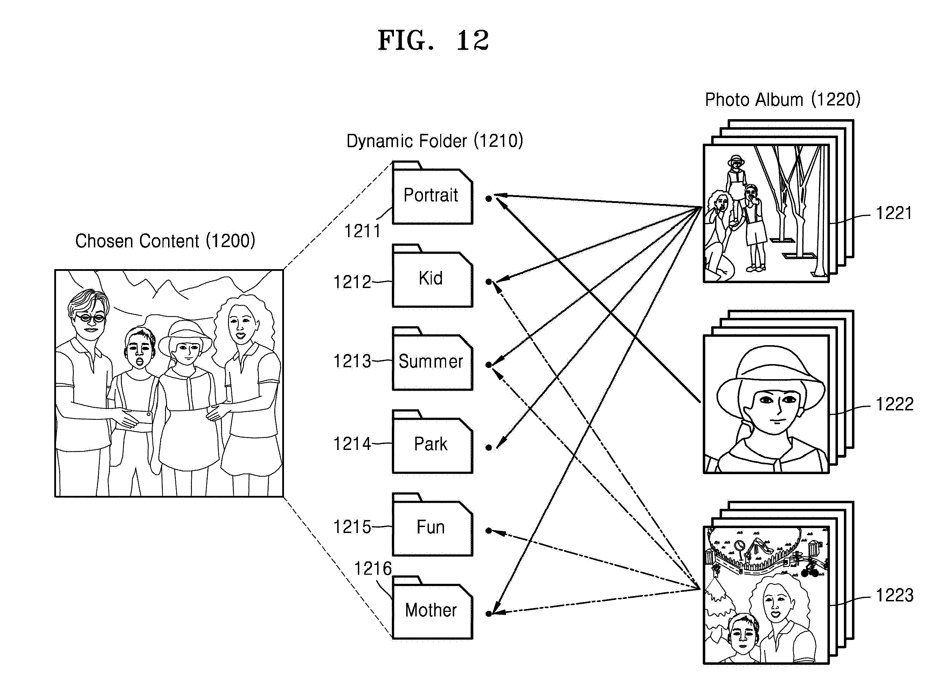

According to an exemplary embodiment, the device 100 may display each folder name of the plurality of folders (for example, keywords respectively corresponding to folders) on each folder. Hereinafter, an embodiment of classifying a plurality of pieces of content according to keywords respectively corresponding to folders, which is performed by the device 100, is described in detail with reference to FIG. 12.

FIG. 12 is a diagram showing a process of classifying and matching each of a plurality of pieces of content with a corresponding folder, which is performed by the device 100, according to an exemplary embodiment.

According to an exemplary embodiment, the device 100 may select a family picture 1200 as reference content for generating a dynamic folder, based on a user input. The device 100 may obtain a plurality of keywords (for example, Portrait, Kid, Summer, Park, Fun, and Mother) for describing the family picture 1200, and generate a plurality of folders 1210 corresponding to the plurality of keywords.

According to an exemplary embodiment, the device 100 may determine whether the plurality of folders 1210 match content stored in a photo album 1220. For example, if words identical/similar to Portrait, Kid, Summer, Park, and Mother are present in attribute information about (or predefined keywords for) a first image 1221, the device 100 may match the first image 1221 respectively with a Portrait folder 1211, a Kid folder 1212, a Summer folder 1213, a Park folder 1214, and a Mother folder 1216. Then, the device 100 may store the link information about the first image 1221 respectively in the Kid folder 1212, the Summer folder 1213, the Park folder 1214, and the Mother folder 1216.

Because a second image 1222 is a photo image of a user, if a word (for example, me or a user name) identical/similar to Portrait is present in attribute information about (or a predefined keyword for) the second image 1222, the device 100 may match the second image 1222 with the Portrait 1211. Then, the device 100 may store link information about the second image 1222 in the Portrait folder 1211.

If words identical/similar to Kid, Summer, Fun, and Mother are present in attribute information about (or a predefined keyword for) the third image 1223, the device 100 may match the third image 1223 respectively with the Kid folder 1212, the Summer folder 1213, a Fun folder 1215, and the Mother folder 1216. Then, the device 100 may store link information about the third image 1223 in the Kid folder 1212, the Summer folder 1213, the Fun folder 1214, and the Mother folder 1216.

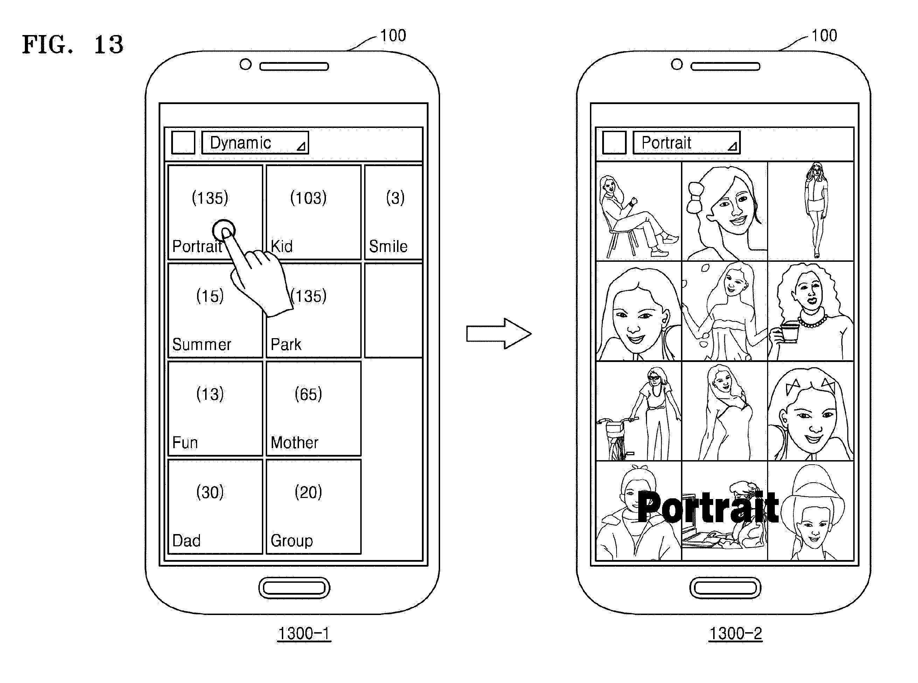

FIG. 13 is a diagram showing a process of displaying a plurality of folders, which is performed by the device 100, according to an exemplary embodiment.

Referring to 1300-1 shown in FIG. 13, if classifying of a plurality of pieces of content is finished based on selected content, the device 100 may display a plurality of folders. According to an exemplary embodiment, the device 100 may display a number of pieces of content included in a folder, a name of the folder (for example, a keyword corresponding to the folder), or the like on the folder. The device 100 may receive an input of selecting a Portrait folder 1300 from among the plurality of folders.

Referring to 1300-2 shown in FIG. 13, the device 100 may display at least one piece of content stored in the Portrait folder 1300, in response to the input of selecting the Portrait folder 1300.

According to an exemplary embodiment, the device 100 may arrange at least one piece of content included in the Portrait folder 1300, based on the at least one selected from the group consisting of information about time when the at least one piece of content is generated, information about a location where the at least one piece of content is generated, information about a capacity of the at least one piece of content, and information about a resolution of the at least one piece of content.

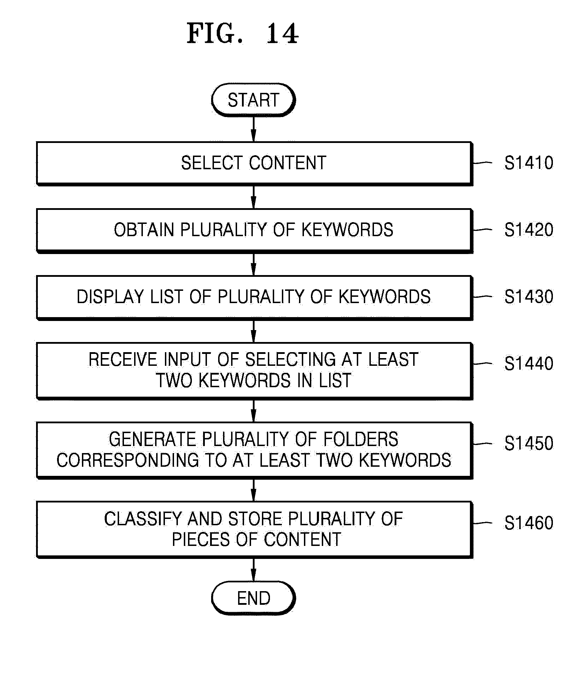

FIG. 14 is a flowchart of a method of providing a list of a plurality of keywords, which is performed by the device 100, according to an exemplary embodiment.

In operation S1410, the device 100 selects a piece of content from among a plurality of pieces of content. According to an exemplary embodiment, the device 100 may select a piece of content based on a user input. For example, the device 100 may receive a user input of selecting one piece of content.

In operation S1420, the device 100 obtains a plurality of keywords for describing the selected piece of content. According to an exemplary embodiment, a plurality of keywords may be at least two key words or phrases for expressing the selected one piece of content.

For example, if a plurality of keywords are predefined for metadata of the selected one piece of content, the device 100 may identify the plurality of keywords in the metadata of the selected one piece of content. Additionally, the device 100 may detect a plurality of keywords for describing content, by using at least one selected from the group consisting of attribute information of the selected one piece of content and image analysis information about the selected one piece of content.

Operations S1410 and S1420 correspond to operations S210 and S220 described with reference to FIG. 2. Thus, a description thereof is not provided here again.

In operation S1430, the device 100 displays a list of the plurality of keywords. In this case, a user may identify a list of the plurality of keywords detected from the selected one piece of content.

According to an exemplary embodiment, the device 100 may arrange a list of a plurality of keywords according to an order in which the plurality of keywords are detected. The order in which the plurality of keywords are detected may be determined based on at least one selected from the group consisting of information about an accuracy rate for a keywords and information about a user's preference for folders.

An operation of determining an order in which a plurality of keywords are detected, which is performed by the device 100, will be described in detail later with reference to FIG. 19.

In operation S1440, the device 100 receives an input of selecting at least two keywords in the list of the plurality of keywords. According to an exemplary embodiment, the device 100 may receive an input of selecting all the plurality of keywords or selecting one or more keywords from among the plurality of keywords.

According to an exemplary embodiment, a user input of selecting a keyword may be varied. For example, a user input may be at least one selected form the group consisting of a key input, a touch input, a motion input, a bending input, a voice input, and a multiple input.

In operation S1450, the device 100 generates a plurality of folders respectively corresponding to the selected at least two keywords.

According to an exemplary embodiment, the device 100 may use a keyword corresponding to a folder as a name of the folder. For example, if keywords such as 'person', 'group, 'indoor', and 'dog' are selected, names of folders respectively corresponding to the keywords may be 'person', 'group', 'indoor', and 'dog'.

In operation S1460, the device 100 classifies and stores the plurality of pieces of content in the respectively corresponding folders based on the keywords respectively corresponding to the folders. According to an exemplary embodiment, the device 100 may classify the plurality of pieces of content, by matching each of the plurality pieces of content with a corresponding folder of the plurality of folders by using a result obtained by comparing keywords respectively corresponding to the plurality of folders to respective keywords of (or respective attribute information about) the plurality of pieces of content.

According to an exemplary embodiment, storing of a plurality of pieces of content in folders respectively corresponding thereto may refer to storing link information indicating respective locations in which each of the plurality of pieces of content is stored in a corresponding folder, or changing a location where each of the plurality of pieces of content is stored to the corresponding folder. Operations S1460 corresponds to S240 described with reference to FIG. 2. Thus, a description thereof is not provided here again.

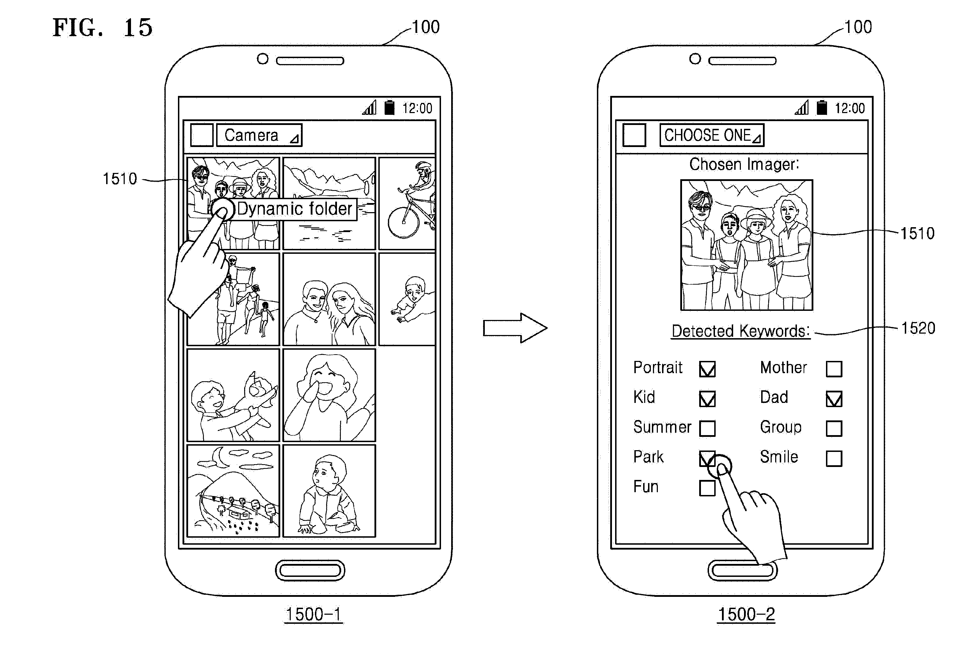

FIG. 15 is a diagram showing a process of displaying a list of a plurality of keywords corresponding to selected content, which is performed by the device 100, according to an exemplary embodiment.

Referring to 1500-1 shown in FIG. 15, the device 100 may select a family picture 1510 as reference content for generating a dynamic folder, based on a user input.

According to an exemplary embodiment, the device 100 may obtain a plurality of keywords for describing the family picture 1510. For example, the device 100 may obtain keywords such as Portrait, Mother, Kid, Dad, Summer, Group, Park, Smile, and Fun.

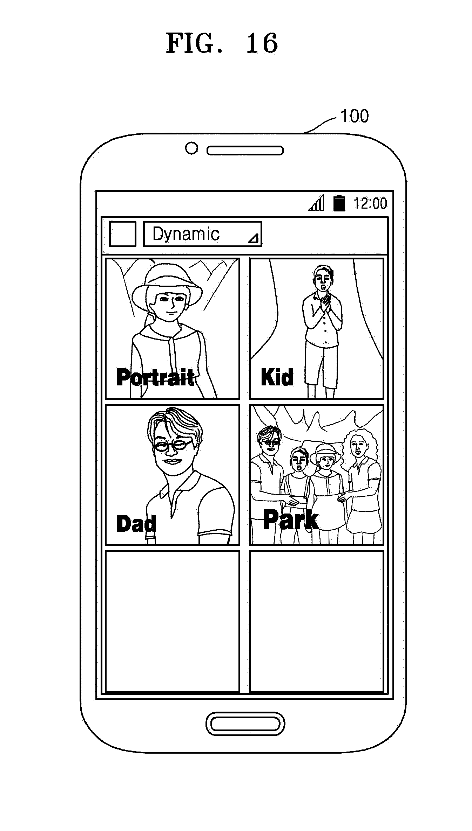

Referring to 1500-2 shown in FIG. 15, the device 100 may display a list 1520 of the obtained plurality of keywords. Then, the device 100 may receive a user input of selecting one or more keywords in the list 1520 of the plurality of keywords. For example, the device 100 may receive a user input of selecting Portrait, Kid, Dad, and Park. The device 100 may generate a plurality of folders corresponding to the keywords selected by a user (for example, Portrait, Kid, Dad, and Park). This is described with reference to FIG. 16.

FIG. 16 is a diagram showing a process of displaying folders corresponding one or more keywords selected by a user, which is performed by the device 100, according to an exemplary embodiment.

As shown in FIG. 16, the device 100 may generate a plurality of folders corresponding to keywords (for example, Portrait, Kid, Dad, and Park) selected by a user, from among a plurality of obtained keywords (for example, Portrait, Mother, Kid, Dad, Summer, Group, Park, Smile, and Fun).

The device 100 may classify a plurality of pieces of content according to keywords respectively corresponding to the generated plurality of folders (for example, a Portrait folder, a Kid folder, a Dad folder, and a Park folder). If the classifying of the plurality of pieces of content is finished, the device 100 may display a plurality of folders (for example, the Portrait folder, the Kid folder, the Dad folder, and the Park folder).

According to an exemplary embodiment, a user may identify keywords generated based on content selected by the user, and select one or more keywords that the user wants to generate as a folder.

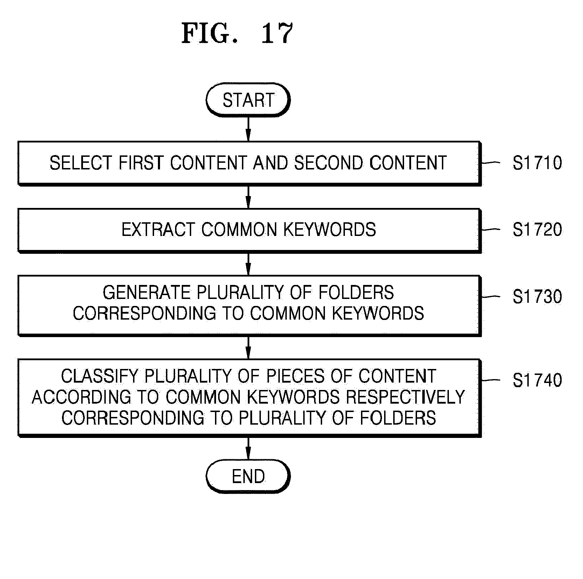

FIG. 17 is a flowchart of a method of classifying a plurality of pieces of content based on common keywords, which is performed by the device 100, according to an exemplary embodiment.

In operation S1710, the device 100 selects at least two pieces of content (hereinafter, referred to as 'first content' and 'second content') from among a plurality of pieces of content, base on a user input. For example, the device 100 may receive a user input of selecting first content and second content.

In operation S1720, the device 100 extracts keywords in common between a plurality of first keywords for describing the first content and a plurality of second keywords for describing the second content (hereinafter, referred to as 'common keywords').

For example, if the plurality of first keywords are defined for metadata of the first content, the device 100 may identify the plurality of first keywords in the metadata of the first content. Additionally, the device 100 may detect the plurality of first keywords for describing the first content, by using at least one selected from the group consisting of attribute information about the first content and image analysis information about the first content.

If a plurality of second keywords are defined for metadata of the second content, the device 100 may identify the plurality of second keywords in the metadata of the second content. Additionally, the device 100 may detect the plurality of second keywords for describing the second content, by using at least one selected from the group consisting of attribute information about the second content and image analysis information about the second content.

According to an exemplary embodiment, the device 100 may compare the plurality of first keywords for describing the first content to the plurality of second keywords for describing the second content, and detect common keywords between the plurality of first keywords and the plurality of second keywords.

In operation S1730, the device 100 generates a plurality of folders respectively corresponding to the common keywords.

According to an exemplary embodiment, the device 100 may generate a plurality of folders respectively corresponding to the common keywords, or generate a plurality of folders respectively corresponding to one or more keywords from among the common keywords.

According to an exemplary embodiment, the device 100 may use a common keyword corresponding to a folder as a name of the folder. For example, if common keywords such as 'person', 'group, 'indoor', and 'dog' are selected, names of folders respectively corresponding to the common keywords may be 'person', 'group', 'indoor', and 'dog'.

In operation S1740, the device 100 classifies the plurality of pieces of content according to the common keywords respectively corresponding to the plurality of folders, and stores each of the plurality of pieces of content in a corresponding folder of the plurality of folders.

According to an exemplary embodiment, the device 100 may classify the plurality of pieces of content, by matching the plurality of pieces of content with folders respectively corresponding thereto by using a result obtained by comparing common keywords respectively corresponding to the plurality of folders to respective keyword for (or attribute information about) the plurality of pieces of content.

According to an exemplary embodiment, the device 100 may store link information indicating a location where the matched content is stored in a corresponding folder, or move the matched content to the corresponding folder. Operations S1740 corresponds to S240 described with reference to FIG. 2. Thus, a description thereof is not provided here again.

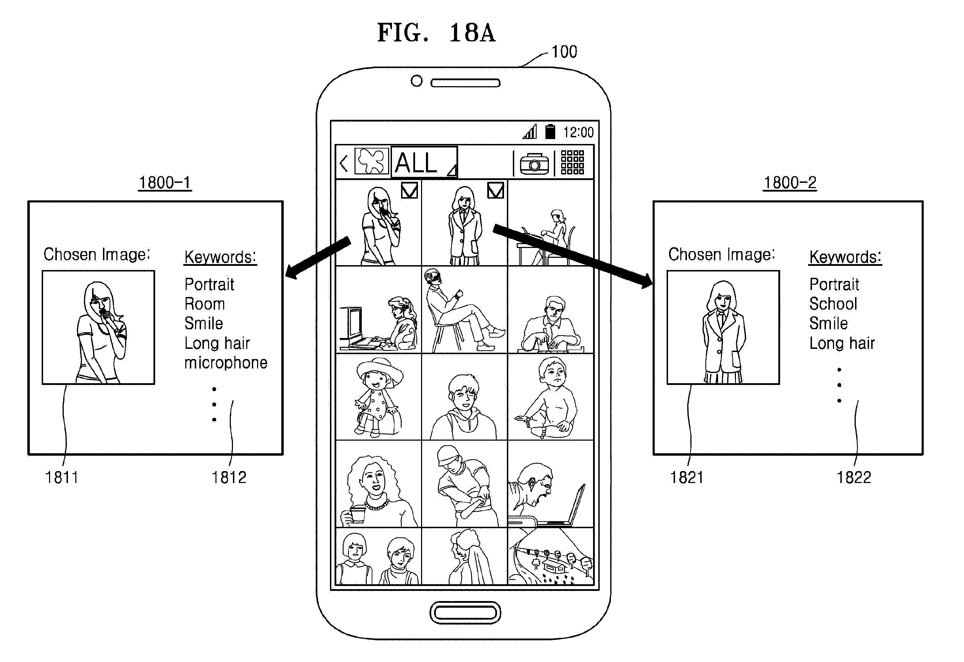

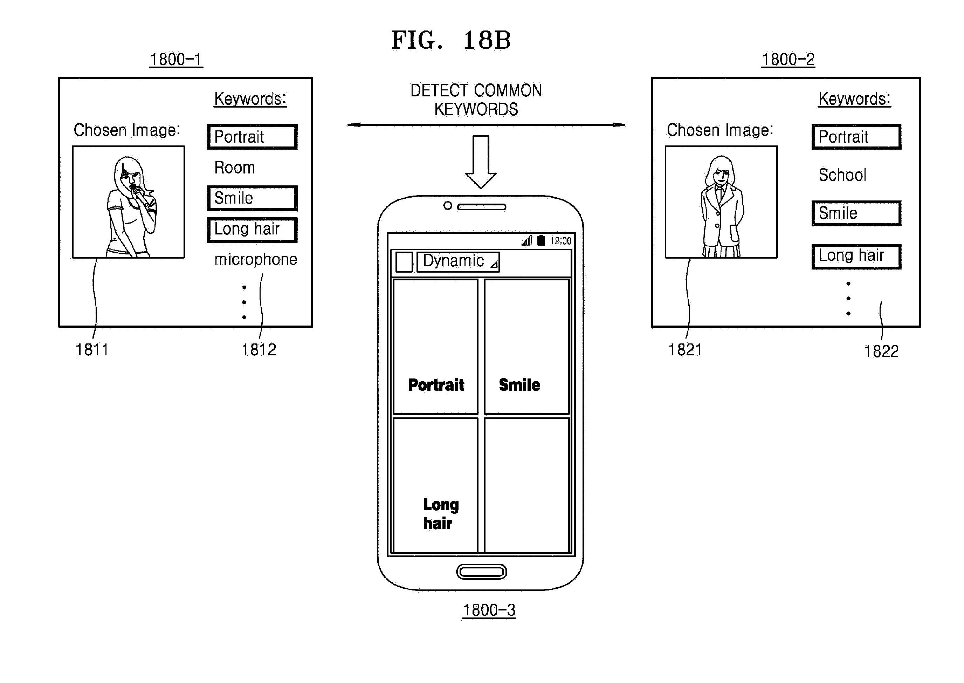

FIG. 18A is a diagram showing a process of selecting at least two pieces of content, and FIG. 18B is a diagram showing a process of detecting a common keyword between the selected at least two pieces of content, according to an exemplary embodiment.

Referring to 1800-1 and 1800-2 in FIG. 18A, the device 100 may receive an input of selecting first content 1811 and second content 1821, from among a plurality of pieces of content, from a first user.

The device 100 may obtain a plurality of first keywords 1812 for describing the first content 1811. For example, because the first content 1811 is a photo image of a first user who has long hair and is holding a microphone and singing a song with a smile in a room, the plurality of first keywords 1812 such as 'Portrait', 'Room', 'Smile', 'Long hair', and 'microphone' may be detected in 1800-1.

Additionally, the device 100 may obtain a plurality of second words 1822 for describing the second content 1821. For example, because the second content 1821 is a photo image of the first user who has long hair and is smiling at school, a plurality of second keywords 1822 such as 'Portrait', 'School', 'Smile', and 'Long hair' may be detected in 1800-2.

Referring to FIG. 18B, the device 100 may detect common keywords between the plurality of first keyword 1812 and the plurality of second keywords 1822. Because the plurality of first keywords 1812 are 'Portrait', 'Room', 'Smile', 'Long hair', and 'microphone', and the plurality of second keywords 1822 are 'Portrait', 'School', 'Smile', and 'Long hair', the device 100 may detect 'Portrait', 'Smile', and 'Long hair' as the common keywords.

According to an exemplary embodiment, the device 100 may generate a plurality of folders corresponding to the detected common keywords in 1800-3. For example, the device 100 may generate a 'Portrait' folder, a 'Smile' folder, and a 'Long' hair folder.

The device 100 may compare keywords corresponding to a plurality of folders to keywords for (attribute information about) a plurality of pieces of content stored in the device 100, and thus, classify the plurality of pieces of content into the plurality of folders.

An example of selecting two pieces of content is described with reference to FIGS. 18A and 18B. However, exemplary embodiments are not limited thereto, and three or more pieces of content may be selected. In this case, the device 100 may generate a plurality of folders by using common keywords between the three or more pieces of content.

Hereinafter, an operation of determining an order in which a plurality of keywords are detected, the determining being performed by the device 100, is described in detail with reference to FIG. 19.

FIG. 19 is a flowchart of a method of determining an order in which a plurality of keywords are detected, according to an accuracy rate, the determining being performed by the device 100, according to an exemplary embodiment.

In operation S1910, the device 100 selects a piece of content from among a plurality of pieces of content. According to an exemplary embodiment, the device 100 may select one piece of content based on a user input. For example, the device 100 may receive a user input of selecting one piece of content.

In operation S1920, the device 100 defines a plurality of keywords for describing the selected piece of content. For example, if a plurality of keywords are predefined for metadata of the selected one piece of content, the device 100 may identify the plurality of keywords in the metadata of the selected one piece of content. Additionally, the device 100 may detect a plurality of keywords for describing the selected one piece of content, by using at least one selected from the group consisting of attribute information of the selected one piece of content and image analysis information about the selected piece of content.

Operations S1910 and S1920 correspond to operations S210 and S220 described with reference to FIG. 2. Thus, a description thereof is not provided here again.

In operation S1930, the device 100 detects respective accuracy rates for the plurality of keywords. According to an exemplary embodiment, each accuracy rate for the plurality of keywords may refer to an accuracy probability indicating an extent to which keywords related to content may reflect a description about the content.

According to an exemplary embodiment, the device 100 may calculate an accuracy rate for keywords detected from newly selected content, by using information about an accuracy rate for keywords for a set of standard content.

For example, an accuracy rate may be calculated by using a method described below, but is not limited thereto. A case in which content is an image is described as an example. A training set T, which is a set of standard images that are connected to keywords in advance, is needed to calculate an accuracy rate. The device 100 calculates a similarity FeatureSimilarity($I_{new}$, Ii) of visual characteristics between a new image $I_{new}$ and each standard image $I_i$ that belongs to the training set T. FeatureSimilarity($I_{new}$, $I_i$) has a value in a range from 0 to 1. If FeatureSimilarity($I_{new}$, $I_i$) is close to 1, this indicates that two images have similar visual characteristics. The device 100 may calculate an accuracy rate $I_{new}.Accuracy_{kw}$ for a keyword kw, which belongs to a set W of all keywords, in a new image $I_{new}$ by using Equation 1 shown below:

$$I_{new.}Accuracy_{kw} = \frac{\sum_{I_i \in T}(FeatureSimilarity(I_{new}, I_i) \times I_{i.}Accuracy_{kw})}{\sum_{I_i \in T} FeatureSimilarity(I_{new}, I_i)} \quad (1)$$

Because all images may have a maximum of M keywords, the device 100 may select M keywords having based on an accuracy rate, and set the selected M keywords as a set of keywords for the new image $I_{new}$ If an accuracy rate for one or more keywords from among the selected M keywords is smaller than a minimum threshold value, the device 100 may delete the one or more keywords from the set of the keywords of the image $I_{new}$

According to an exemplary embodiment, the device 100 may also calculate an accuracy rate for keywords, by applying relevance feedback for standard images. Relevance feedback is a method of receiving an evaluation about an accuracy rate for keywords, which were initially detected, from a user, determining characteristics of data that the user wants, and then, providing accurate detection of keywords. For example, the device 100 may increase an accuracy rate for keywords that were positively evaluated by a user, and decrease an accuracy rate for keywords that were negatively evaluated by the user.

In operation S1940, the device 100 determines an order in which the plurality of keywords are detected, according to the accuracy rates. For example, if a keyword has a high accuracy rate, the keyword may be detected early in an order in which keywords are detected.

According to an exemplary embodiment, if a number of keywords to be detected is predetermined, the device 100 may detect keywords in correspondence with the predetermined number according to an accuracy rate. For example, the device 100 may detect 5 keywords with a high accuracy rate.

According to an exemplary embodiment, a plurality of detected keywords may be arranged according to an order of accuracy rates. A user may select one or more keywords for generating a dynamic folder, from among the plurality of detected keywords.

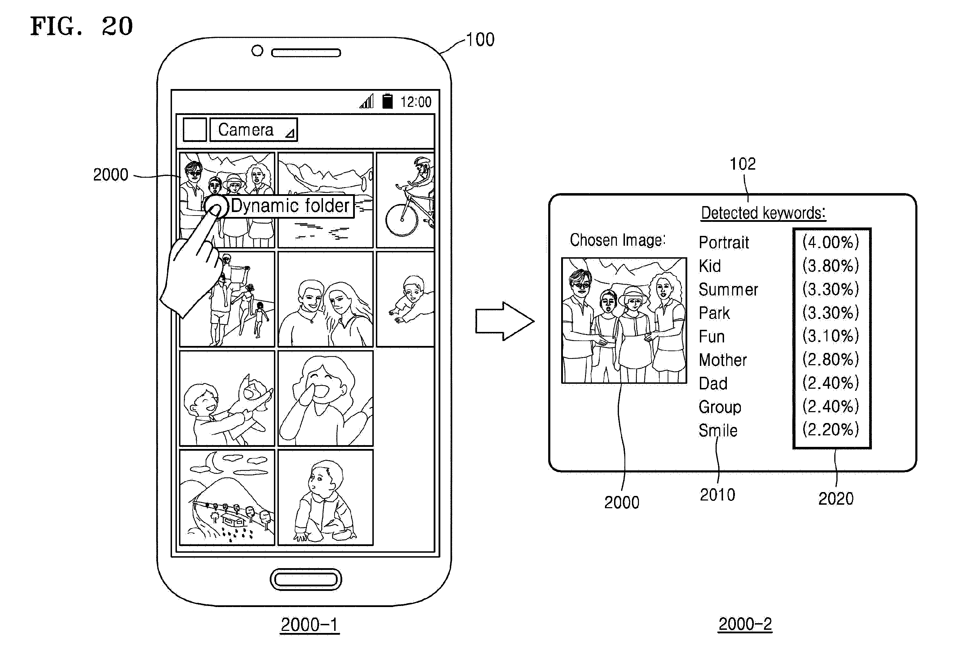

FIG. 20 is a diagram showing a process of determining an order in which a plurality of keywords are detected, according to an accuracy rate, which is performed by the device 100.

Referring to 2000-1 shown in FIG. 20, the device 100 may select a family picture 2000 as reference content for generating a dynamic folder, based on a user input. According to an exemplary embodiment, the device 100 may obtain a plurality of keywords for describing the family picture 2000. For example, the device 100 may obtain keywords such as Portrait, Kid, Summer, Park, Fun, Mother, Dad, Group, Smile, and the like.

Referring to 2000-2 shown in FIG. 20, the device 100 may calculate an accuracy rate 2020 for keywords 2010 (for example, Portrait, Kid, Summer, Park, Fun, Mother, Dad, Group, and Smile) detected from the family picture 2000, by using information about an accuracy rate for keywords for standard content similar to the family picture 2000. For example, an accuracy rate for Portrait may be 4.00%, an accuracy rate for Kid may be 3.80%, accuracy rates for Summer and Park may be respectively 3.30%, an accuracy rate for Fun may be 3.10%, an accuracy rate for Mother may be 2.80%, accuracy rates for Dad and Group may be respectively 2.40%, and an accuracy rate for Smile may be 2.20%.

The device 100 may determine an order in which the keywords are detected, based on each accuracy rate for the keywords (for example, Portrait, Mother, Kid, Dad, Summer, Group, Park, Smile, and Fun). For example, an order in which the keywords are detected may be determined according to an order from Portrait, Kid, Summer, Park, Fun, Mother, Dad, Group, to Smile, based on the accuracy rate.

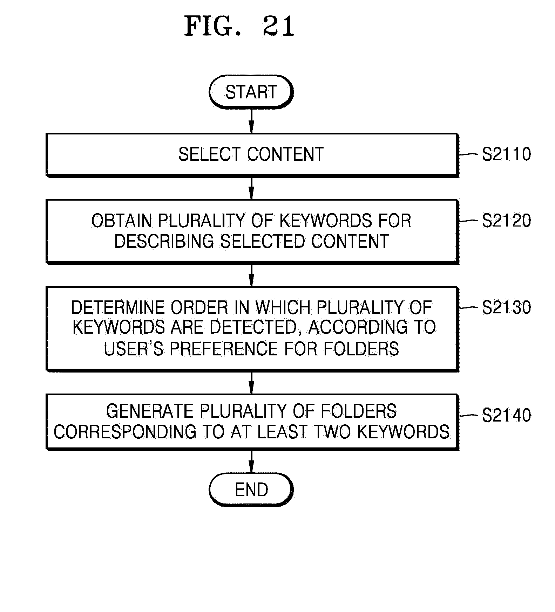

FIG. 21 is a flowchart of a method of determining an order in which a plurality of keywords are detected, according to information about a user's preference for folders, the determining being performed by the device 100 according to an exemplary embodiment.

In operation S2110, the device 100 selects a piece of content from among a plurality of pieces of content. According to an exemplary embodiment, the device 100 may select one piece of content based on a user input. For example, the device 100 may receive a user input of selecting one piece of content.

In operation S2120, the device 100 obtains a plurality of keywords for describing the selected piece of content. For example, if a plurality of keywords are predefined for metadata of the selected one piece of content, the device 100 may identify the plurality of keywords in the metadata of the selected one piece of content. Additionally, the device 100 may detect a plurality of keywords for describing the selected one piece of content, by using at least one selected from the group consisting of attribute information of the selected one piece of content and image analysis information about the selected one piece of content.

Operations S2110 and S2120 correspond to operations S210 and S220 described with reference to FIG. 2. Thus, a description thereof is not provided here again.

In operation S2130, the device 100 determines an order in which the plurality of keywords are detected, according to information about a user's preference for folders. Information about a preference for folders, described herein, may refer to information about a type of a folder which a user prefers, from among a plurality of folders into which content is classified.

According to an exemplary embodiment, the device 100 may infer information about types of folders which a user prefers, by using at least one selected from the group consisting of information about a folder usage history of the user (for example, information about a number of times a type of folder is used, or the like), information about keywords selected by the user, and information about content collected by the user (for example, a type of the content, information about an object included in the content, or the like). For example, if a user mainly collects content that includes photos of people, and a usage rate for folders corresponding to keywords related to an object (for example, a person or an animal) included in the content is high, the device 100 may determine an order in which keywords related to the object are detected so that the keywords related to the objects are detected early.

According to an exemplary embodiment, if a number of keywords that are to be detected is predetermined, the device 100 may detect keywords in correspondence with the predetermined number, according to information about a user's preference for folders. For example, if the number of the predetermined keywords to be detected is 5, the device 100 may detect 5 keywords having a high user preference for folders, with reference to the information about the user's preference for folders.

According to an exemplary embodiment, a plurality of detected keywords may be arranged in consideration of information about a user's preference for folders. The user may select one or more keywords for generating a dynamic folder, from among the plurality of detected keywords.

In operation S2140, the device 100 generates a plurality of folders corresponding to at least two keywords, from among the plurality of keywords. For example, if keywords such as 'Kid', 'Portrait', 'Dog', and 'park' are detected based on the information about the user's preference for folders, the device 100 may generate folders respectively corresponding to 'Kid', 'Portrait', 'Dog', and 'park'.

According to an exemplary embodiment, the device 100 may classify a plurality of pieces of content, by matching the plurality of pieces of content with folders respectively corresponding thereto by using a result obtained by comparing keywords respectively corresponding to the plurality of folders to respective keywords for (or attribute information about) the plurality of pieces of content.

If the classifying of the plurality of pieces of content is finished, the device 100 may arrange the plurality of folders according to an order in which the keywords are detected. For example, a folder corresponding to a keyword that is detected early according to the order in which the keywords are detected may be displayed on an upper part in the arrangement.

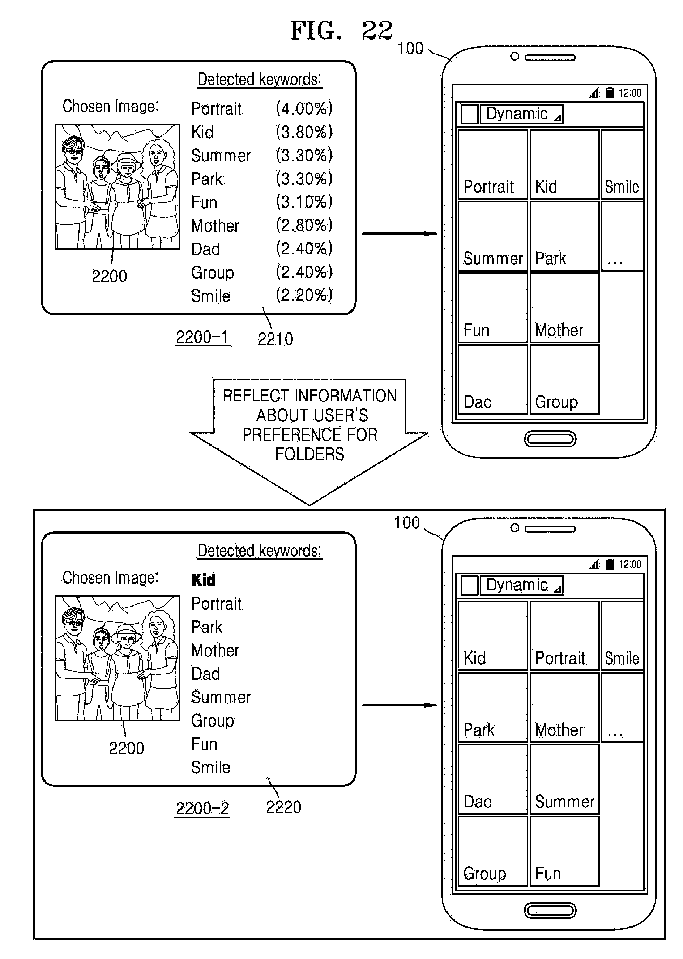

Hereinafter, an example of determining an order in which a plurality of keywords are detected, based on an accuracy rate and information about a user's preference for folders, is described in detail with reference to FIG. 22.

FIG. 22 is a diagram showing a process of changing an order in which a plurality of keywords are detected, according to information about a user's preference for folders, according to an exemplary embodiment.

Referring to 2200-1 shown in FIG. 22, the device 100 may select a family picture 2200 as reference content for generating a dynamic folder, based on a user input. According to an exemplary embodiment, the device 100 may obtain a plurality of keywords for describing the family picture 2200. For example, the device 100 may obtain keywords such as Portrait, Kid, Summer, Park, Fun, Mother, Dad, Group, Smile, and the like. An accuracy rate for Portrait may be 4.00%, an accuracy rate for Kid may be 3.80%, accuracy rates for Summer and Park may be respectively 3.30%, an accuracy rate for Fun may be 3.10%, an accuracy rate for Mother may be 2.80%, accuracy rates for Dad and Group may be respectively 2.40%, and an accuracy rate for Smile may be 2.20%. The device 100 may determine an order 2210, in which the keywords are detected, as an order of Portrait, Kid, Summer, Park, Fun, Mother, Dad, Group, and Smile, based on information about an accuracy rate for the keywords.

The device 100 may generate folders respectively corresponding to the keywords, and classify a plurality of pieces of content into the folders. If the classifying of the plurality of pieces of content is finished, the device 100 may display the folders according to the order 2210 in which the keywords respectively corresponding to the folders are detected. For example, the device 100 may display the folders according to an order from a Portrait folder, a Kid folder, a Summer folder, a Park folder, a Fun folder, a Mother folder, a Dad folder, a Group folder, to a Smile folder.

Referring to 2000-2 shown in FIG. 22, the device 100 may also determine an order 2220 in which the keywords are detected, by further reflecting information about a user's preference for folders in the order 2220 in which the keywords are detected.

For example, as a result of analyzing a folder usage history of a user, a number of times folders related to the user or a child of the user, from among objects included in the content, are selected may be greatest, a number of times folders related to places are selected may be second greatest, and a number of times folders related to feelings are selected may be lowest.

In this case, the device 100 may determine the order 2220 in which a plurality of keywords for describing the family picture 2000 are detected as an order of Kid, Portrait, Park, Mother, Dad, Summer, Group, Fun, and Smile, by further taking into account information about a user's preference for folders as well as information about an accuracy rate for the plurality of keywords for describing the family picture 2200.

The device 100 may generate folders respectively corresponding to the keywords, and classify a plurality of pieces of content into the folders. If the classifying of the plurality of pieces of content is finished, the device 100 may display the folders based on the order 2220 in which the keywords respectively corresponding to the folders are detected. For example, the device 100 may display the folders according to an order of a Kid folder, a Portrait folder, a Park folder, a Mother folder, a Dad folder, a Summer folder, a Group folder, a Fun folder, and a Smile folder.

If the user selects one piece of content to generate a dynamic folder, the device 100 may determine an order in which the keywords are detected and an order in which the folders are arranged by taking into account only information about an accuracy rate for the keywords in 2200-1, or determine an order in which the keywords are detected and an order in which the folders are arranged by taking into account information about the user's preference for folders in addition to information about an accuracy rate for the keywords in 2200-2.

FIG. 23 is a diagram showing a process of adjusting a form of a folder, which is performed by the device 100, according to an exemplary embodiment.

Referring to 2300-1 shown in FIG. 23, the device 100 may select a family picture 2310 as reference content for generating a dynamic folder, based on a user input. According to an exemplary embodiment, the device 100 may obtain keywords 2320 for describing the family picture 2200. For example, the device 100 may obtain the keywords 2320 such as Portrait, Kid, Summer, Park, Fun, Mother, Dad, Group, Smile, and the like. An accuracy rate for Portrait may be 4.00%, an accuracy rate for Kid may be 3.80%, accuracy rates for Summer and Park may be respectively 3.30%, an accuracy rate for Fun may be 3.10%, an accuracy rate for Mother may be 2.80%, accuracy rates for Dad and Group may be respectively 2.40%, and an accuracy rate for Smile may be 2.20%. The device 100 may determine an order in which the keywords 2320 are detected as an order of Portrait, Kid, Summer, Park, Fun, Mother, Dad, Group, and Smile, based on information about an accuracy rate for the keywords 2320.

Referring to 2300-2 shown in FIG. 23, the device 100 may generate folders respectively corresponding to the keywords 2320, and classify a plurality of pieces of content into the folders. If the classifying of the plurality of pieces of content is finished, the device 100 may adjust a size of displayed folders, based on the order in which the keywords 2320 respectively corresponding to the folders are detected. For example, the device 100 may display the Portrait folder in a largest size, and display both the Kid folder and the Summer folder in a second largest size.

A case in which a size of folders are adjusted based on an order in which keywords are detected is described as an example, with reference to FIG. 23. However, exemplary embodiments are not limited thereto. According to an exemplary embodiment, the device 100 may adjust sizes of the folders according to a number of pieces of content included in respective folders. For example, if 100 pieces of content are included in the Kid folder and 88 pieces of content are included in the Portrait folder, the device 100 may display the Kid folder to be larger than the Portrait folder.

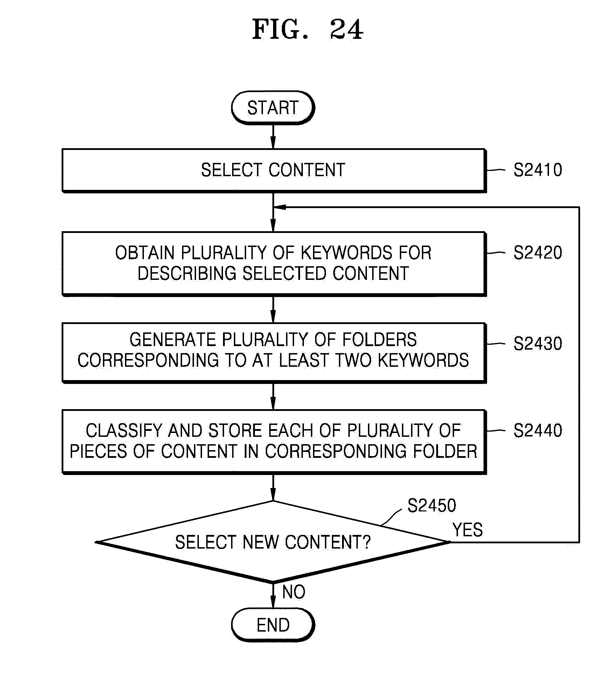

FIG. 24 is a flowchart of a method of reclassifying a plurality of pieces of content based on selection of new content, the reclassifying being performed by the device 100, according to an exemplary embodiment.

In operation S2410, the device 100 selects a piece of content from among a plurality of pieces of content. According to an exemplary embodiment, the device 100 may select one piece of content based on a user input. For example, the device 100 may receive a user input of selecting one piece of content.

In operation S2420, the device 100 obtains a plurality of keywords for describing the selected piece of content. According to an exemplary embodiment, a plurality of keywords may be at least two key words or phrases for expressing the selected one piece of content.

For example, if a plurality of keywords are predefined for metadata of the selected piece of content, the device 100 may identify the plurality of keywords in the metadata of the selected one piece of content. Additionally, the device 100 may detect a plurality of keywords for describing the selected piece of content, by using at least one selected from the group consisting of attribute information of the selected one piece of content and image analysis information about the selected one piece of content.

In operation S2430, the device 100 generates a plurality of folders respectively corresponding to at least two keywords, from among the plurality of keywords.

According to an exemplary embodiment, the device 100 may generate a plurality of folders corresponding to all the obtained plurality of keywords. Additionally, the device 100 may generate a plurality of folders corresponding to one or more keywords from a plurality of keywords. According to an exemplary embodiment, the device 100 may generate a plurality of folders corresponding to at least two keywords selected by a user.

In operation S2440, the device 100 classifies and stores each of the plurality of pieces of content in a corresponding folder based on the keywords respectively corresponding to the folders. According to an exemplary embodiment, the device 100 may classify the plurality of pieces of content, by matching the plurality of pieces of content with folders respectively corresponding to the plurality of pieces of content by using a result obtained by comparing keywords respectively corresponding to the plurality of folders to respective keywords for (or respective attribute information about) the plurality of pieces of content.

According to an exemplary embodiment, storing of each of a plurality of pieces of content in a corresponding folder of the plurality of folders may refer to storing link information, indicating a location where each of the plurality of pieces of content is stored, in the corresponding folder, or changing a location where each of the plurality of pieces of content is stored to the corresponding folder.

According to an exemplary embodiment, an order in which a plurality of folders are arranged may be determined based on an order in which keywords corresponding to a plurality of folders are detected. Additionally, according to an exemplary embodiment, the device 100 may determine sizes of a plurality of folders in various ways. For example, the device 100 may adjust a size of each folder differently according to an accuracy rate for keywords corresponding to each folder or a number of pieces of the content.

Operations S2410 through S2440 correspond to operations S210 through S240 described with reference to FIG. 2. Thus, a description thereof is not provided here again.

In operation S2450, the device 100 determines whether an input that selects new content is received from the user.

In response to the device 100 determining that the input that selects the new content is received, the device 100 returns to operation S2420 to obtain a plurality of new keywords for describing the new content. Then, the device 100 may generate a plurality of new folders corresponding to the plurality of new keywords. The device 100 may reclassify the plurality of pieces of content according to keywords respectively corresponding to the plurality of new folders.

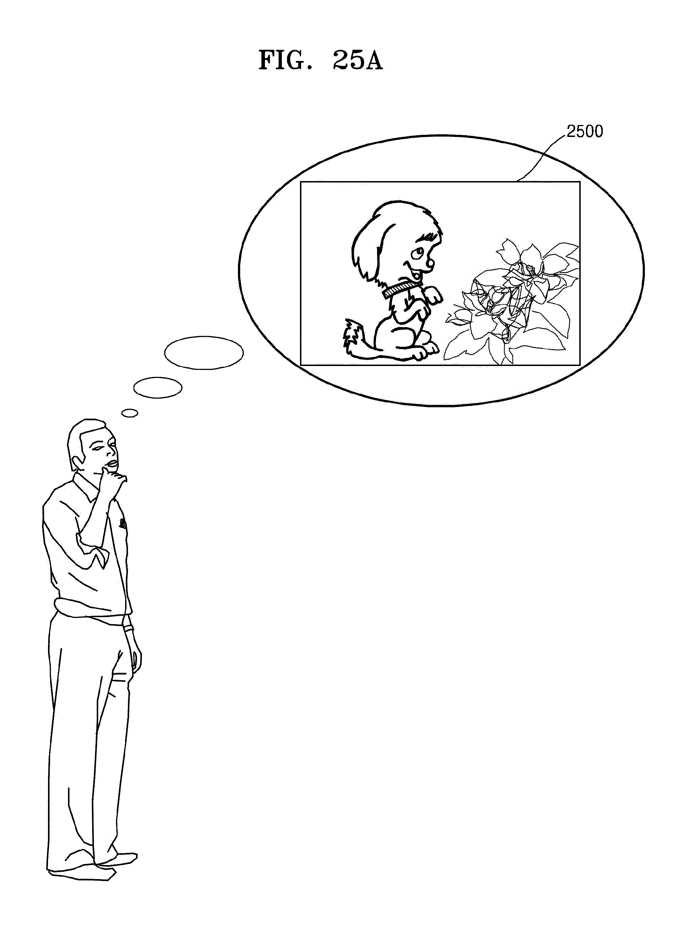

According to an exemplary embodiment, the device 100 may reclassify a plurality of pieces of content consecutively according to selection of new content. An embodiment of reclassifying content, which is performed by the device 100, is described in detail with reference to FIGS. 25A through 25E.

FIGS. 25A through 25E are diagrams showing a process of reclassifying a plurality of pieces of content based on selection of new content, the reclassifying being performed by the device 100, according to an exemplary embodiment;

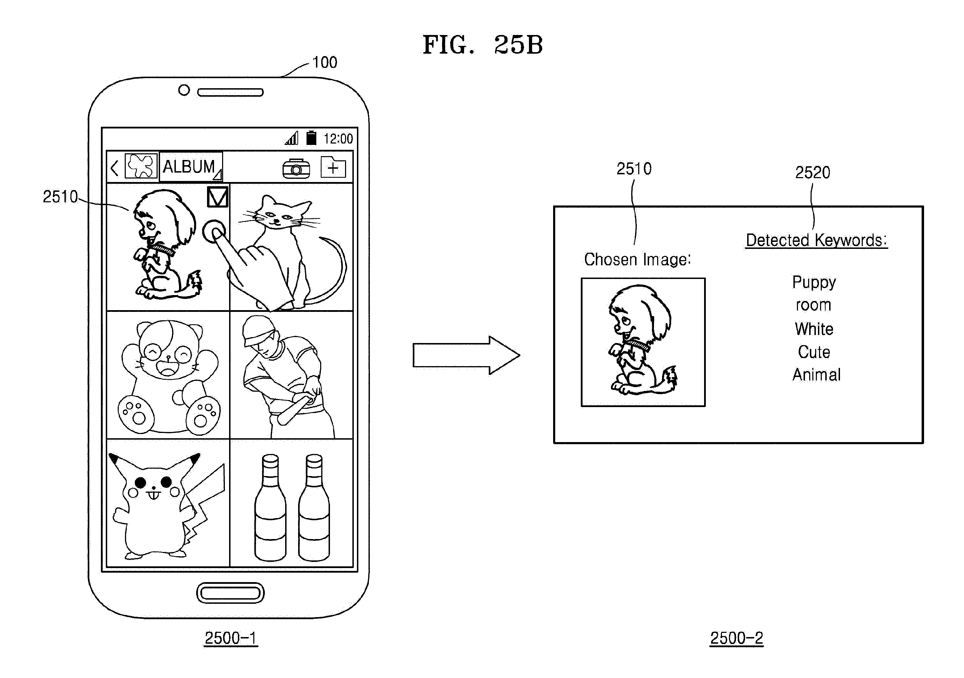

Referring to FIG. 25A, a user may want to search for a first picture 2500 in which a puppy is looking at flowers. The user may want to request a dynamic folder related to the puppy from the device 100, and identify the dynamic folder. An example of searching for the first picture 2500 through the dynamic folder, which is performed by a user, is described in detail with reference to FIGS. 25B through 25E.

Referring to 2500-1 of FIG. 25B, the device 100 may receive a user input of requesting generation of a dynamic folder by selecting a second picture 2510 that includes the puppy. A user input of selecting a keyword may be various. For example, the user may touch the second picture 2510 for a period of time (for example, 3 seconds) or a longer period of time or touch the second picture 2510 a number of times (for example, twice) or more.

Referring to 2500-2 of FIG. 25B, the device 100 may obtain a plurality of keywords 2520 for describing the second picture 2510. For example, the device 100 may obtain keywords such as Puppy, Room, White, Cute, Animal, and the like.

According to an exemplary embodiment, a plurality of keywords 2520 that are predefined for the second picture 2510 may be extracted, or the plurality of keywords 2520 may be extracted by using at least one selected from the group consisting of attribute information about the second picture 2510 and image analysis information about the second picture 2510.

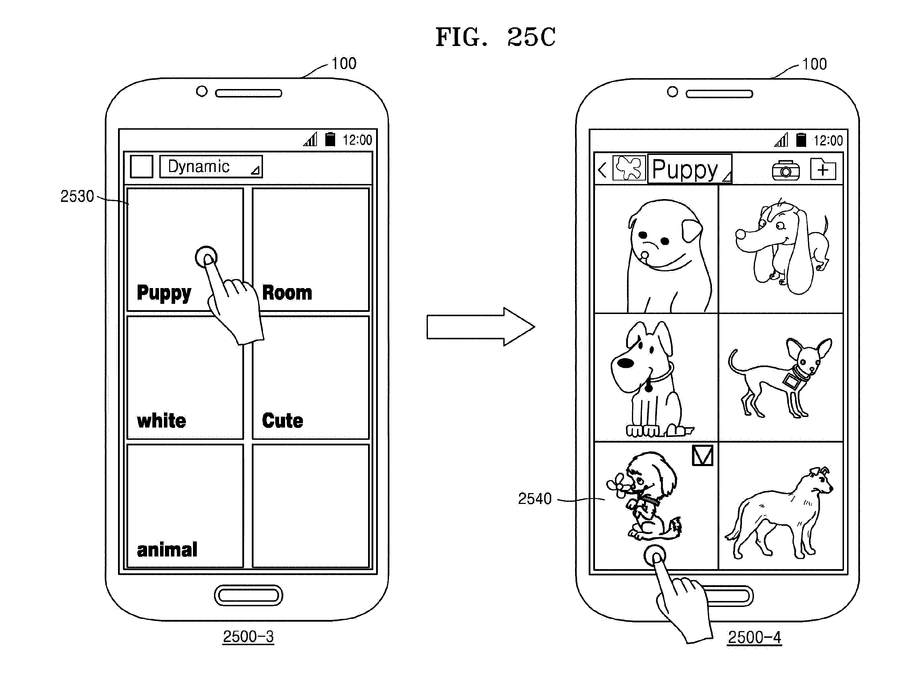

Referring to 2500-3 of FIG. 25C, the device 100 may generate and display a plurality of folders respectively corresponding to the plurality of keywords 2520. For example, the device 100 may generate a Puppy folder 2530, a Room folder, a White folder, a Cute folder, and an Animal folder. The device 100 may classify (or store) a plurality of pieces of content in folders respectively corresponding to the plurality of pieces of content, based on a result obtained by comparing keywords corresponding to a plurality of folders to keywords for the plurality of pieces of content that are prestored in the device 100 (for example, keywords predefined for the plurality of pieces of content or keywords detected from attribute information). For example, images related to the puppy may be stored in the Puppy folder 2530, and images captured in a room may be stored in the Room folder.

If the classifying of the plurality of pieces of content that are prestored in the device 100 is finished, the device 100 may display a plurality of folders (for example, the Puppy folder 2530, the Room folder, the White folder, the Cute folder, and the Animal folder). The user may select the Puppy folder 2530 that is likely to include the first picture 2500. For example, the device 100 may receive a user input of selecting the Puppy folder 2530 from among the plurality of folders.

Referring to 2500-4 of FIG. 25C, the device 100 may display a list of content included in the Puppy folder 2530, in response to a user input of selecting the Puppy folder 2530. The user may check whether the first picture 2500 in which the puppy is looking at flowers is present in content included in the Puppy folder 2530.

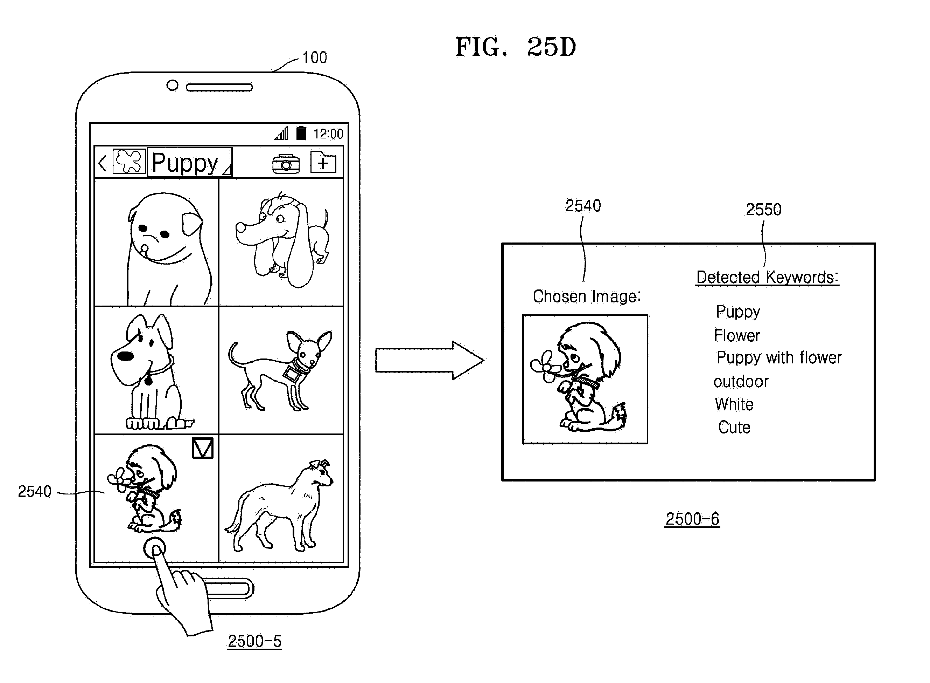

Referring to 2500-5 of FIG. 25D, if the user cannot find the first picture 2500 in the Puppy folder 2530, the user may request generation of a dynamic folder by selecting a third picture 2540 in which the puppy has the flower in a mouth. For example, the user may touch the third picture 2540 for a period of time (for example, 3 seconds) or for a longer period of time or touch the third picture 2540 a number of times or more (for example, twice).

Referring to 2500-6 of FIG. 25D, the device 100 may obtain a plurality of keywords 2550 for describing the third picture 2540. For example, the device 100 may obtain keywords such as Puppy, Flower, Puppy with flower, Outdoor, White, Cute, and the like.

According to an exemplary embodiment, the plurality of keywords 2550 that are predefined for the third picture 2540 may be extracted, or the plurality of keywords 2550 may be extracted by using at least one selected from the group consisting of attribute information about the third picture 2550 and image analysis information about the third picture 2550.

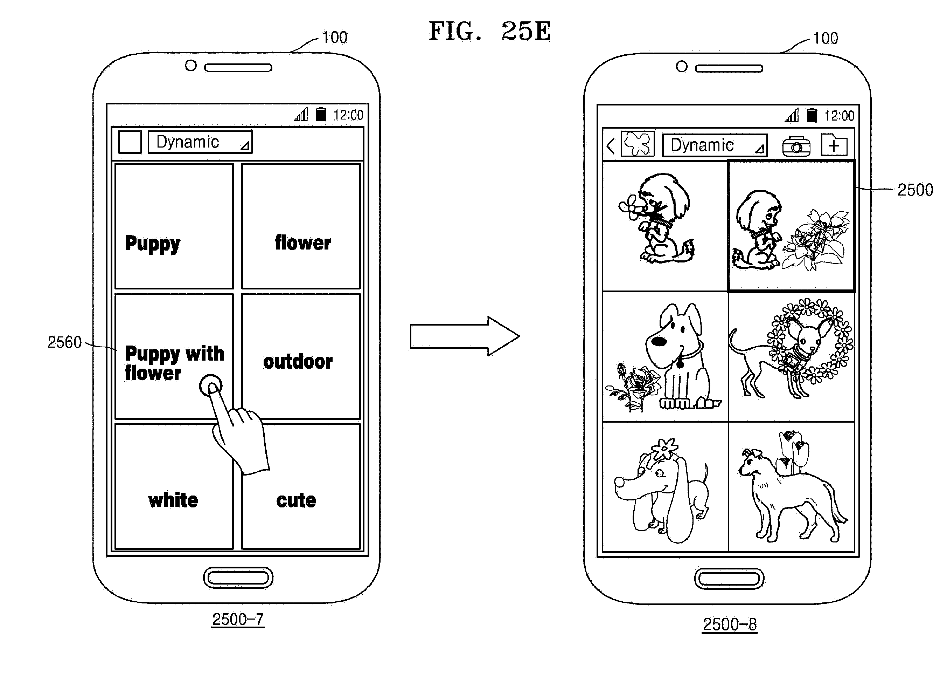

Referring to 2500-7 of FIG. 25E, the device 100 may generate and display a plurality of folders respectively corresponding to the plurality of keywords 2550. For example, the device 100 may generate a Puppy folder, a Flower folder, a Puppy with flower folder 2560, an Outdoor folder, a White folder, and a Cute folder. The device 100 may reclassify (or store) a plurality of pieces of content in folders respectively corresponding thereto, based on a result obtained by comparing keywords corresponding to a plurality of folders to keywords for the plurality of pieces of content that are prestored in the device 100 (for example, keywords predefined for the plurality of pieces of content or keywords detected from attribute information). For example, images related to the puppy may be stored in the Puppy folder, and images related to the flower may be stored in the Flower folder.

If the reclassifying of the plurality of pieces of content that are prestored in the device 100 is finished, the device 100 may display a plurality of folders (for example, a Puppy folder, a Flower folder, a Puppy with flower folder 2560, an Outdoor folder, a White folder, and a Cute). The user may select the Puppy with flower folder 2560 that is likely to include the first picture 2500. For example, the device 100 may receive a user input of selecting the Puppy with flower folder 2560 from among the plurality of folders.

Referring to 2500-8 of FIG. 25 E, the device 100 may display a list of content included in the Puppy with flower folder 2560, in response to a user input of selecting the Puppy with flower 2560. The user may check whether the first picture 2500 in which the puppy is looking at a flower is present in content included in the Puppy with flower folder 2560.

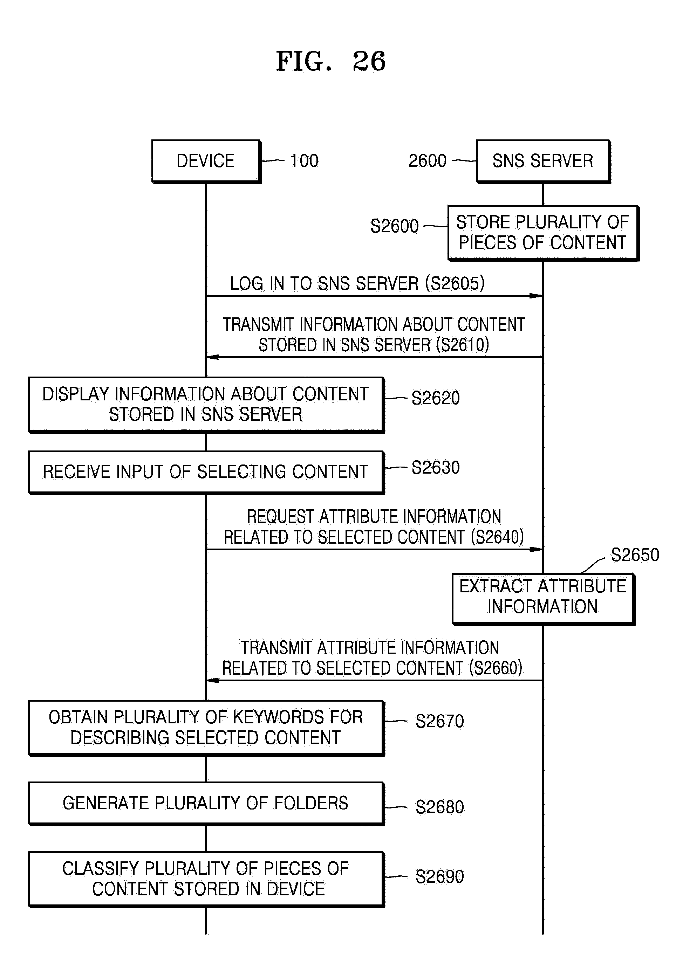

FIG. 26 is a flowchart of a method of classifying a plurality of pieces of content based on a plurality of keywords that are obtained from content stored in an SNS server 2600, the classifying being performed by the device 100, according to an exemplary embodiment.

In operation S2600, the SNS server 2600 stores a plurality of pieces of content. The SNS server 2600 may be a server for providing an SNS service to a device connected to the SNS server 2600 via a network. An SNS service refers to a service that allows users to establish new relations with other people or strengthen relations with acquaintances online.

According to an exemplary embodiment, the SNS server 2600 may store content uploaded from devices of one or more users.

In operation S2605, the device 100 logs in to the SNS server 2600. A log-in process may be a process of obtaining an authority for accessing content stored in the SNS server 2600. For example, the device 100 may request authentication from the SNS server by transmitting identification information (for example, account information) and authentication information (for example, a password) to the SNS server 2600. If the authentication is successful, the device 100 may access content stored in the SNS server 2600.

In operation S2610, the SNS server 2600 transmits information about the content stored in the SNS server 2600 to the device 100. For example, the SNS server 2600 may transmit a list of the stored content, a publisher of the content, comments on the content, information about recommendations on the content, or the like to the device 100.

In operation S2620, the device 100 displays information about the content stored in the SNS server 2600. For example, the device 100 may display a list of the content received from the SNS server 2600, a publisher of the content, comments on the content, information about recommendations on the content, or the like.

In operation S2630, the device 100 receives an input of selecting content. For example, the device 100 may receive a user input of selecting one piece of content from among a plurality of pieces of content stored in the SNS server 2600 or receive a user input of selecting two or more pieces of content from among the plurality of pieces of content stored in the SNS server 2600.

According to an exemplary embodiment, a user input of selecting content may be various. For example, a user input may include a key input, a touch input, a motion input, a bending input, a voice input, a multiple input, or the like. For example, the device 100 may receive an input of touching content from among the plurality of pieces of content stored in the SNS server 2600 for a period of time (for example, 2 seconds) or a longer period of time or an input of touching the content a number of or more times (for example, a double tap).

In operation S2640, the device 100 requests attribute information related to the selected content from the SNS server 2600.

According to an exemplary embodiment, attribute information is information indicating characteristics of content and may include, for example, at least one selected from the group consisting of information about a format of the content, information about a size of the content, information about a location where the content is generated, information about a point of time when the content is generated, event information related to the content, information about a device that generated the content, information about a source of the content, and annotation information added by a user, but is not limited thereto. For example, attribute information related to the content stored in the SNS server 2600 may further include at least one selected from the group consisting of publisher information (for example, account information), information about a relation between a user of the device 100 and the publisher, a title of a post, and information about a comment on the post.

In operation S2650, the SNS server 2600 extracts attribute information related to the selected content. In operation S2660, the SNS server 2600 transmits the attribute information related to the selected content to the device 100.

For example, the SNS server 200 may extract and transmit information about a format of the content, information about a size of the content, information about an object included in the content (for example, a type, a name, or a number of the object, or the like), information about a location where the content is generated, information about a point of time when the content is generated, event information related to the content, information about a device that generated the content, publisher information (for example, account information), information about a relation between a user of the device 100 and the publisher, a title of a post, and information about a comment on the post to the device 100.

In operation S2670, the device 100 obtains a plurality of keywords for describing the selected content. For example, the device 100 may detect a plurality of keywords for describing the selected content, by using attribute information received from the SNS server 2600.

In operation S2680, the device 100 generates a plurality of folders respectively corresponding to at least two keywords, from among the plurality of keywords.

According to an exemplary embodiment, the device 100 may generate a plurality of folders corresponding to all the obtained plurality of keywords. Additionally, the device 100 may generate a plurality of folders corresponding to one or more keywords from among the plurality of keywords.

According to an exemplary embodiment, the device 100 may generate a plurality of folders corresponding to at least two keywords selected by the user. For example, the device 100 may display a list of the obtained plurality of keywords on a screen, and receive a user input of selecting one or more keywords, from among the plurality of keywords. The device 100 may generate a plurality of folders corresponding to one or more keywords.

According to an exemplary embodiment, the device 100 may use a keyword corresponding to a folder as a name of the folder. According to an exemplary embodiment, an order in which plurality of folders are arranged may be determined based on an order in which keywords corresponding to the plurality of folders are detected. Additionally, according to an exemplary embodiment, the device 100 may determine sizes of the plurality of folders in various ways.

In operation S2690, the device 100 classifies the plurality of pieces of content stored in the device 100 according to the keywords respectively corresponding to the plurality of folders.

According to an exemplary embodiment, the device 100 may match the plurality of pieces of content with folders respectively corresponding thereto, by using a result obtained by comparing keywords respectively corresponding to the plurality of folders to respective keywords of the plurality of pieces of content. According to an exemplary embodiment, the device 100 may match each of the plurality of pieces of content with a corresponding folder of the plurality of folders, by using a result obtained by comparing keywords respectively corresponding to the plurality of folders to respective attribute information about the plurality of pieces of content.

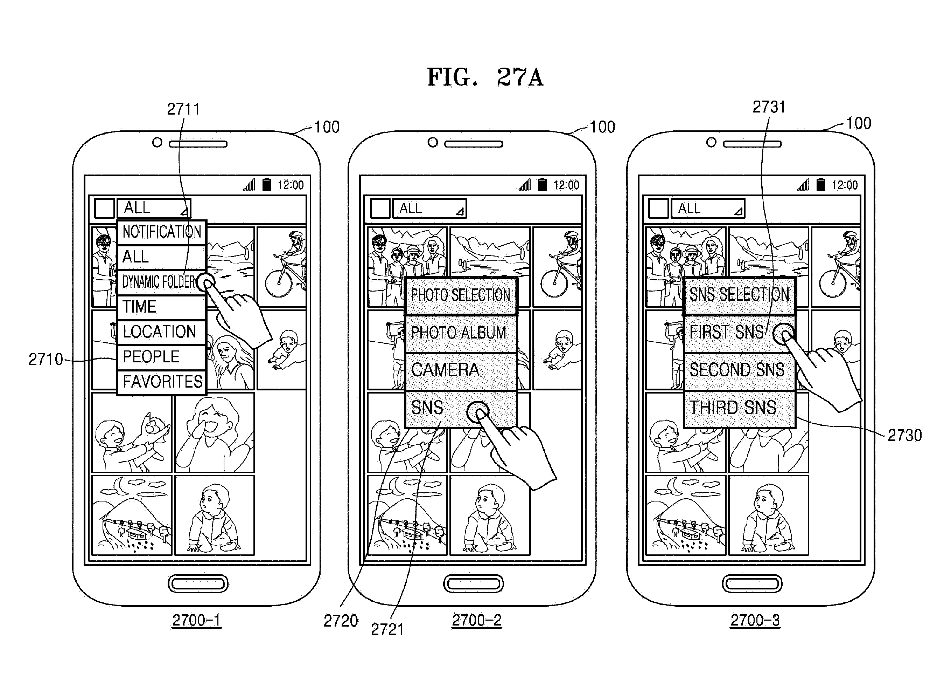

Operations S2680 and S2690 correspond to operations S230 and S240 described with reference to FIG. 2. Thus, a detail description thereof is not provided here again. An embodiment of classifying a plurality of pieces of content based on a plurality of keywords obtained from content stored in the SNS server 2600, the classifying being performed by the device 100, is described in detail with reference to FIGS. 27A through 27C.

FIGS. 27A through 27C are diagrams showing a process of classifying a plurality of pieces of content based on a plurality of keywords that are obtained from content stored in an SNS server, the classifying being performed by the device 100, according to an exemplary embodiment.

Referring to 2700-1 of FIG. 27A, the device 100 may execute a content management application and display an execution window of the content management application on a screen. The device 100 may provide a menu window 2710 that includes menus for classifying content, via the execution window of the content management application. The device 100 may receive a selection of a dynamic folder menu 2711 in the menu window 2710.

Referring to 2700-2 of FIG. 27A, the device 100 may provide a first selection window 2720 for selecting a type of reference content for generating a dynamic folder, in response to an input of selecting the dynamic folder menu 2711. For example, the device 100 may provide a photo album menu for selecting an image in a photo album, a camera menu for selecting an image captured by using a camera, and an SNS menu 2721 for selecting content stored in the SNS server, by using the first selection window 2720. The device 100 may receive an input of selecting the SNS menu 2721 in the first selection window 2720.

Referring to 2700-3 of FIG. 27A, the device 100 may provide a second selection window 2730 for selecting a type of an SNS, in response to an input of selecting the SNS menu 2721. If a user selects a first SNS 2731 in the second selection window 2730, the device 100 may request a first SNS server 2700 for connection to the first SNS 2731. For example, if the device 100 transmits account information and authentication information to the first SNS server 2700, the device 100 may log in to the first SNS server 2700.

According to an exemplary embodiment, the menu window 2710, the first selection window 2720, and the second selection window 2730 may be a type of a GUI.

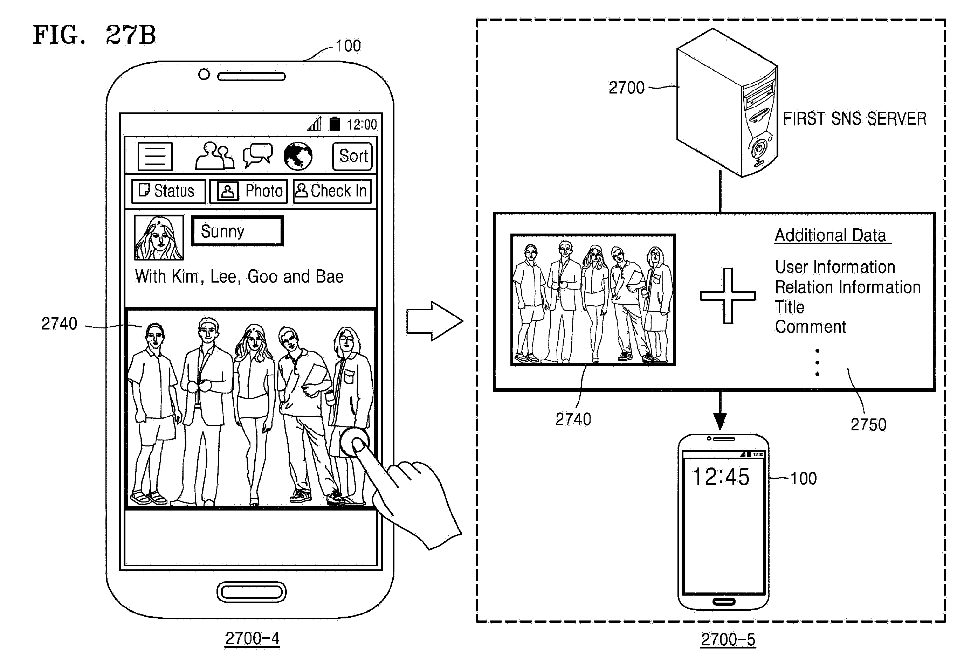

Referring to 2700-4 of FIG. 27B, the device 100 may receive an input of selecting a first image 2740 from among the content stored in the first SNS server 2700 and an input of requesting generation of a dynamic folder based on the first image 2740. For example, if a user want to search for a plurality of images related to the first image 2740 that a friend of the user photographed at a graduation ceremony and uploaded to the first SNS server 2700, the user may touch the first image 2740 for a period of time (for example, 3 seconds) or a longer period of time. Then, device 100 may request information about the first image 2740 from the first SNS server 2700.

Referring to 2700-5 of FIG. 27B, the first SNS server 2700 may identify metadata of the first image 2740, and transmit basic attribute information about the first image 2740 (for example, objects: Sunny, Kim, Bae, Lee, Goo, a place: Photo Studio, an event: Graduation, time: February, or the like) to the device 100. Additionally, the first SNS server 2700 may transmit additional data 2750, which includes information about a friend who uploaded the first image 2740 (for example, a friend's name: Sunny, a relation: friend), and information about comments published with the first image 2740 (for example. With Kim, Lee, Goo, Bae, and the like), to the device 100.

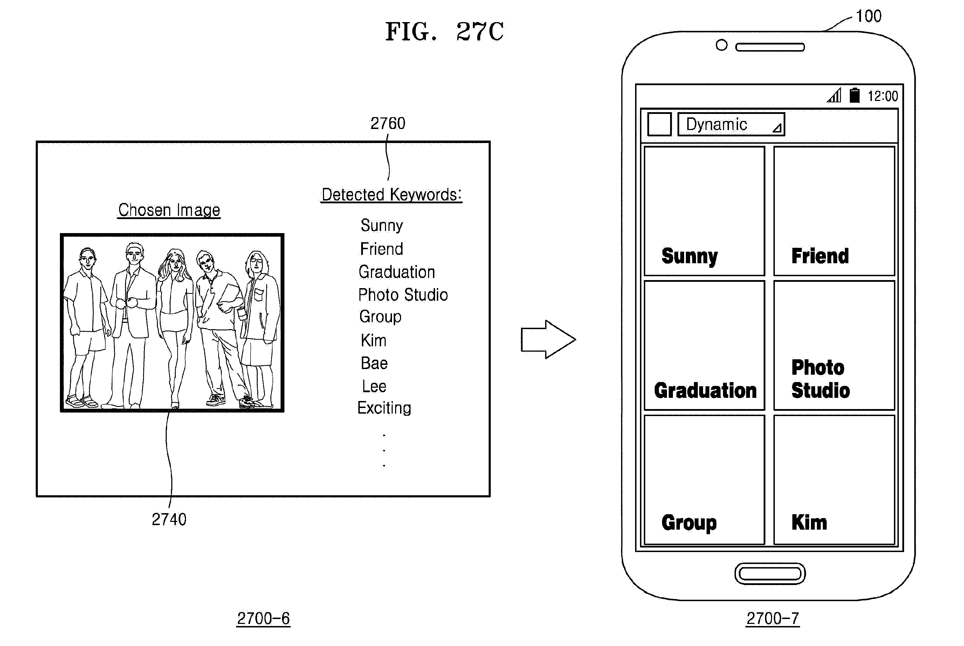

Referring to 2700-6 of FIG. 27C, the device 100 may detect a plurality of keywords 2760 for describing the first image 2740, by using information about the first image 2740 received from the first SNS server 2700. For example, the device 100 may detect keywords such as Sunny, Friend, Graduation, Photo Studio, Group, Kim, Bae, Lee, Exciting, or the like.

Referring to 2700-7 of FIG. 27C, the device 100 may generate a plurality of folders corresponding to the detected plurality of keywords, For example, the device 100 may generate a Sunny folder, a Friend folder, a Graduation folder, a Photo Studio folder, a Group folder, or the like.

Then, the device may classify the plurality of content stored in the device 100, based on keywords of each folder. For example, images photographed together with Sunny may be included in the Sunny folder, a photo image related to a graduation ceremony may be included in the Graduation folder, and images photographed at a photo studio may be included in the Photo Studio folder.

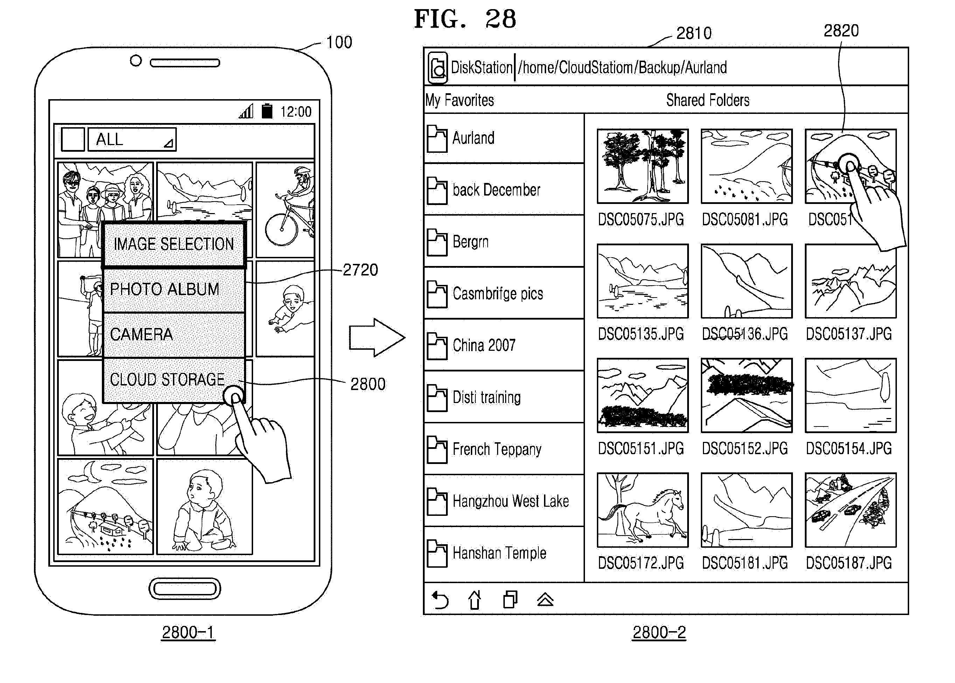

FIG. 28 is a diagram showing a process of selecting content stored in a cloud storage, according to an exemplary embodiment.

Referring to 2800-1 shown in FIG. 28, the device 100 may provide a cloud storage menu 2800 for selecting content stored in a cloud storage via the first selection window 2720. The device 100 may receive an input of selecting the cloud storage menu 2800 in the first selection window 2720.

Referring to 2800-2 shown in FIG. 28, the device 100 may display a list 2810 of content stored in the cloud storage, in response to an input of selecting the cloud storage menu 2800. The device 100 may receive an input of selecting content 2820 in a list 2810 of the content stored in the cloud storage. In this case, the device 100 may classify the content, by obtaining a plurality of keywords for describing the content 2820 and generating a plurality of folders corresponding to the plurality of keywords.

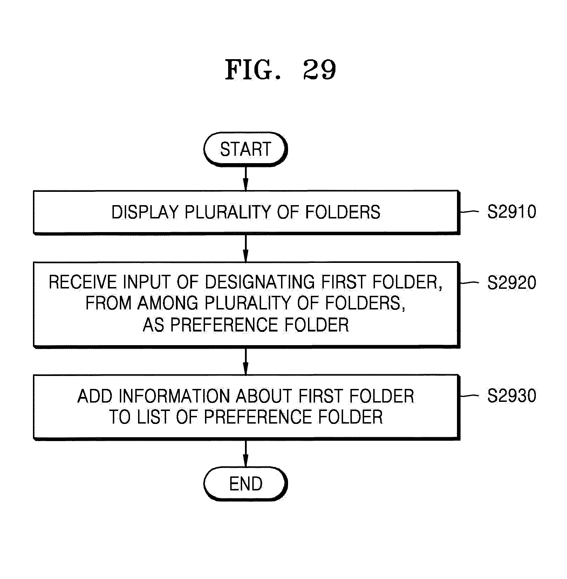

FIG. 29 is a flowchart of a method of storing information about preference folders, which is performed by the device 100, according to an exemplary embodiment.

In operation S2910, the device 100 displays a plurality of folders. For example, the device 100 may display a plurality of folders that are generated based on content selected by a user.

In operation S2920, the device 100 receives an input of designating a first folder, from among a plurality of folders, as a preference folder. The designating of a folder as a preference folder may refer to adding a folder, in which content that a user wants to reidentify are collected, to a favorites list. For example, if a first folder is designated as a preference folder, even if a user selects content, images stored in (or linked to) the first folder may not be changed. Accordingly, the user may identify the images in the first folder afterwards.

In operation S2930, the device 100 adds information about the first folder to the favorites list or a list of the preference folder, in response to the input of designating the first folder as the preference folder. For example, the device 100 may add identification information about the first folder (for example, a name of the first folder) to the preference folder list, and store and manage link information about each of a plurality of pieces of content included in the first folder in a memory. A preference folder list may be expressed as a favorites list according to cases.

Then, if the user selects the first folder from the preference folder list (the favorites list), the device 100 may identify link information about content included in the first folder, and provide a list of the content included in the first folder.

According to an exemplary embodiment, even though a plurality of folders generated based on content temporarily exist, if a user designates the first folder from among the plurality of folders as a preference folder, the first folder may not disappear and may still remain. Accordingly, the user may identify the first folder in the preference folder list (the favorites list) without having to regenerate the first folder by selecting the content.

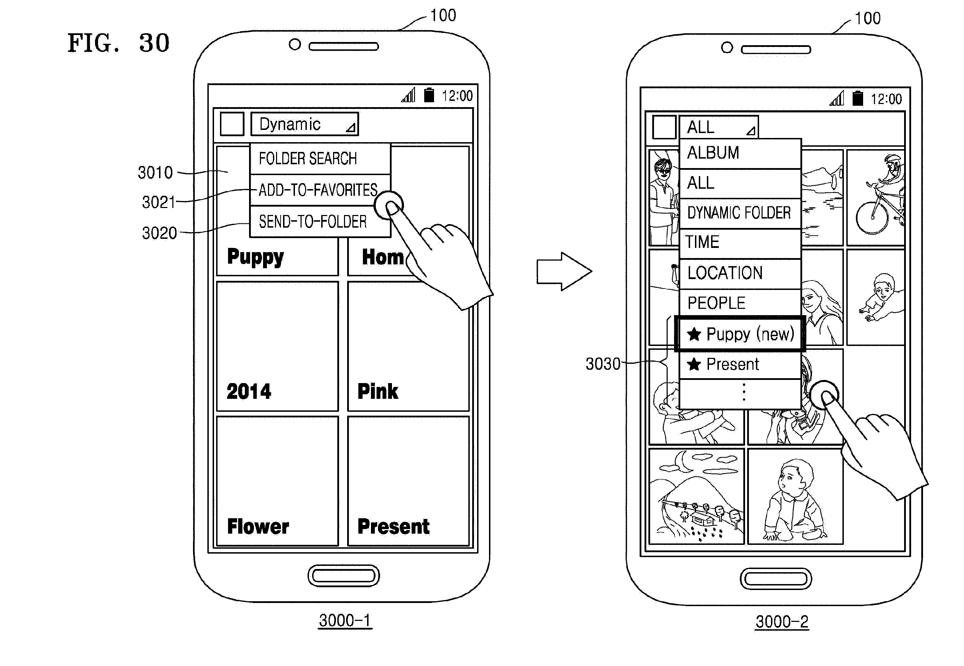

FIG. 30 is a diagram showing a process of storing information about a preference folder, which is performed by the device 100, according to an exemplary embodiment.

Referring to 3000-1 shown in FIG. 30, the device 100 may display a plurality of folders based on content selected by a user. For example, if an image obtained by capturing a puppy holding a pink flower in a mouth is selected, the device 100 may display a Puppy folder 3010, a Home folder, a 2014 folder, a Pink folder, a Flower folder, a Present folder, and the like.

Then, the device 100 may receive a user input of selecting the Puppy folder 3010 from among the plurality of folders. The device 100 may provide a menu window 3020 that includes a folder search menu, an add-to-favorites menu 3021, and a send-to-folder menu, in response to the user input.

If the user selects the add-to-favorites menu 3021 in the menu window 3020, the device 100 may detect an input of designating the Puppy folder 3010 as a preference folder. Accordingly, the device 100 may add identification information about the Puppy folder 3010 (for example, Puppy) to the favorites list, and mapping link information (for example, storage location information) about images related to the puppy included in the Puppy folder 3010 with identification information about the Puppy folder 3010.

Referring to 3000-2 shown in FIG. 30, the device 100 may display a favorites list 3030 based on a user input. In this case, the user may identify the Puppy folder 3010 added to the favorites list 3030. If the user selects the Puppy folder 3010 in the favorites list 3030, the device 100 may display at least one piece of content included in the Puppy folder 3010.

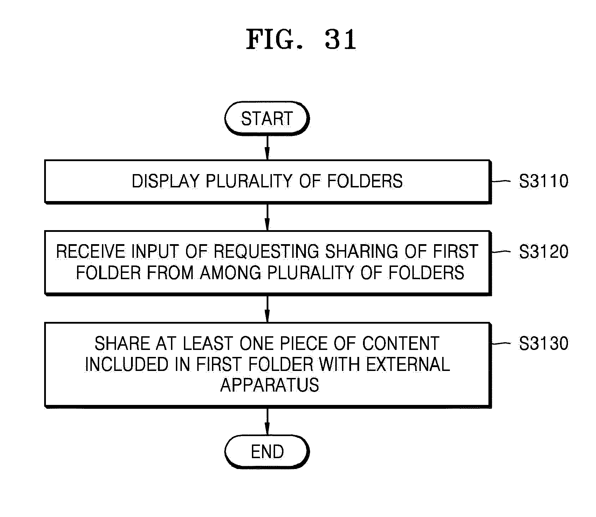

FIG. 31 is a flowchart of a method of sharing a dynamic folder with an external apparatus, which is performed by the device 100, according to an exemplary embodiment.

In operation S3110, the device 100 displays a plurality of folders. For example, the device 100 may display a plurality of folders that are generated based on content selected by a user.

In operation S3120, the device 100 receives an input of requesting sharing of a first folder from among a plurality of folders. The sharing of the first folder may refer to sharing of at least one piece of content included in the first folder.

According to an exemplary embodiment, a user input of requesting the sharing of the first folder may be various. The user input of requesting sharing of the first folder may include a key input, a voice input, a touch input, or a bending input, but is not limited thereto.

According to an exemplary embodiment, the device 100 may receive information about an external apparatus for sharing the first folder from a user. The external apparatus may be at least one selected from the group consisting of a cloud server, an SNS server, another device of the user, a device of another user, and a wearable device, but is not limited thereto.

For example, the user may input account information about cloud storage for uploading all content included in the first folder, SNS account information of the user, identification information about a device of the user's friend to which all the content included in the first folder is to be transmitted (for example, phone number information, media access control (MAC) address information, or the like), information about an e-mail account of the friend, or the like to the device 100.

In operation S3130, the device 100 shares at least one piece of content included in the first folder with the external apparatus.

For example, the device 100 may link information (for example, storage location information, a URL, or the like) about at least one piece of content included in the first folder to the external apparatus. Additionally, the device 100 may at least one piece of content included in the first folder to the external apparatus.

According to an exemplary embodiment, the device 100 may upload at least one piece of content included in the first folder to a server, and provide an authority for accessing the server to the external apparatus.

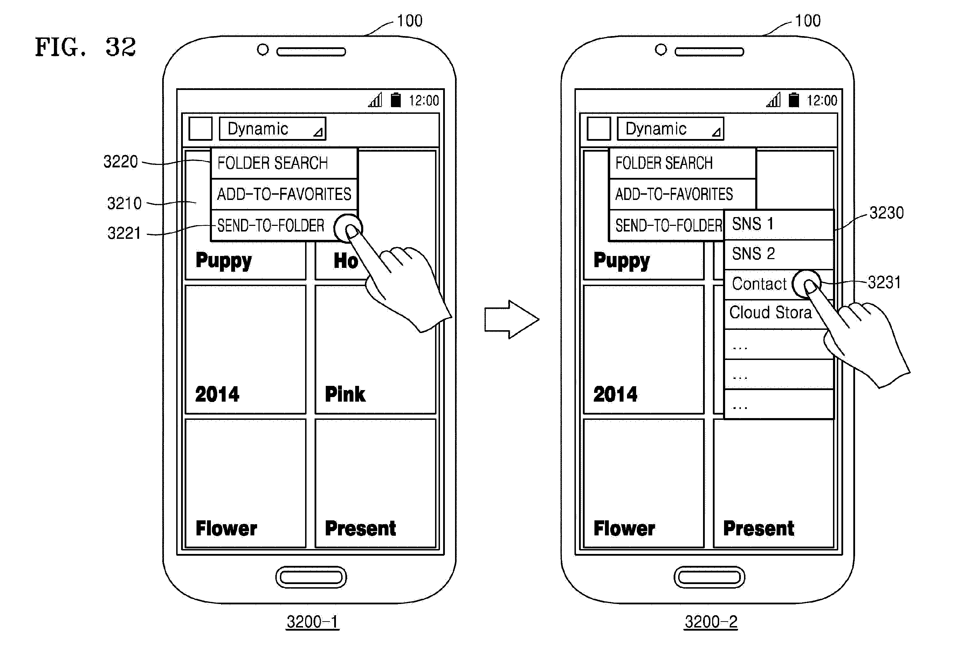

FIG. 32 is a diagram showing a process of sharing a dynamic folder with an external apparatus, which is performed by the device 100, according to an exemplary embodiment.

Referring to 3200-1 shown in FIG. 32, the device 100 may display a plurality of folders based on the content selected by the user. For example, if a photo image obtained by capturing a puppy holding a pink flower in a mouth at home is selected, the device 100 may display a Puppy folder 3210, a Home folder, a 2014 folder, a Pink folder, a Flower, a Present folder, or the like.

Then, the device 100 may receive a user input of selecting the Puppy folder 3210 from among a plurality of folders. For example, the device 100 may receive an input of touching the Puppy folder 3210 for a period of time (for example, 2 seconds) or a longer period of time. The device 100 may provide a menu window 3220 that includes a folder search menu, an add-to-favorites menu, and a send-to-folder menu 3221, in response to the user input.

Referring to 3200-2 shown in FIG. 32, if a user selects the send-to-folder menu 3221 in the menu 3220, the device 100 may provide a selection window 3230 for selecting a reception apparatus. The device 100 may receive an input of selecting Contact 3231 in the selection window 3230. The user may select a friend in the Contact 3231. The device 100 may share the Puppy folder 3210 with a device of the friend.

For example, the device 100 may transmit content included in the Puppy folder 3210 to the device of the friend. Additionally, the device 100 may transmit link information about the content included in the Puppy folder 3210 to the device of the friend.

According to an exemplary embodiment, the device 100 may transmit the content (or link information of the content) included in the Puppy folder 3210 to the device of the friend via an e-mail or a text message.

FIG. 33 is a diagram showing a content management system, according to an exemplary embodiment.

As shown in FIG. 33, according to an exemplary embodiment, the content management system may include the device 100 and a cloud server 200. However, the content management system may be implemented by using more or less elements than those shown in FIG. 33.

According to an exemplary embodiment, the device 100 may be implemented in various forms. For example, the device 100 described herein may be a desktop computer, a cellular phone, a smartphone, a laptop computer, a tablet PC, an e-book terminal, a digital broadcasting terminal, a personal digital assistant (PDA), a portable multimedia player (PMP), a navigation system, a moving pictures expert group audio layer 3 (MP3) player, a digital camera, an Internet protocol television (IPTV), a digital TV (DTV), a CE apparatus (for example, a refrigerator or an air conditioner having a display device), or the like, but is not limited thereto. The device 100 described herein may be a wearable device that may be worn by a user. For example, according to an exemplary embodiment, the device 100 may be at least one selected from the group consisting of a wristwatch, glasses, a ring, a bracelet, a necklace, or the like.

Descriptions about the device 100 that are identical to a descriptions provided with reference to FIG. 1B will not be repeated here again. Hereinafter, for convenience of description, a case in which the device 100 is one of first through nth devices is described as an example.

The cloud server 200 may be communicatively connected to the device 100. For example, the cloud server 200 may be connected to the device 100 by using account information.

According to an exemplary embodiment, the cloud server 200 may transceive data with the device 100. For example, the device 100 may upload at least one piece of content to the cloud server 200. Additionally, the device 100 may receive attribute information, keyword information, or context information about the at least one piece of content from the cloud server 200.

According to an exemplary embodiment, the cloud server 200 may include an intelligence engine. The cloud server 200 may analyze collected by the device 100 by using the intelligence engine. For example, the cloud server 200 may detect keywords from attribute information about the content, or obtain image analysis information on the content by using image processing technology. Additionally, the cloud server 200 may infer a state of a user, a situation of the device, or the like by analyzing event information generated from the device 100.

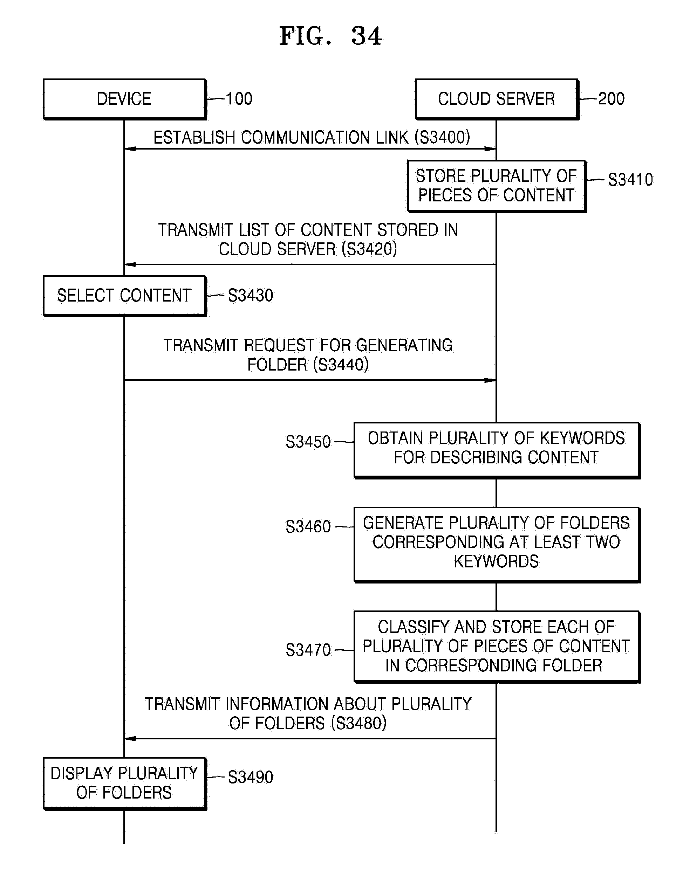

Hereinafter, a method of classifying a plurality of pieces of content stored in the cloud server 200 based on content selected by a user, which is performed by the cloud server 200, is described in detail with reference to FIG. 34.

FIG. 34 is a flowchart of a method of classifying content, which is performed by the cloud server 200, according to an exemplary embodiment.

In operation S3400, the device 100 is connected to the cloud server 200, or establishes a communication link with the cloud server 200. For example, the device 100 may request connection to the cloud server 200 by transmitting identification information (for example, account information) and authentication information (for example, a password) to the cloud server 200. The cloud server 200 may compare the identification information (for example, account information) and the authentication information (for example, a password) to pre-registered device information. If the identification information (for example, account information) and the authentication information (for example, a password) are present in the pre-registered device information, the device 100 may be connected to the cloud server 200. Then, the device 100 may upload content to the cloud server 200, or access content stored in the cloud server 200.

In operation S3410, the cloud server 200 stores a plurality of pieces of content.

For example, the cloud server 200 may store content uploaded by the device 100. The cloud server 200 may map and store identification information about the device 100 with the content.

In operation S3420, the cloud server 200 transmits a list of the plurality of pieces of the content stored in the cloud server 200 to the device 200. For example, if the device 100 is connected to the cloud server 200 via an account, the device 100 may request and receive a list of the plurality of pieces of content from the cloud server 200.

In operation S3430, the device 100 receives an input that selects content from among the plurality of pieces of content. For example, the device 100 may display a list of the plurality of pieces of content, and then, receive a user input of selecting one piece of content in the list of the plurality of pieces of content or a user input of selecting at least two pieces of content in the list of the plurality of pieces of content.

According to an exemplary embodiment, the user input of selecting the content may be various. A user input described herein may include a key input, a touch input, a motion input, a bending input, a voice input, a multiple input, or the like. For example, the device 100 may receive an input of touching content from among the plurality of pieces of content stored in the cloud server 200 for a period of time (for example, 2 or more seconds) or for a longer period of time or an input of touching the content a number of times, for example, a double tap) or more.

In operation S3440, the device 100 transmits a request for generating a folder based on the selected content to the cloud server 200. For example, the device 100 may transmit identification information about the selected content (for example, a name or an index of the content, or the like) to the cloud server 200. The requesting of generation of a folder may include requesting classification of a plurality of pieces of content stored in the cloud server 200.

In operation S3450, the cloud server 200 obtains a plurality of keywords for describing the content. According to an exemplary embodiment, the plurality of keywords may be at least two key words or phrases for expressing the selected content.

For example, if a plurality of keywords are predefined for metadata of the selected one piece of content, the device 100 may identify the plurality of keywords in the metadata of the selected one piece of content. Additionally, the device 100 may detect a plurality of keywords for describing the selected one piece of content, by using at least one selected from the group consisting of attribute information of the selected one piece of content and image analysis information about the selected one piece of content.

In operation S3460, the cloud server 200 generates a plurality of folders respectively corresponding to at least two keywords from among the plurality of keywords.

According to an exemplary embodiment, the device 100 may generate a plurality of folders respectively corresponding to all the obtained plurality of keywords. Additionally, the device 100 may generate a plurality of folders corresponding to one or more keywords from a plurality of keywords.

For example, if a number of folders that may be generated is predetermined as a number, the cloud server 200 may generate folders in correspondence with the number. If a number of folders that may be generated is predetermined as 4, the device 100 may generate 4 folders by using 4 keywords from among obtained 10 keywords. The cloud server 200 may generate a number of folders according to an order in which keywords are detected. According to an exemplary embodiment, an order in which keywords are detected may be determined based on at least one selected from the group consisting of an accuracy rate for keywords and information about a user's preference for folders.

According to an exemplary embodiment, the cloud server 200 may use a keyword corresponding to a folder as a name of the folder.

According to an exemplary embodiment, an order in which a plurality of folders are arranged may be determined based on an order in which keywords corresponding to the plurality of folder are detected. Additionally, according to an exemplary embodiment, the device 100 may determine sizes of the plurality of folders in various ways. For example, the cloud server 200 may variously adjust a size of each folder according to an accuracy rate for a keyword corresponding to each folder. Additionally, the device 100 may variously adjust a size of each folder according to a number of pieces of content included in each folder.

In operation S3470, the cloud server 200 classifies and stores each of the plurality of pieces of content in a respectively corresponding folder of the plurality of folders, based on the keywords respectively corresponding to the folders.

According to an exemplary embodiment, the cloud server 200 may match the plurality of pieces of content with respective folders corresponding to the plurality of pieces of content, by using a result obtained by comparing keywords respectively corresponding to the plurality of folders to respective keywords of the plurality of pieces of content. For example, if first content has a keyword (for example, a dog) identical to a first keyword (for example, a dog) corresponding to a first folder or a keyword (for example, a puppy) similar to the first keyword, the cloud server 200 may match the first content with the first folder.

According to an exemplary embodiment, the cloud server 200 may match a plurality pieces of content with folders respectively corresponding to the plurality of pieces of content, by using a result obtained by comparing keywords respectively corresponding to the plurality of folders to each attribute information of the plurality of pieces of content. For example, if first content has attribute information (place: France) identical to a first keyword (for example, France) corresponding to a first folder or attribute information (place: Eiffel Tower) similar to the first keyword corresponding to the first folder, the cloud server 200 may match the first content with the first folder.

According to an exemplary embodiment, the cloud server 200 may determine whether keywords respectively corresponding to the plurality of folders are identical or similar to each keyword (or attribute information) of the plurality of pieces of content, by using Wordnet (a hierarchical lexical reference system), an ontology, or the like.

According to an exemplary embodiment, the cloud server 200 may store link information, indicating a location where the content is stored, in a corresponding folder, or move the content to the corresponding folder and store the content in the corresponding folder.

In operation S3480, the cloud server 200 transmits information about the plurality of folders, into which the plurality of pieces of content are classified, to the device 100.

In operation S3490, the device 100 displays the plurality of folders into which the plurality of pieces of content are classified.

According to an exemplary embodiment, a plurality of folders may be expressed in various forms. For example, each of the plurality of folders may be in a shape of a file folder icon or a photo album, but is not limited thereto.

Additionally, according to an exemplary embodiment, each of the plurality of folders may be expressed in the form of an image in which thumbnail images of content respectively stored in the plurality of folders are combined. Each of the plurality of folders may be expressed by using a thumbnail image of representative content from among the plurality of pieces of content stored in the folder.

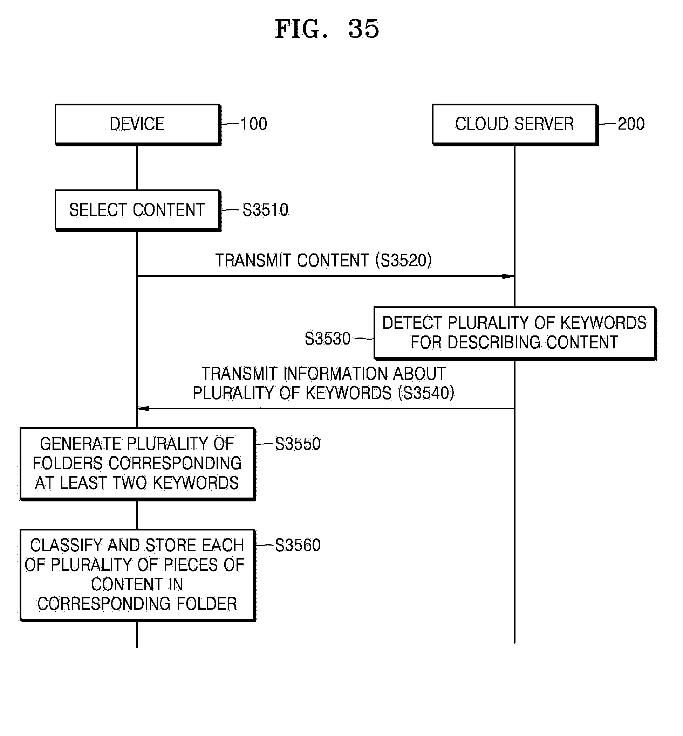

Hereinafter, an operation of detecting a plurality of keywords for describing content selected by a user, which is performed by the cloud server 200, is described in detail with reference to FIG. 35.

FIG. 35 is a flowchart of a method of classifying a plurality of pieces of content by using a plurality of keywords detected by the cloud server 200, the classifying being performed by the device 100, according to an exemplary embodiment.

In operation S3510, the device 100 selects a piece of content from among a plurality of pieces of content. According to an exemplary embodiment, the device 100 may select one piece of content based on a user input. For example, the device 100 may receive a user input of selecting one piece of content.

In operation S3520, the device 100 transmits the selected piece of content to the cloud server 200. For example, the device 100 may request detection of a plurality of keywords by transmitting the selected one piece of content to the cloud server 200.

The device 100 may transmit the selected one piece of content to the cloud server 200, or transmit identification information about the selected one piece of content to the cloud server 200. For example, if the selected one piece of content is content stored in the cloud server 200, the device 100 may transmit identification information of the selected one piece of content (for example, a name of the selected one piece of content, or an index of the selected one piece of content) to the cloud server 200.

In operation S3530, the cloud server 200 detects a plurality of keywords for describing the selected piece of content.

According to an exemplary embodiment, if a plurality of keywords are predefined for metadata of the selected one piece of content, the cloud server 200 may identify a plurality of keywords in the metadata of the selected one piece of content. Additionally, the cloud server 200 may detect a plurality of keywords for describing the selected one piece of content, by using at least one selected from the group consisting of attribute information of the selected one piece of content and image analysis information about the selected one piece of content.

For example, the cloud server 200 may generate a plurality of keywords, by generalizing attribute information about the selected one piece of content. Generalization of attribute information, described herein, may refer to expressing attribute information by using an upper-layer language, based on Wordnet (a hierarchical language reference system).

According to an exemplary embodiment, the cloud server 200 generalizes location information included in the attribute information as upper-layer information, and thus, detect a keyword from the generalized location information. For example, the cloud server 200 may express a GPS coordinate value (a latitude of 37.4872222 and a longitude of 127.0530792) as an upper concept such as a zone, a building, an address, a name of a region, a name of a city, a name of a nation, or the like. In this case, the building, the address, the name of the region, the name of the city, or the name of the nation may be detected as a keyword for the selected one piece of content.

Additionally, the cloud server 200 may generalize time information included in attribute information to upper-layer information. The device 100 may generalize time information, expressed in the units of an hour, a minute, and a second (for example, 05:10:30 PM, October 9, 2012) into upper-layer information, and express the time information as morning/afternoon/evening, a date, a week, a month, a year, a holiday, a weekend, a work date, a weekday, and/or another time zone. A day, a week, a month, a year, an anniversary, or the like may be detected as a keyword for the selected one piece of content.

According to an exemplary embodiment, the cloud server 200 may generalize attribute information according to a predetermined generalization level. For example, a generalization level for time information may be set so that the time information is expressed in the units of a 'month'. The cloud server 200 may set a generalization level automatically or based on a user input.

According to an exemplary embodiment, the cloud server 200 may detect a boundary of an object included in an image. According to an exemplary embodiment, the cloud server 200 may detect a type of an object, a name of an object, or the like, by comparing a boundary of an object included in an image to a predefined template. If the boundary of the object is similar to a template of a vehicle, the object included in the image may be recognized as a vehicle. In this case, the cloud server 200 may generate a keyword 'car', by using information about the object included in the image.

According to an exemplary embodiment, the cloud server 200 may perform face recognition on the object included in the image. For example, the cloud server 200 may detect an area of a face of a person from the selected one piece of content. A method of detecting an area of a face may be a knowledge-based method, a feature-based method, a template-matching method, or an appearance-based method, but is not limited thereto.

The cloud server 200 may extract characteristics of the face (for example, shapes of eyes, a nose, or a lip, or the like) from the detected area of the face. Various methods such as a Gabor filter or a local binary pattern (LBP) may be used a method of extracting characteristics of a face from an area of the face. However, a method of extracting characteristics of a face from an area of the face is not limited thereto.

The cloud server 200 may compare the characteristics of the face, extracted from the area of the face in the selected one piece of content, to characteristics of faces of users that are already registered. For example, if the extracted characteristics of the face is similar to characteristics of a face of a first user (for example, Tom), the cloud server 200 may determine that an image of the first user (for example, Tom) is included in the selected one piece of content. The device 100 may generate a keyword 'Tom', based on a result of face recognition.

According to an exemplary embodiment, the cloud server 200 may compare an area of the image to a color map (a color histogram), and thus, extract visual characteristics of the image such as color arrangement, a pattern, or an atmosphere of the image as image analysis information. The cloud server 200 may generate a keyword by using the visual characteristics of the image. For example, if the selected one piece of content is an image with a sky in a background thereof, the cloud server 200 may detect a keyword 'sky blue' by using visual characteristics of the image with the sky in the background thereof.

Additionally, according to an exemplary embodiment, the cloud server 200 may divide the image in the units of areas, then, find a cluster that is most similar to each area, and thus, detect a keyword connected to the cluster.

According to an exemplary embodiment, the cloud server 200 may perform character recognition on a print character image included in the selected one piece of content. OCR refers to a technology of converting Korean, English, or number fonts included in an image document into a character code that may be edited by the cloud server 200. For example, the cloud server 200 may detect keywords such as 'Happy' and 'Birthday' by performing character recognition on a print character image, 'Happy Birthday' included in the content.

In operation S3540, the cloud server 200 transmits information about the plurality of keywords to the device 100. For example, the cloud server 200 may transmit the detected plurality of keywords, information about an order in which the plurality of keywords are detected, or the like to the device 100. The order in which the plurality of keywords are detected may be determined based on at least one selected from the group consisting of an accuracy rate for keywords and information about a user's preference for folders.

In operation S3550, the cloud server 100 generates a plurality of folders corresponding to at least two keywords, respectively.

According to an exemplary embodiment, the device 100 may generate a plurality of folders corresponding to all the plurality of keywords received from the cloud server 200. Additionally, the device 100 may generate a plurality of folders corresponding to one or more keywords from among the plurality of keywords.

For example, if a number of folders that may be generated is predetermined, the device 100 may generate folders in correspondence with the predetermined number. If a number of folders that may be generated is predetermined as 4, the device 100 may generate 4 folders by using 4 keywords from among the received 10 keywords. The device 100 may generate a number of folders according to an order in which keywords are detected.

According to an exemplary embodiment, the device 100 may generate a plurality of folders corresponding to at least two keywords selected by a user. For example, the device 100 may display a list of the received plurality of keywords on a screen, and receive a user input of selecting one or more keywords from among the plurality of keywords. Then, the device 100 may generate a plurality of folders corresponding to the one or more keywords.

According to an exemplary embodiment, an order in which the plurality of folders are arranged may be determined based on an order in which keywords corresponding to the plurality of folder are detected. Additionally, according to an exemplary embodiment, the device 100 may determine sizes of the plurality of folders in various ways. For example, the device 100 may variously adjust a size of each folder according to an accuracy rate for each keyword corresponding to each folder or according to a number of pieces of content included in each folder.

In operation S3560, the device 100 classifies and stores each of the plurality of pieces of content in a corresponding folder of the plurality of folders, based on the keywords respectively corresponding to the folders.

According to an exemplary embodiment, the device 100 may classify a plurality of pieces of content, by matching each of the plurality of pieces of content with a corresponding folder of the plurality of folders by using a result obtained by comparing keywords respectively corresponding to the plurality of folders to respective keywords of (or respective attribute information about) the plurality of pieces of content.

According to an exemplary embodiment, storing of each of a plurality of pieces of content in a corresponding folder may refer to storing link information, indicating a location where each of the plurality of pieces of content is stored, in the corresponding folder, or changing a location where each of the plurality of pieces of content is stored to the corresponding folder.

Operations S3550 through S3560 correspond to operations S230 and S240 described with reference to FIG. 2. Thus, a description thereof is not provided here again.

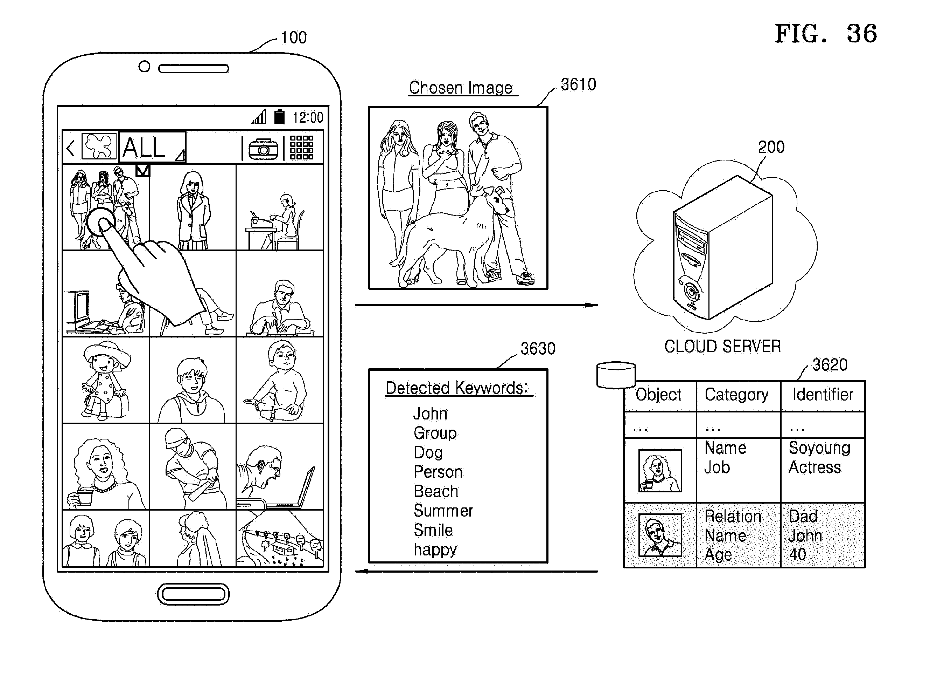

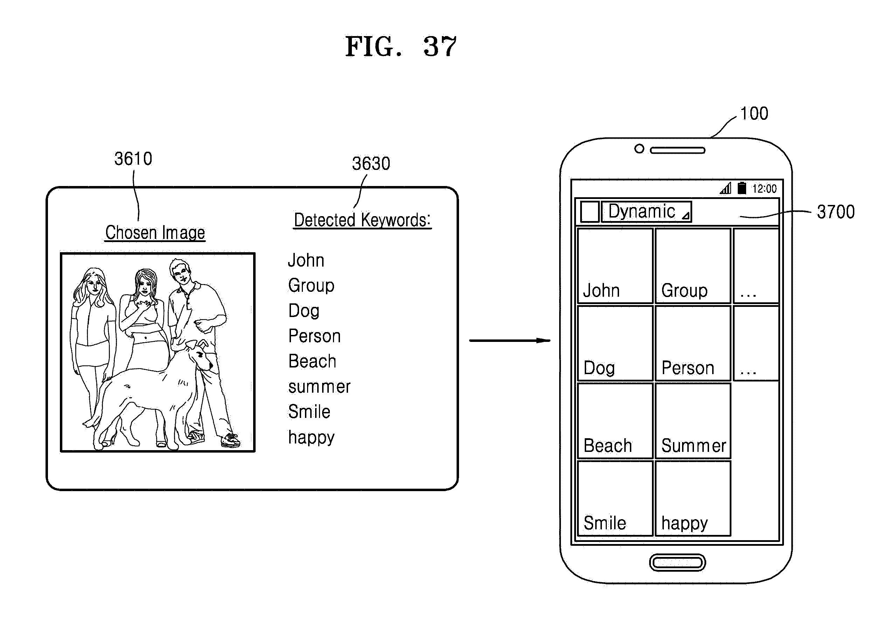

FIG. 36 is a diagram showing a process of receiving information about a plurality of keywords from the cloud server, the receiving being performed by the device 100, according to an exemplary embodiment. FIG. 37 is a diagram showing a process of classifying content based on information about a plurality of keywords received from the cloud server, the classifying being performed by the device 100, according to an exemplary embodiment.

According to an exemplary embodiment, the device 100 may select a family picture 3610 photographed with a puppy as reference content for generating a dynamic folder, based on a user input. The device 100 may request detection of keywords by transmitting the family picture 3610 photographed with the puppy to the cloud server 200.

The cloud server 200 may obtain image analysis information about the family picture 3610. For example, the cloud server 200 may compare an area of the family picture 3610 to a color map, and thus, extract visual characteristics of the family picture 3610, such as color arrangement, a pattern, or an atmosphere in the family picture 3610, as the image analysis information.

The cloud server 200 may detect an area of a face of a person from the family picture 3610. Additionally, the cloud server 200 may extract characteristics of the face from the detected area of the face. The cloud server 200 may compare information 3620 about the extracted characteristics of the face to characteristics of faces of users that are already registered, and thus, detect users included in the family picture 3610 (for example, John, Dad, and the like).

The cloud server 200 may detect a boundary of an object included in the family picture 3610. For example, if the boundary of the object is similar to a template of a puppy, the object included in the family picture 3610 may be recognized as a puppy. The cloud server 200 may generate a keyword 'Dog', by using information about the object included in the family picture 3610.

Additionally, the cloud server 200 may detect keywords (for example, smile, happy, beach, and the like) from annotation information input by a user with respect to the family picture 3610.

The cloud server 200 may detect keywords (for example, beach, summer, and the like) by using basic attribute information (for example, time information, location information, or the like) about the family picture 3610.

If the detecting of a plurality of keywords 3630 for describing the family picture 3610 is finished, the cloud server 200 may transmit information about the plurality of keywords 3630 (for example, John, Group, Dog, Person, Beach, Summer, Smile, and happy) to the device 100.

Referring to FIG. 37, the device 100 may generate a plurality of folders 3700 by using the plurality of keywords 3630 received from the cloud server 200. For example, the device 100 may generate a John folder, a Group folder, a Dog folder, a Person folder, a Beach folder, a Summer folder, a Smile folder, and a happy folder.

The device 100 may classify a plurality of pieces of content into folders respectively corresponding thereto, based on a result obtained by comparing keywords respectively corresponding to the plurality of folders 3700 to respective keywords (predefined keywords or keywords detected from attribute information) for the plurality of pieces of content stored in the device 100.

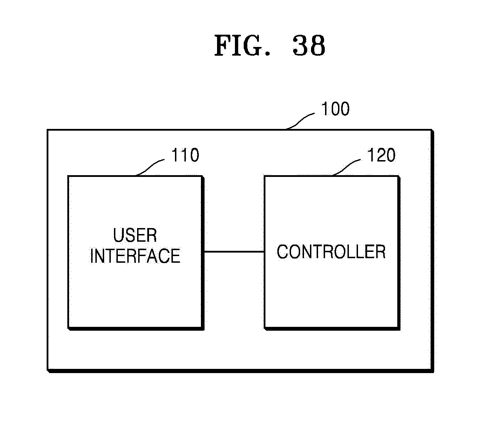

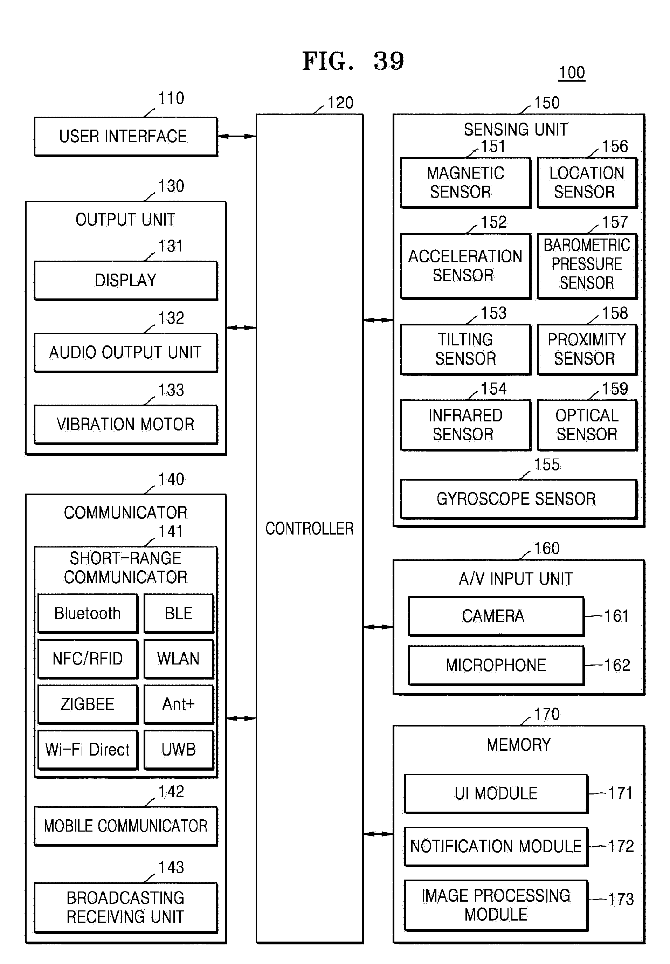

FIGS. 38 and 39 are block diagrams of the device 100, according to an exemplary embodiment.

As shown in FIG. 38, according to an exemplary embodiment, the device 100 includes a user interface 110 and a controller 120. However, elements shown in FIG. 38 are not always essential elements. The device 100 may be implemented by using more or less elements than those shown in FIG. 38.

For example, as shown in FIG. 39, according to an exemplary embodiment, the device 100 further includes an output interface 130, a communicator 140, a sensor 150, an audio-video (A/V) input interface 160, and a memory 170, in addition to the user interface 110 and the controller 120.

Hereinafter, the elements shown in FIG. 12 are described.

The user interface 110 is an element for inputting data so that the user may control the first device 100. For example, the user interface 110 may include a key pad, a dome switch, a touch pad (which may be a capacitive overlay type, a resistive overlay type, an infrared beam type, a surface acoustic wave type, an integral strain gauge type, or a piezo electric type), a jog wheel, or a jog switch, but is not limited thereto.

The user interface 110 may receive an input of selecting one piece of content from among a plurality of pieces of content. According to an exemplary embodiment, a user input of selecting content may be various. For example, a user input include a key input, a touch input, a motion input, a bending input, a voice input, a multiple input, or the like.

According to an exemplary embodiment, the user interface 110 may receive a user input of selecting first content and second content from among the plurality of pieces of content.

The user interface 110 may receive an input of selecting a first folder from among a plurality of folders. Additionally, the user interface 110 may receive an input of selecting first content included in the first folder.

The user interface 110 may also receive an input of designating a first folder, from among the plurality of folders, as a preference folder. The user interface 110 may receive an input of requesting sharing of the first folder, from among the plurality of folders.

The user interface 110 may receive an input of selecting at least two keywords in a list of the plurality of keywords.

The controller 120 controls all operations of the device 100. For example, the controller 120 executes programs stored in the memory 170 to control the user interface 110, the output interface 130, the communicator 140, the sensor 150, and the A/V input interface 160.

The controller 120 may obtain a plurality of keywords for describing selected content. For example, the controller 120 may identify attribute information about the selected content, generalize the attribute information, and thus, generate a plurality of keywords.

The controller 120 may detect the plurality of keywords by using image analysis information about the selected content. The controller 120 may generate a plurality of folders corresponding to at least two keywords from among the obtained plurality of keywords.

The controller 120 may classify the plurality of pieces of content according to keywords respectively corresponding to the plurality of folders, and store each of the plurality of pieces of content in a corresponding folder of the plurality of folders. For example, the controller 120 may move each of the plurality of pieces of content to each folder corresponding thereto, and store each of the plurality of pieces of content in each folder corresponding thereto. Additionally, the controller 120 may store link information about the plurality of pieces of content in the folder corresponding thereto.

The controller 120 may classify a plurality pieces of content, by using a result obtained by comparing keywords respectively corresponding to the plurality of folders to each attribute information of the plurality of pieces of content. For example, the controller 120 may match a plurality pieces of content with folders respectively corresponding thereto, by using a result obtained by comparing keywords respectively corresponding to the plurality of folders to each attribute information of the plurality of pieces of content.

Additionally, the controller 120 may classify the plurality of pieces of content, by using a result obtained by comparing keywords respectively corresponding to the plurality of folders to respective keywords for the plurality of pieces of content.

The controller 120 may control a display 131 to display at least one piece of content stored in a first folder.

The controller 120 may obtain a plurality of keywords from first content, and generate a plurality of new folders corresponding to at least two keywords from among the plurality of keywords obtained from the first content. Then, the controller 120 may reclassify the plurality of pieces of content according to keywords respectively corresponding to the plurality of new folders.

If an input of designating a first folder from among a plurality of folders to a preference folder is received, the controller 120 may store information about the first folder in the memory 170. For example, the controller 120 may add identification information about the first folder (for example, a name of the first folder) to a favorites list, and store and manage each link information of the plurality of pieces of content included in the first folder in the memory 170.

If the first content and second content are selected from among the plurality of folders, the controller 120 may detect common keywords that are common between a plurality of first keywords for describing the first content and a plurality of second keywords for describing the second content. The controller 120 may generate a plurality of folders corresponding to the common keywords, classify the plurality of pieces of content according to keywords respectively corresponding to the plurality of folders, and then, store the plurality of pieces of content in folders respectively corresponding thereto.

The output interface 130 outputs an audio signal, a video signal, or a vibration signal, and includes the display 131, an audio output interface 132, and a vibration motor 133.

The display 131 may display information processed by the device 100. For example, the display 131 may display a plurality of pieces of content, a plurality of keywords for describing content, a plurality of folders, or the like.

The display 131 may display the plurality of folders into which the plurality of pieces of content are classified. According to an exemplary embodiment, an order in which a plurality of folders are arranged may be determined based on an order in which keywords corresponding to the plurality of folders are detected. Additionally, sizes of a plurality of folders may be determined in various ways. For example, a size of each folder may be adjusted differently according to an accuracy rate for keywords corresponding to each folder.

According to an exemplary embodiment, the display 131 may display each folder name of the plurality of folders (for example, keywords respectively corresponding to folders) or a number of pieces of content, included in each of the plurality of folders, on each folder.

According to an exemplary embodiment, the display 131 may display at least one piece of content stored in the first folder, based on an input of selecting the first folder from among the plurality of folders.

According to an exemplary embodiment, the device 100 may arrange content included in the first folder, based on at least one selected from the group consisting of information about time when the content is generated, information about a location where the content is generated, information about a capacity of the content, and information about a resolution of the content.

The display 131 may display a list of the plurality of keywords for describing the selected content. According to an exemplary embodiment, the list of the plurality of keywords may be arranged according to an order in which the plurality of keywords are detected. The order in which the plurality of keywords are detected may be determined based on at least one selected from the group consisting of accuracy information about keywords and information about a user's preference for folders.

If the display 131 and a touch pad form a layered structure to constitute a touch screen, the display 131 may be also used as an input device as well as an output unit. The display 231 may include at least one from among a liquid crystal display (LCD), a thin film transistor-liquid crystal display (TFT-LCD), an organic light-emitting diode (OLED), a flexible display, a three-dimensional (3D) display, and an electrophoretic display. According to an implementation type of the device 100, the device 100 may include two or more displays 131.

The audio output interface 132 outputs audio data which is received from the communicator 140 or stored in the memory 170. The audio output interface 132 outputs an audio signal related to functions performed at the second device 200 (for example, a call signal reception sound, a message reception sound, etc.). The sound output unit 232 may include a speaker, a buzzer, and so on.

The vibration motor 133 may output a vibration signal. For example, the vibration motor 133 may output a vibration signal which corresponds to an output of audio data or video data (for example, a call signal reception sound, a message reception sound, etc.). Additionally, the vibration motor 133 may output a vibration signal if a touch is input to a touchscreen.

The communicator 140 may include one or more elements for communication between the device 100 and the cloud server 200, the device 100 and an external apparatus, the device 100 and the SNS server 2600, or the device 100 and an external wearable device. For example, the communicator 140 includes a short-range communicator 141, a mobile communicator 142, and a broadcasting receiver 143.

The short-range communicator 141 may include a Bluetooth communicator, a Bluetooth low energy (BLE) communicator, a near-field communication/radio-frequency identification (NFC/RFID) unit, a wireless local area network (WLAN) Wi-Fi communicator, a Zigbee communicator, an infrared Data Association (IrDA) communicator, a Wi-Fi Direct (WFD) communicator, a ultra wideband (UWB) communicator, or an Ant+ communicator, but is not limited thereto.

The mobile communicator 142 transceives a wireless signal with at least one selected from the group consisting of a base station, an external terminal, and a server on a mobile communication network. The wireless signals may include a voice call signal, a video phone call signal or various forms of data used to transceive text or multimedia messages.

The broadcasting receiver 143 receives broadcasting signals and/or broadcasting-related information from outside via a broadcasting channel. The broadcasting channel may be a satellite channel or a terrestrial broadcast channel. According to exemplary embodiments, the device 100 may not include the broadcasting receiver 143.

The communicator 140 may share at least one piece of content included in the first folder with an external apparatus, based on an input of requesting sharing of the first folder, from among a plurality of folders. The external apparatus may be at least one selected from the group consisting of a cloud server, an SNS server, another device of the user, and a wearable device which are connected to the device 100, but is not limited thereto.

For example, the communicator 140 may transmit link information (for example, storage location information, a URL, or the like) of at least one piece of content included in the first folder to the external apparatus. Additionally, the communicator 140 may transmit at least one piece of content included in the first folder to the external apparatus.

The sensor 150 may sense a state of the device 100 or a state near the device 100, and a state of a user who wears the device 100, and transmit the sensed information to the controller 120.

The sensor 150 may include at least one selected from the group consisting of a magnetic sensor 151, an acceleration sensor 152, a tilting sensor 153, an infrared sensor 154, a gyroscope sensor 155, a location sensor 156 (for example, a GPS), a barometric pressure sensor 157, a proximity sensor 158, and an optical sensor 159, but is not limited thereto. The sensor unit 150 may also include a temperature sensor, an illumination sensor, a pressure sensor, an iris recognition sensor, or the like. Functions of the respective sensors may be inferred from the name of the sensors by those of ordinary skill in the art. Thus, a detailed description thereof will not be provided here.

The A/V input interface 160 functions to input audio or video signals, and includes a camera 161 and a microphone 162. The camera 161 may obtain an image frame such as a still image or a moving image, in a video phone mode or a photographing mode. An image captured through the camera 161 may be processed through the controller 120 or an additional image processing unit (not shown).

The image frame processed by the camera 261 may be stored in the memory 170 or transmitted to the outside through the communicator 140. The A/V input interface 160 may include two or more cameras 161 according to a configuration type of the device 100.

The microphone 162 receives an external sound signal and processes the external sound signal into electrical voice data. For example, the microphone 162 may receive a sound signal from an external device or a speaker. The microphone 162 may employ various noise removal algorithms for removing noise that may be generated in a process of receiving an input of an external sound signal.

The memory 170 may store a program for processing and controlling the controller 120. The memory 170 may also store data which is input or output (such as a plurality of pieces of content, a plurality of folders, a list of preference folders, or the like).

The memory 170 may include at least one storage medium from the group consisting of a flash memory, a hard disk, a multimedia card micro, a card-type memory such as a secure digital (SD) or extreme digital (XD) memory, a random access memory (RAM), a static random access memory (SRAM), a read-only memory (ROM), an electrically erasable programmable read-only memory (EEPROM), a programmable read-only memory (PROM), a magnetic memory, a magnetic disc, and an optical disc. Additionally, the device 100 may operate a web storage for performing a storage function of the memory 170 on the internet.

The programs stored in the memory 170 may be classified into a plurality of portions according to functions. For example, the programs are classified into a UI portion 171, a notification portion 172, and an image processing portion 172.

The UI portion 171 may provide a specialized UI or GUI which interworks with the device 100 according to applications. The notification portion 172 may generate a signal for indicating an occurrence of events in the device 100. The notification portion 172 may output a notification signal in the form of a video signal via the display 131, in the form of an audio signal via the audio output interface 132, or in the form of a vibration signal via the vibration motor 133.

The image processing portion 173 may obtain object information, edge information, atmosphere information, or color information included in a captured image by analyzing the captured image.

According to an exemplary embodiment, the image processing portion 173 may detect a boundary of an object included in an image. According to an exemplary embodiment, the image processing portion 173 may detect a type of an object, a name of an object, or the like, by comparing the boundary of the object included in the image to a predefined template. For example, if the boundary of the object is similar to a template of a vehicle, the image processing portion 173 may recognize the object included in the image as a vehicle.

According to an exemplary embodiment, the image processing portion 173 may perform face recognition on the object included in the image. For example, the image processing portion 173 may detect an area of a face of a person from the selected content. A method of detecting an area of a face may be a knowledge-based method, a feature-based method, a template-matching method, or an appearance-based method, but is not limited thereto.

The image processing portion 173 may extract characteristics of the face (for example, shapes of main parts of the face such as eyes, a nose, or a lip, or the like) from the detected area of the face. Various methods such as a Gabor filer or an LBP may be used a method of extracting characteristics of a face from an area of the face. However, a method of extracting characteristics of a face from an area of the face is not limited thereto.

The image processing portion 173 may compare the characteristics of the face, extracted from the area of the face in the selected content, to characteristics of faces of users that are already registered. For example, if the extracted characteristics of the face is similar to characteristics of a face of a first user (for example, Tom), the image processing portion 173 may determine that an image of the first user (for example, Tom) is included in the selected content.

According to an exemplary embodiment, the image processing portion 173 may compare an area of the image to a color map (a color histogram), and thus, extract visual characteristics of the image such as color arrangement, a pattern, or an atmosphere of the image as image analysis information.

According to an exemplary embodiment, the image processing portion 173 may perform character recognition on a print character image included in the selected content. OCR refers to a technology of converting Korean, English, or number fonts included in an image document into a character code that may be edited by the device 100.

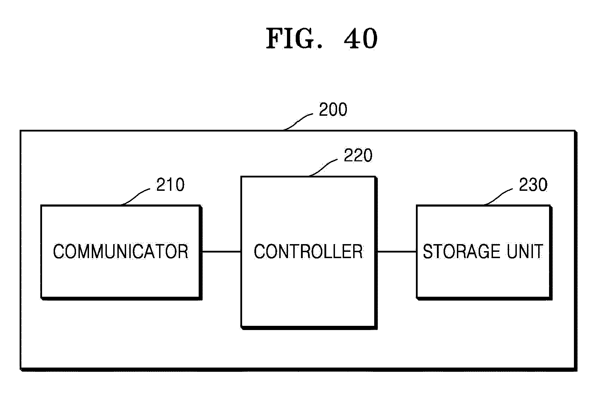

FIG. 40 is a block diagram of the cloud server 200, according to an exemplary embodiment.

As shown in FIG. 40, according to an exemplary embodiment, the cloud server 200 includes a communicator 210, a controller 220, and a storage 230. However, elements shown in FIG. 40 are not always essential elements. The cloud server 200 may be implemented by using more or less elements than those shown in FIG. 40.

Hereinafter, the elements shown in FIG. 40 are described.

The communicator 210 may include one or more elements for communication between the cloud server 200 and the device 100. The communicator 210 may include a reception unit and a transmission unit.

The communicator 210 may transmit a list of content stored in the cloud server 200 to the device 100. For example, if the communicator 210 receives a request for a list of content from the device 100 connected to the cloud server 200 via an account, the communicator 210 may transmit the list of the content stored in the cloud server 200 to the device 100.

The communicator 210 may receive a request for generating a folder based on content, selected by the device 100, from the device 100. For example, the communicator 210 may receive identification information about the selected content (for example, a name or an index of the content, or the like) from the device 100. The requesting of generation of a folder, described herein, may include requesting classification of a plurality of pieces of content stored in the cloud server 200.

The communicator 210 may transmit information about a plurality of folders, into which a plurality of pieces of content are classified, to the device 100.

The controller 220 controls all operations of the cloud server 200. For example, the controller 220 may obtain a plurality of keywords for describing content. According to an exemplary embodiment, a plurality of keywords may be at least two key words or phrases for expressing selected content.

For example, if a plurality of keywords are predefined for metadata of the selected content, the controller 220 may identify the plurality of keywords in the metadata of the selected content. Additionally, the cloud server 200 may detect a plurality of keywords for describing the selected content, by using at least one selected from the group consisting of attribute information and image analysis information about the selected content.

According to an exemplary embodiment, the controller 220 may generate a plurality of folders respectively corresponding to the obtained plurality of keywords. Additionally, the controller 220 may generate a plurality of folders corresponding to one or more keywords from the plurality of keywords.

For example, if a number of folders that may be generated is predetermined, the controller 220 may generate folders in correspondence with the predetermined number. If a number of folders that may be generated is predetermined as 4, the controller 220 may generate 4 folders by using 4 keywords from among obtained 10 keywords. The device 100 may generate a number of folders according to an order in which keywords are detected. According to an exemplary embodiment, an order in which keywords are detected may be determined based on at least one selected from the group consisting of an accuracy rate for keywords and information about a user's preference for folders.

According to an exemplary embodiment, the controller 220 may use a keyword corresponding to a folder as a name of the folder.

According to an exemplary embodiment, an order in which a plurality of folders are arranged may be determined based on an order in which keywords corresponding to the plurality of folder are detected. Additionally, according to an exemplary embodiment, the controller 220 may determine sizes of the plurality of folders in various ways. For example, the controller 220 may variously adjust a size of each folder according to accuracy rates for keywords corresponding to each folder. Additionally, the device 100 may variously adjust a size of each folder according to a number of pieces of content included in each folder.

The controller 220 may match the plurality of pieces of content with respective folders corresponding to the plurality of pieces of content, by using a result obtained by comparing keywords respectively corresponding to the plurality of folders to respective keywords for the plurality of pieces of content. For example, if first content has a keyword (for example, a dog) identical to a first keyword (for example, a dog) corresponding to a first folder or a keyword (for example, a puppy) similar to the first keyword, the controller 220 may match the first content with the first folder.

According to an exemplary embodiment, the controller 220 may match a plurality pieces of content with folders respectively corresponding thereto, by using a result obtained by comparing keywords respectively corresponding to the plurality of folders to each attribute information of the plurality of pieces of content. For example, if first content has attribute information (place: France) identical to a first keyword (for example, France) corresponding to a first folder or attribute information (place: Eiffel Tower) similar to the first keyword, the device 100 may match the first content with the first folder.

According to an exemplary embodiment, the controller 220 may determine whether keywords respectively corresponding to the plurality of folders are identical/ similar to respective keywords for (or attribute information about) the plurality of pieces of content, by using Wordnet (a hierarchical lexical reference system), an ontology, or the like.

According to an exemplary embodiment, the controller 220 may store ink information indicating a location where content is stored in a corresponding folder, or move the content to the corresponding folder and store the content in the corresponding folder.

The storage 230 may store a program for processing the controller 230 or store input/output data. For example, the cloud server 220 may construct a content database (DB), a device DB, a DB for information about characteristics of faces of users, an object template DB, or the like.

The storage 230 may store a plurality of pieces of content. For example, the storage 230 may store content uploaded by the device 100. The storage 230 may map and store identification information of the device 100 with the content.

It will be appreciated that embodiments of the present invention can be realized in the form of hardware, software or a combination of hardware and software. It will also be appreciated that storage devices and storage media are embodiments of machine-readable storage that are suitable for storing a program or programs comprising instructions that, when executed, implement embodiments of the present invention. Accordingly, certain embodiments provide a program comprising code for implementing an apparatus, system, device, terminal and/or method according to any aspect, claim, embodiment or example disclosed herein, and a machine-readable storage storing such a program.

For example, certain exemplary embodiments may be implemented through computer-readable code and/or instructions on a medium, e.g., a non-transitory computer-readable medium, to control at least one processing element to implement any above-described embodiments. The medium may correspond to any medium or media which may serve as a storage and/or perform transmission of the computer-readable code.

The computer-readable code may be recorded and/or transferred on a medium in a variety of ways, and examples of the medium include recording media, such as magnetic storage media (e.g., ROM, floppy disks, hard disks, etc.) and optical recording media (e.g., compact disc read only memories (CD-ROMs) or digital versatile discs (DVDs)), and transmission media such as Internet transmission media. Thus, the medium may have a structure suitable for storing or carrying a signal or information, such as a device carrying a bitstream according to one or more exemplary embodiments. The medium may also be on a distributed network, so that the computer-readable code is stored and/or transferred on the medium and executed in a distributed fashion. Furthermore, the processing element may include a processor or a computer processor, and the processing element may be distributed and/or included in a single device.

According to an exemplary embodiment, the device 100 may provide a user with an interface for simply classifying and searching for content, based on a selection of the content.

The foregoing exemplary embodiments and advantages are exemplary and are not to be construed as limiting. The present teaching can be readily applied to other types of apparatuses. Also, the description of the exemplary embodiments is intended to be illustrative, and not to limit the scope of the claims, and many alternatives, modifications, and variations will be apparent to those skilled in the art without departing from the scope of the inventions, as defined by the claims.

**Claims**

1. A device configured to classify images, the device comprising:

   a user interface configured to receive an input of selecting an image from the images; and
   a controller configured to:

      determine attribute information of the selected image or image analysis information of the selected image; and
      classify the images based on the attribute information or the image analysis information.

2. The device of claim 1, further comprising an interface for communicating with an external storage configured to store the images, the external storage being connected via an account of a user and implemented outside the device.

3. The device of claim 1 or 2, wherein the controller is further configured to:

   generate keywords based on the attribute information or the image analysis information; and
   classify the images based on the keywords.

4. The device of claim 3, wherein the controller is further configured to classify the images by comparing the keywords to attribute information of each of the images.

5. The device of claim 3 or 4, wherein the controller is further configured to:

   generate folders respectively corresponding to the keywords; and
   match each of the images with a corresponding folder of the folders.

6. The device of claim 5, wherein the controller is further configured to:

   store each of the images in the corresponding folder; or
   store link information for each of the images in the corresponding folder.

7. The device of claim 5 or 6, further comprising a display configured to display the folders,
   wherein the user interface is further configured to receive an input of selecting a folder from the displayed folders, and
   the controller is further configured to control the display to display an image that is matched with the folder.

8. The device of claim 5, 6 or 7, wherein the user interface is further configured to receive an input of designating a folder of the folders as a preference folder, and
the controller is further configured to add information of the preference folder to a list of preference folders.

9. The device of any of claims 5 to 8, wherein the user interface is further configured to receive an input of requesting sharing of a folder of the folders, and
the device further comprises a communicator configured to share, with an external apparatus, an image that is matched with the folder.

10. The device of any of claims 3 to 9, further comprising a display configured to display a list of the keywords, wherein the user interface is further configured to receive an input of selecting at least two keywords from the displayed list of the keywords, and
the controller is further configured to generate folders respectively corresponding to the at least two keywords.

11. The device of any preceding claim, wherein the user interface is further configured to receive an input of selecting a new image from the images, and
the controller is further configured to:

determine new attribute information of the selected new image or new image analysis information of the selected new image; and
classify the images based on the new attribute information or the new image analysis information.

12. The device of any preceding claim,
wherein the user interface is configured to receive an input of selecting a first image and a second image from the images, and
wherein the controller is configured to:

determine common attribute information that is common between first attribute information of the first image and second attribute information of the second image; and
classify the images based on the common attribute information.

13. A method of classifying images, the classifying being performed by a device, the method comprising:

receiving an input of selecting an image from the images;
determining attribute information of the selected image or image analysis information of the selected image; and
classifying the images based on the attribute information or the image analysis information.

14. The method of claim 13, wherein the classifying comprises:

generating keywords based on the attribute information or the image analysis information; and
classifying the images based on the keywords.

15. A non-transitory computer-readable storage storing a program comprising instructions to cause a computer to perform the method of any of claims 13 to 14.

FIG. 1A

EP 2 980 712 A1

# FIG. 1B

101 100

Camera

Dynamic folder

100-1

101 102

Chosen Image: Detected keywords:

Portrait
Kid
Summer
Park
Fun
Mother
Dad
Group
Smile
.
.
.

100-2

103 100

Dynamic

| Portrait | Kid | Smile |
| Summer | Park | ... |
| Fun | Mother | |
| Dad | Group | |

100-3

EP 2 980 712 A1

# FIG. 2

```
                    ( START )
                        |
                        v
    +-----------------------------------------+
    |            SELECT CONTENT               |---- S210
    +-----------------------------------------+
                        |
                        v
    +-----------------------------------------+
    |      OBTAIN PLURALITY OF KEYWORDS       |---- S220
    +-----------------------------------------+
                        |
                        v
    +-----------------------------------------+
    |      GENERATE PLURALITY OF FOLDERS      |---- S230
    |         CORRESPNDING TO AT LEAST        |
    |              TWO KEYWORDS               |
    +-----------------------------------------+
                        |
                        v
    +-----------------------------------------+
    |     CLASSIFY AND STORE PLURALITY OF     |---- S240
    |  PIECES OF CONTENT IN FOLDERS RESPECTIVELY|
    |  CORRESPONDING TO PLURALITY OF PIECES   |
    |               OF CONTENT                |
    +-----------------------------------------+
                        |
                        v
                    (  END  )
```

# FIG. 3

START

DISPLAY PLURALITY OF PIECES OF CONTENT — S310

SELECT ONE PIECE OF CONTENT FROM AMONG PLURALITY OF PIECES OF CONTENT? — S320

NO

YES

ACTIVATE IMAGE SENSOR/ CAPTURE IMAGE — S330

SELECT CAPTURED IMAGE AS REFERENCE CONTENT — S340

OBTAIN PLURALITY OF KEYWORDS — S350

GENERATE PLURALITY OF FOLDERS CORRESPNDING TO AT LEAST TWO KEYWORDS — S360

END

FIG. 4

400-1

400-2

EP 2 980 712 A1

FIG. 5A

ALL

500 — IMAGE SELECTION
510 — PHOTO ALBUM
520 — CAMERA
530 — SNS

500-1

12:00

album

Dynamic folder

500-2

EP 2 980 712 A1

# FIG. 5B

500-3

500-4

EP 2 980 712 A1

# FIG. 6

START

SELECT CONTENT — S610

DEFINE PLURALITY
OF KEYWORDS? — S620

NO

DETECT PLURALITY
OF KEYWORDS — S640

YES

IDENTIFY PLURALITY OF
KEYWORDS — S630

END

# FIG. 7

START

S710 — SELECT CONTENT

S640

S720 — IS ATTRIBUTE INFORMATION PRESENT?

NO

S740 — OBTAIN IMAGE ANALYSIS INFORMATION ABOUT CONTENT

YES

S730 — GENERALIZE ATTRIBUTE INFORMATION

S750 — GENERATE PLURALITY OF KEYWORDS

S760 — GENERATE PLURALITY OF FOLDERS CORRESPONDING TO TO AT LEAST TWO KEYWORDS

END

# FIG. 8

800

| | CONTENT 1 (801) | CONTENT 2 (802) | CONTENT 3 (803) | · · · |
|---|---|---|---|---|
| CONTENTS / METADATA | | | | |
| TYPE (810) | JPEG | JPEG | PNG | · · · |
| TIME (811) | 2012.5.3 15:13 | 2012.3.4 14:34 | 2013.2.10 10:40 | · · · |
| LOCATION (GPS) (812) | LATITUDE:: 37; 25; 26.928··· LONGITUDE: 126; 35; 31.235··· | LATITUDE:: 33; 51; 23.9999··· LONGITUDE: 151; 12; 55.235··· | LATITUDE:: 37; 25; 26.928··· LONGITUDE: 126; 35; 31.235··· | · · · |
| RESOLUTION (813) | 3264X2736 | 1024X680 | 720X1280 | · · · |
| SIZE (814) | 4.2MB | 171KB | 385KB | · · · |
| WEATHER (815) | Cloudy | cloudy | Rain | · · · |
| TEMPERATURE (816) | 20 ℃ | 16 ℃ | 10 ℃ | · · · |
| COLLECTING DEVICE (817) | Mobile phone | Tablet | Mobile phone | · · · |
| ADDITIONAL USER INFORMATION (818) | Happy, Friend, | Sad, Family | | · · · |
| OBJECT INFORMATION (819) | User 1, User 2, Dad, Mom | Portrait, Flower | Glass, Chair, Dog | · · · |
| ⋮ | ⋮ | ⋮ | ⋮ | |

EP 2 980 712 A1

# FIG. 9

Chosen Content (900)

910

| CONTENTS METADATA | CHOSEN CONTENT |
|---|---|
| TYPE | JPEG |
| TIME | 2012.5.3 15:13 |
| LOCATION | 2012.5.3 26.928··· LONGITUDE:: 126; 35; 31.235··· |
| RESOLUTION | 3264X2736 |
| SIZE | 4.2MB |
| WEATHER | Cloudy |
| EMPERATURE | 20 °C |
| COLLECTING DEVICE | Mobile phone |
| OBJECT INFORMATION | Me, Mom, Dad, Kid, Smile, Fun Family··· |
| ADDITIONAL USER INFORMATION | Happy, Birthday ··· |
| ⋮ | ⋮ |

Detecting ......

Keywords (920)

Portrait

Kid

Summer

Park

Fun

Mother

EP 2 980 712 A1

# FIG. 10

Chosen Content(1000)

100

1010
Color map

12:00

1020

OCR(1030)
Fun Family

Image processing

1040
Image Analysis Information

Me, Mom, Dad, Kid, Smile, Fun Family forest···

Keywords (1050)

Kid

Mother

Dad

Fun

EP 2 980 712 A1

# FIG. 11

START

S1105 — GENERATE PLURALITY OF FOLDERS

i=1, n=1

S1110 — DEFINE KEYWORD FOR NTH CONTENT?

NO → S1120 — DETECT SIMILARITY BETWEEN KEYWORDS CORRESPONDING TO ITH FOLDER AND ATTRIBUTE INFORMATION ABOUT NTH CONTENT

YES

S1115 — DETECT SIMILARITY BETWEEN KEYWORDS CORRESPONDING TO ITH FOLDER AND KEYWORD FOR NTH CONTENT

S1150 — i = i + 1, n=1

S1140 — n = n + 1

S1125 — SIMILARITY > THRESHOLD VALUE?

NO

YES

S1130 — MATCH ITH FOLDER WITH NTH CONTENT

S1135 — IS NTH CONTENT LAST CONTENT?

NO

YES

S1145 — IS ITH FOLDER LAST FOLDER?

NO

YES

S1155 — DISPLAY PLURALITY OF FOLDERS

END

FIG. 12

Chosen Content (1200)

Dynamic Folder (1210)

1211 — Portrait

1212 — Kid

1213 — Summer

1214 — Park

1215 — Fun

1216 — Mother

Photo Album (1220)

1221

1222

1223

EP 2 980 712 A1

# FIG. 13

# FIG. 14

```
START
  │
  ▼
SELECT CONTENT                                    ── S1410
  │
  ▼
OBTAIN PLURALITY OF KEYWORDS                      ── S1420
  │
  ▼
DISPLAY LIST OF PLURALITY OF KEYWORDS             ── S1430
  │
  ▼
RECEIVE INPUT OF SELECTING AT LEAST              ── S1440
TWO KEYWORDS IN LIST
  │
  ▼
GENERATE PLURALITY OF FOLDERS                    ── S1450
CORRESPONDING TO AT LEAST TWO KEYWORDS
  │
  ▼
CLASSIFY AND STORE PLURALITY OF                  ── S1460
PIECES OF CONTENT
  │
  ▼
END
```

# FIG. 15

1500-1

1500-2

EP 2 980 712 A1

# FIG. 16

# FIG. 17

START

SELECT FIRST CONTENT AND SECOND CONTENT — S1710

EXTRACT COMMON KEYWORDS — S1720

GENERATE PLURALITY OF FOLDERS
CORRESPONDING TO COMMON KEYWORDS — S1730

CLASSIFY PLURALITY OF PIECES OF CONTENT
ACCORDING TO COMMON KEYWORDS RESPECTIVELY
CORRESPONDING TO PLURALITY OF FOLDERS — S1740

END

# FIG. 18A

1800-1

Chosen Image:

Keywords:

Portrait
Room
Smile
Long hair
microphone

1811     1812

1800-2

Chosen Image:

Keywords:

Portrait
School
Smile
Long hair

1821     1822

ALL

12:00

100

# FIG. 18B

EP 2 980 712 A1

1800-1

Chosen Image:

Keywords:

| Portrait |

Room

| Smile |

| Long hair |

microphone

⋮

1811                    1812

DETECT COMMON
KEYWORDS

⬇

□ ▭

📶 🔋 12:00

□ | Dynamic ◢ |

| Portrait | Smile |
| Long hair | |

1800-3

1800-2

Chosen Image:

Keywords:

| Portrait |

School

| Smile |

| Long hair |

⋮

1821                    1822

# FIG. 19

START

SELECT CONTENT — S1910

DEFINE PLURALITY OF KEYWORDS> — S1920

DETECT RESPECTIVE ACCURACY RATES FOR PLURALITY OF KEYWORDS — S1930

DETERMINE ORDER IN WHICH PLURALITY OF KEYWORDS ARE DETECTED, ACCORDING TO ACCURACY RATE — S1940

END

# FIG. 20

Camera

2000 — Dynamic folder

12:00

**2000-1**

102

Detected keywords:

Chosen Image:

| Portrait | (4.00%) |
| Kid | (3.80%) |
| Summer | (3.30%) |
| Park | (3.30%) |
| Fun | (3.10%) |
| Mother | (2.80%) |
| Dad | (2.40%) |
| Group | (2.40%) |
| Smile | (2.20%) |

2000    2010    2020

**2000-2**

EP 2 980 712 A1

# FIG. 21

```
                    ┌─────────┐
                    │  START  │
                    └────┬────┘
                         ↓
    ┌──────────────────────────────────────────┐
    │            SELECT CONTENT                 │──── S2110
    └──────────────────────┬───────────────────┘
                           ↓
    ┌──────────────────────────────────────────┐
    │   OBTAIN PLURALITY OF KEYWORDS FOR        │──── S2120
    │     DESCRIBING SELECTED CONTENT           │
    └──────────────────────┬───────────────────┘
                           ↓
    ┌──────────────────────────────────────────┐
    │ DETERMINE ORDER IN WHICH PLURALITY OF     │──── S2130
    │ KEYWORDS ARE DETECTED, ACCORDING TO       │
    │   USER'S PREFERENCE FOR FOLDERS           │
    └──────────────────────┬───────────────────┘
                           ↓
    ┌──────────────────────────────────────────┐
    │      GENERATE PLURALITY OF FOLDERS        │──── S2140
    │ CORRESPONDING TO AT LEAST TWO KEYWORDS    │
    └──────────────────────┬───────────────────┘
                           ↓
                    ┌─────────┐
                    │   END   │
                    └─────────┘
```

# FIG. 22

100

**Chosen Image:**

2200

**Detected keywords:**

| | |
|---|---|
| Portrait | (4.00%) |
| Kid | (3.80%) |
| Summer | (3.30%) |
| Park | (3.30%) |
| Fun | (3.10%) |
| Mother | (2.80%) |
| Dad | (2.40%) |
| Group | (2.40%) |
| Smile | (2.20%) |

2200-1    2210

Dynamic

| Portrait | Kid | Smile |
|---|---|---|
| Summer | Park | ... |
| Fun | Mother | |
| Dad | Group | |

12:00

REFLECT INFORMATION ABOUT USER'S PREFERENCE FOR FOLDERS

100

**Chosen Image:**

2200

**Detected keywords:**

**Kid**
Portrait
Park
Mother
Dad
Summer
Group
Fun
Smile

2200-2    2220

Dynamic

| Kid | Portrait | Smile |
|---|---|---|
| Park | Mother | ... |
| Dad | Summer | |
| Group | Fun | |

12:00

# FIG. 23

Chosen Image:

2310

Detected keywords:

| | |
|---|---|
| Portrait | (4.00%) |
| Kid | (3.80%) |
| Summer | (3.30%) |
| Park | (3.30%) |
| Fun | (3.10%) |
| Mother | (2.80%) |
| Dad | (2.40%) |
| Group | (2.40%) |
| Smile | (2.20%) |

2300-1     2320

100

12:00

Dynamic

Smile

...

Portrait

Kid          Summer

Park     Fun

2300-2

# FIG. 24

START

SELECT CONTENT — S2410

OBTAIN PLURALITY OF KEYWORDS FOR DESCRIBING SELECTED CONTENT — S2420

GENERATE PLURALITY OF FOLDERS CORRESPONDING TO AT LEAST TWO KEYWORDS — S2430

CLASSIFY AND STORE EACH OF PLURALITY OF PIECES OF CONTENT IN CORRESPONDING FOLDER — S2440

S2450

SELECT NEW CONTENT? — YES

NO

END

FIG. 25A

# FIG. 25B

EP 2 980 712 A1

100

2510

ALBUM

2500-1

2510

Chosen Image:

2520

Detected Keywords:

Puppy
room
White
Cute
Animal

2500-2

# FIG. 25C

EP 2 980 712 A1

# FIG. 25D

Chosen Image: 2540

Detected Keywords: 2550

Puppy
Flower
Puppy with flower
outdoor
White
Cute

2500-6

2500-5

EP 2 980 712 A1

# FIG. 25E

2500-7

2500-8

# FIG. 26

| DEVICE | — 100 |
|---|---|

2600 —| SNS SERVER |

S2600 —| STORE PLURALITY OF PIECES OF CONTENT |

LOG IN TO SNS SERVER (S2605)

TRANSMIT INFORMATION ABOUT CONTENT STORED IN SNS SERVER (S2610)

| DISPLAY INFORMATION ABOUT CONTENT STORED IN SNS SERVER | — S2620 |

| RECEIVE INPUT OF SELECTING CONTENT | — S2630 |

REQUEST ATTRIBUTE INFORMATION RELATED TO SELECTED CONTENT (S2640)

/— S2650

| EXTRACT ATTRIBUTE INFORMATION |

TRANSMIT ATTRIBUTE INFORMATION RELATED TO SELECTED CONTENT (S2660)

| OBTAIN PLURALITY OF KEYWORDS FOR DESCRIBING SELECTED CONTENT | — S2670 |

| GENERATE PLURALITY OF FOLDERS | — S2680 |

| CLASSIFY PLURALITY OF PIECES OF CONTENT STORED IN DEVICE | — S2690 |

# FIG. 27A

EP 2 980 712 A1

# FIG. 27B

Status | Photo | Check In

Sunny

With Kim, Lee, Goo and Bae

2740

2700 — FIRST SNS SERVER

Additional Data

User Information
Relation Information
Title
Comment

2740

2750

12:45 — 100

2700-4

2700-5

EP 2 980 712 A1

# FIG. 27C

EP 2 980 712 A1

2760

**Chosen Image**

Detected Keywords:

Sunny
Friend
Graduation
Photo Studio
Group
Kim
Bae
Lee
Exciting

.
.
.

2740

2700-6

100

12:00

Dynamic

| Sunny | Friend |
| Graduation | Photo Studio |
| Group | Kim |

2700-7

# FIG. 28

2800-1

2800-2

EP 2 980 712 A1

# FIG. 29

START

DISPLAY PLURALITY OF FOLDERS — S2910

RECEIVE INPUT OF DESIGNATING FIRST FOLDER,
FROM AMONG PLURALITY OF FOLDERS,
AS PREFERENCE FOLDER — S2920

ADD INFORMATION ABOUT FIRST FOLDER
TO LIST OF PREFERENCE FOLDER — S2930

END

FIG. 30

EP 2 980 712 A1

**100**

**100**

12:00

Dynamic

3010
3021
3020

FOLDER SEARCH
ADD-TO-FAVORITES
SEND-TO-FOLDER

**Puppy**

**Hom**

**2014**

**Pink**

**Flower**

**Present**

3000-1

12:00

ALL

ALBUM

ALL

DYNAMIC FOLDER

TIME

LOCATION

PEOPLE

★ Puppy (new)

3030

★ Present

⋮

3000-2

# FIG. 31

```
        ┌─────────┐
        │  START  │
        └─────────┘
             │
             ▼
┌──────────────────────────────────────┐
│     DISPLAY PLURALITY OF FOLDERS      │──── S3110
└──────────────────────────────────────┘
             │
             ▼
┌──────────────────────────────────────┐
│ RECEIVE INPUT OF REQUESTING SHARING   │──── S3120
│ OF FIRST FOLDER FROM AMONG PLURALITY  │
│              OF FOLDERS               │
└──────────────────────────────────────┘
             │
             ▼
┌──────────────────────────────────────┐
│    SHARE AT LEAST ONE PIECE OF        │──── S3130
│ CONTENT INCLUDED IN FIRST FOLDER WITH │
│          EXTERNAL APPARATUS           │
└──────────────────────────────────────┘
             │
             ▼
        ┌─────────┐
        │   END   │
        └─────────┘
```

FIG. 32

EP 2 980 712 A1

# FIG. 33

# FIG. 34

| DEVICE | ──100 |
|--------|-------|

| CLOUD SERVER | ──200 |
|--------------|-------|

ESTABLISH COMMUNICATION LINK (S3400)

STORE PLURALITY OF PIECES OF CONTENT ── S3410

TRANSMIT LIST OF CONTENT STORED IN CLOUD SERVER (S3420)

SELECT CONTENT ── S3430

TRANSMIT REQUEST FOR GENERATING FOLDER (S3440)

S3450 ── OBTAIN PLURALITY OF KEYWORDS FOR DESCRIBING CONTENT

S3460 ── GENERATE PLURALITY OF FOLDERS CORRESPONDING AT LEAST TWO KEYWORDS

S3470 ── CLASSIFY AND STORE EACH OF PLURALITY OF PIECES OF CONTENT IN CORRESPONDING FOLDER

TRANSMIT INFORMATION ABOUT PLURALITY OF FOLDERS (S3480)

DISPLAY PLURALITY OF FOLDERS ── S3490

# FIG. 35

DEVICE —100

CLOUD SERVER —200

SELECT CONTENT —S3510

TRANSMIT CONTENT (S3520)

S3530— DETECT PLURALITY OF KEYWORDS FOR DESCRIBING CONTENT

TRANSMIT INFORMATION ABOUT PLURALITY OF KEYWORDS (S3540)

GENERATE PLURALITY OF FOLDERS CORRESPONDING AT LEAST TWO KEYWORDS —S3550

CLASSIFY AND STORE EACH OF PLURALITY OF PIECES OF CONTENT IN CORRESPONDING FOLDER —S3560

FIG. 36

Chosen Image 3610

100

200

CLOUD SERVER

12:00

ALL

Detected Keywords: 3630

John
Group
Dog
Person
Beach
Summer
Smile
happy

3620

| Object | Category | Identifier |
|--------|----------|------------|
| ... | ... | ... |
| | Name Job | Soyoung Actress |
| | Relation Name Age | Dad John 40 |

EP 2 980 712 A1

# FIG. 37

3610

Chosen Image

3630

Detected Keywords:

John
Group
Dog
Person
Beach
summer
Smile
happy

100

3700

Dynamic

| | | |
|---|---|---|
| John | Group | ... |
| Dog | Person | ... |
| Beach | Summer | |
| Smile | happy | |

EP 2 980 712 A1

# FIG. 38

# FIG. 39

100

110

120

150

| 110 USER INTERFACE | 120 CONTROLLER | 150 SENSING UNIT |

**USER INTERFACE** (110)

**CONTROLLER** (120)

**SENSING UNIT** (150)

**130 OUTPUT UNIT**
- **131 DISPLAY**
- **132 AUDIO OUTPUT UNIT**
- **133 VIBRATION MOTOR**

**SENSING UNIT (150)**
- **151 MAGNETIC SENSOR**
- **156 LOCATION SENSOR**
- **152 ACCELERATION SENSOR**
- **157 BAROMETRIC PRESSURE SENSOR**
- **153 TILTING SENSOR**
- **158 PROXIMITY SENSOR**
- **154 INFRARED SENSOR**
- **159 OPTICAL SENSOR**
- **155 GYROSCOPE SENSOR**

**140 COMMUNICATOR**
- **141 SHORT-RANGE COMMUNICATOR**
  - Bluetooth
  - BLE
  - NFC/RFID
  - WLAN
  - ZIGBEE
  - Ant+
  - Wi-Fi Direct
  - UWB
- **142 MOBILE COMMUNICATOR**
- **143 BROADCASTING RECEIVING UNIT**

**160 A/V INPUT UNIT**
- **CAMERA** — 161
- **MICROPHONE** — 162

**170 MEMORY**
- **UI MODULE** — 171
- **NOTIFICATION MODULE** — 172
- **IMAGE PROCESSING MODULE** — 173

# FIG. 40

Europäisches
Patentamt

European
Patent Office

Office européen
des brevets

**EUROPEAN SEARCH REPORT**

Application Number

EP 15 17 9149

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/047138 A1 (AKAGI KATSUMI [JP]) 23 February 2012 (2012-02-23) * abstract * * paragraphs [0005] - [0010], [0030] - [0035], [0056] - [0058], [0077] - [0079], [0084] - [0098], [0125] - [0136], [0181]; figures 4-7 * | 1-15 | INV. G06F17/30 |
| X | US 2010/040295 A1 (TSAI MING-FENG [TW] ET AL) 18 February 2010 (2010-02-18) * abstract * * paragraphs [0003] - [0010]; figure 2 * | 1-15 | |
| A | Anonymous: "View and upload other files on your Android phone or tablet - Drive Help", , 25 September 2013 (2013-09-25), XP055224825, Retrieved from the Internet: URL:http://web.archive.org/web/20130925210223/https://support.google.com/drive/answer/2763724?hl=en# [retrieved on 2015-10-30] * the whole document * | 1-15 | TECHNICAL FIELDS SEARCHED (IPC) G06F |
| A | EP 2 447 861 A1 (HITACHI SOLUTIONS LTD [JP]) 2 May 2012 (2012-05-02) * abstract * * paragraphs [0004] - [0010] * | 1-15 | |

-/--

The present search report has been drawn up for all claims

| Place of search | Date of completion of the search | Examiner |
|---|---|---|
| The Hague | 23 November 2015 | Moran, Matthew |

EPO FORM 1503 03.82 (P04C01)

Europäisches
Patentamt

European
Patent Office

Office européen
des brevets

**EUROPEAN SEARCH REPORT**

Application Number

EP 15 17 9149

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | HUNG BA NGO ET AL: "Towards Ontology-based Semantic File Systems", RESEARCH, INNOVATION AND VISION FOR THE FUTURE, 2007 IEEE INTERNATIONA L CONFERENCE ON, IEEE, PI, 1 March 2007 (2007-03-01), pages 8-13, XP031096977, ISBN: 978-1-4244-0694-4 * the whole document * | 1-15 | |
| A | Mike Vardy: "How I Use Hazel - Productivityist", http://www.productivityist.com, 12 July 2014 (2014-07-12), pages 1-6, XP055224575, Retrieved from the Internet: URL:http://web.archive.org/web/20140712210 433/http://www.productivityist.com/how-i-u se-hazel/ [retrieved on 2015-10-29] * the whole document * | 1-15 | |

TECHNICAL FIELDS
SEARCHED       (IPC)

The present search report has been drawn up for all claims

| Place of search | Date of completion of the search | Examiner |
|---|---|---|
| The Hague | 23 November 2015 | Moran, Matthew |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**EP 2 980 712 A1**

## ANNEX TO THE EUROPEAN SEARCH REPORT
## ON EUROPEAN PATENT APPLICATION NO.

EP 15 17 9149

This annex lists the patent family members relating to the patent documents cited in the above-mentioned European search report.
The members are as contained in the European Patent Office EDP file on
The European Patent Office is in no way liable for these particulars which are merely given for the purpose of information.

23-11-2015

| Patent document cited in search report | | Publication date | Patent family member(s) | | Publication date |
|---|---|---|---|---|---|
| US 2012047138 | A1 | 23-02-2012 | JP 2012064297 A<br>US 2012047138 A1 | | 29-03-2012<br>23-02-2012 |
| US 2010040295 | A1 | 18-02-2010 | CN 101650721 A<br>US 2010040295 A1 | | 17-02-2010<br>18-02-2010 |
| EP 2447861 | A1 | 02-05-2012 | CN 102456071 A<br>EP 2447861 A1<br>JP 5512489 B2<br>JP 2012093927 A<br>US 2012110046 A1 | | 16-05-2012<br>02-05-2012<br>04-06-2014<br>17-05-2012<br>03-05-2012 |

EPO FORM P0459

For more details about this annex : see Official Journal of the European Patent Office, No. 12/82